(19) Europäisches Patentamt
European Patent Office
Office européen des brevets

(11) EP 4 736 650 A2

(12) **EUROPEAN PATENT APPLICATION**

(43) Date of publication:
**06.05.2026 Bulletin 2026/19**

(21) Application number: **26165256.4**

(22) Date of filing: **07.11.2023**

(51) International Patent Classification (IPC):
***A01P 9/00*** *(2006.01)*

(52) Cooperative Patent Classification (CPC):
(C-Sets available)
**A01P 5/00; A01N 47/36; A01P 7/02; A01P 7/04; A01P 9/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.11.2022 US 202263382543 P**

(62) Document number(s) of the earlier application(s) in accordance with Art. 76 EPC:
**23821445.6 / 4 615 231**

(71) Applicant: **Corteva Agriscience LLC**
**Indianapolis, IN 46268 (US)**

(72) Inventors:
- **Giampietro, Natalie C.**
**Indianapolis, Indiana, 46268 (US)**
- **O'Neal, Scott**
**Indianapolis, Indiana, 46268 (US)**
- **Watson, Gerald**
**Indianapolis, Indiana, 46268 (US)**
- **Gaspar, Adam**
**Indianapolis, Indiana, 46268 (US)**
- **Kirk, Daniel**
**Indianapolis, Indiana, 46268 (US)**
- **Rule, Dwain**
**Indianapolis, Indiana, 46268 (US)**

(74) Representative: **f & e patent**
**Braunsberger Feld 29**
**51429 Bergisch Gladbach (DE)**

Remarks:
This application was filed on 17-03-2026 as a divisional application to the application mentioned under INID code 62.

(54) **PESTICIDAL COMPOSITION CONTAINING A COMPOUND COMPRISING A 1,2,4-TRIAZOL GROUP AND A 4-OXOTHIAZOL GROUP AND ANOTHER PESTICIDE**

(57) This disclosure relates to the field of molecules having pesticidal utility against pests in Phyla Arthropoda, Mollusca, and Nematoda, processes to produce such molecules, intermediates used in such processes, and processes of using such pesticidal compositions against such pests. These pesticidal compositions may be used, for example, as acaricides, insecticides, miticides, molluscicides, and nematicides.

EP 4 736 650 A2

(52) Cooperative Patent Classification (CPC): (Cont.)

C-Sets
**A01N 47/36, A01N 43/90, A01N 47/40,
A01N 43/54, A01N 53/00, A01N 37/46,
A01N 43/56, A01N 43/36, A01N 51/00,
A01N 59/20, A01N 43/78, A01N 47/02,
A01N 43/40, A01N 43/88, A01N 43/12,
A01N 43/80, A01N 47/38, A01N 43/653,
A01N 37/40, A01N 47/24, A01N 43/707,
A01N 43/22, A01N 47/06, A01N 43/713,
A01N 47/26, A01N 37/50, A01N 63/20**

## Description

## BACKGROUND

This disclosure relates to the field of molecules having pesticidal utility against pests in Phyla Arthropoda, Mollusca, and Nematoda, processes to produce such molecules, intermediates used in such processes, and processes of using such pesticidal compositions against such pests. These pesticidal compositions may be used, for example, as acaricides, insecticides, miticides, molluscicides, and nematicides.

Each year, insects, plant pathogens, and weeds destroy more than 40% of all food produced. This loss occurs despite the application of pesticides and the use of a wide array of non-chemical controls, such as crop rotation and biological controls. If just some of this food could be saved, it could be used to feed the more than three billion people in the world who are malnourished (Pimental, D., Pest Control in World Agriculture Agricultural Sciences - Vol. II, 2009).

Plant parasitic nematodes are among the most widespread pests and are frequently one of the most insidious and costly. It has been estimated that losses attributable to nematodes range from about 9% in developed countries to about 15% in undeveloped countries. However, in the United States of America a survey of 35 States on various crops indicated nematode-derived losses of up to 25% (Nicol et al., Current Nematode Threats to World Agriculture, Genomic and Molecular Genetics of Plant - Nematode Interactions, p. 21-43, 2011).

It is noted that gastropods (slugs and snails) are pests of less economic importance than other arthropods or nematodes, but in certain places, they may reduce yields substantially, severely affecting the quality of harvested products, as well as, transmitting human, animal, and plant diseases. While only a few dozen species of gastropods are serious regional pests, a handful of species are important pests on a worldwide scale. In particular, gastropods affect a wide variety of agricultural and horticultural crops, such as arable, pastoral, and fiber crops; vegetables; bush and tree fruits; herbs; and ornamentals (Speiser, B., Molluscicides, Encyclopedia of Pest Management, Ch. 219, p. 506-508, 2002).

Termites cause damage to all types of private and public structures, as well as to agricultural and forestry resources. In 2005, it was estimated that termites cause over US$50 billion in damage worldwide each year (Korb, J., Termites, Current Biology, Vol. 17, No. 23, 2007).

Consequently, for many reasons, including those mentioned above, there is an on-going need for the costly (estimated to be about US$286 million per pesticide in 2014), time-consuming (on average about 11.3 years per pesticide), and difficult development of new pesticides (Phillips McDougall, The Cost of New Agrochemical Product Discovery, Development and Registration in 1995, 2000, 2005-8 and 2010-2014. R&D expenditure in 2014 and expectations for 2019, 2016).

## DEFINITIONS

Examples provided herein are not exhaustive and should not be construed as limiting. It is understood that a substituent should comply with chemical bonding rules and steric compatibility constraints in relation to the particular molecule to which it is attached. These definitions are only to be used for the purposes of this disclosure.

The term "Actives" or "Active ingredient" means the following group of pesticides, each of which is considered as "active' or an "active ingredient" - selected from the groups AIGA-1, AIGA-2, or AI-1 or AI-2. These common names may be found in several locations, such as, the British Crop Production Council's "Compendium of Pesticide Common Names" located at https://pesticidecompendium.bcpc.org/. These active ingredients may be used in mixtures with the molecules disclosed below for a variety of reasons.

The term "AIGA-1" means the following preferred group of mixing partners to form mixtures that perform multiple agricultural functions selected from the group consisting of abamectin, acephate, acequinocyl, acetamiprid, acrinathrin, acynonapyr, afidopyropen, alanycarb, aldicarb, allethrin, *alpha*-cypermethrin, aminopyralid, amitraz, azadirachtin, azamethiphos, azinphos-ethyl, azinphos-methyl, azocyclotin, azoxystrobin, bendiocarb, benfuracarb, bensultap, benzoximate, benzpyrimoxan, *beta*-cyfluthrin, *beta*-cypermethrin, bifenazate, bifenthrin, bioallethrin, bioresmethrin, bistrifluron, broflanilide, bromopropylate, buprofezin, butocarboxim, butoxycarboxim, cadusafos, carbaryl, carbofuran, carbosulfan, carboxin, cartap hydrochloride, chinomethionat, chlorantraniliprole, chlordane, chlorethoxyfos, chlorfenapyr, chlorfenvinphos, chlorfluazuron, chlormephos, chlorpyrifos, chlorpyrifos-methyl, chromafenozide, clofentezine, clopyralid, cloquintocet, clothianidin, copper hydroxide, coumaphos, cyanophos, cyantraniliprole, cyclaniliprole, cyclobutrifluram, cycloprothrin, cycloxaprid, cyenopyrafen, cyflumetofen, cyfluthrin, cyhalothrin, cyhexatin, cymoxanil, cypermethrin, cyphenothrin, cyproflanilide, cyromazine, *d-cis-trans* allethrin, DDVP, deltamethrin, demeton-S-methyl, diafenthiuron, diazinon, dichlorvos, dicofol, dicrotophos, difenoconazole, diflovidazin, diflubenzuron, dimethoate, dimethylvinphos, dimpropyridaz, dinotefuran, disulfoton, DNOC, *d-trans* allethrin, emamectin, emamectin benzoate, empenthrin, endosulfan, EPN, esfenvalerate, ethaboxam, ethiofencarb, ethion, ethiprole, ethoprophos, etofenprox, famoxadone, famphur, fenamiphos, fenazaquin, fenbuconazole, fenbutatin oxide, fenitrothion, fenmezoditiaz, fenobucarb, fenoxycarb, fenpropathrin, fenpyroximate, fenthion, fenvalerate, fipronil, flazasulfuron, flonicamid, florasulam, fluacrypyrim, fluazaindolizine,

flubendiamide, flucycloxuron, flucythrinate, fludioxonil, fluensulfone, flufenoxuron, flumethrin, flumioxazin, fluopyram, fluoxapiprolin, fluoxastrobin, flupyradifurone, flupyrimin, fluroxypyr, fluxametamide, fluxapyroxad, formetanate, fosthiazate, furathiocarb, *gamma-cyhalothrin,* glyphosate, halauxifen, halfenprox, halofenozide, heptenophos, hexaflumuron, hexythiazox, hydramethylnon, hydroprene, imazamox, imazapyr, imicyafos, imidacloprid, imiprothrin, indazapyroxamet, indoxacarb, inpyrfluxam, ipconazole, isocycloseram, isofenphos, isoflucypram, isoprocarb, isoxathion, kadethrin, kinoprene, *lambda*-cyhalothrin, lepimectin, lufenuron, malathion, mancozeb, MCPA, mecarbam, mefenoxam, metaflumizone, metalaxyl, metconazole, methamidophos, methenamine, methidathion, methiocarb, methomyl, methoprene, methoxychlor, methoxyfenozide, metolcarb, metsulfuron, mevinphos, milbemectin, monocrotophos, myclobutanil, naled, nicosulfuron, nitrapyrin, novaluron, noviflumuron, omethoate, oxamyl, oxathiapiprolin, oxazosulfyl, oxydemeton-methyl, parathion, parathion-methyl, penflufen, penthiopyrad, permethrin, phenothrin, phenthoate, phorate, phosalone, phosmet, phosphamidon, phoxim, picarbutrazox, picloram, picoxystrobin, pinoxaden, pirimicarb, pirimiphos-methyl, prallethrin, profenofos, propargite, propetamphos, propiconazole, propoxur, propyzamide, prothioconazole, prothiofos, spiflumetofen, pyflubumide, pymetrozine, pyraclofos, pyraclostrobin, pyrethrum, pyridaben, pyridalyl, pyridaphenthion, pyrifluquinazon, pyrimidifen, pyriproxyfen, pyroxasulfone, quinalphos, resmethrin, rimsulfuron, rotenone, sedaxane, silafluofen, spidoxamat, spinetoram, spinosad, spirobudifen, spirodiclofen, spiromesifen, spiropidion, spirotetramat, sulfluramid, sulfotep, sulfoxaflor, *tau*-fluvalinate, tebuconazole, tebufenozide, tebufenpyrad, tebupirimfos, teflubenzuron, tefluthrin, temephos, terbufos, tetrachlorvinphos, tetradifon, tetramethrin, tetraniliprole, *theta*-cypermethrin, thiabendazole, thiamethoxam, thiocyclam, thiodicarb, thiofanox, thiometon, thiosultap-sodium, thiram, tiorantraniliprole, tioxazafen, tolfenpyrad, tralkoxydim, tralomethrin, transfluthrin, triazamate, triazophos, trichlorfon, triclopyr, trifloxystrobin, triflumezopyrim, triflumuron, trimethacarb, vamidothion, XMC, xylylcarb, *zeta*-cypermethrin, and 2,4-D. For the avoidance of doubt each of these pesticides is an active ingredient.

The term "AIGA-2 means the following preferred group of mixing partners to form mixtures that expand the use of pesticidal compositions and perform multiple agricultural functions abamectin, acetamiprid, benzpyrimoxan, bifenthrin, chlorantraniliprole, chlorfenapyr, cyantraniliprole, cyclobutrifluram, dimepropyridaz, fipronil, flonicamid, fluoxapiprolin, flupyradifurone, flupyrimin, fluxametamide, imidacloprid, indoxacarb, isocycloseram, *lambda*-cyhalothrin, methoxyfenozide, pymetrozine, pyriproxyfen, spidoxamat, spinetoram, spinosad, spiropidion, spirotetramat, sulfoxaflor, thiamethoxam, and triflumezopyrim.

The molecule named *N*-(4-chloro-2-(pyridin-3-yl)thiazol-5-yl)-*N*-ethyl-3-(methylsulfonyl)propanamide is an active ingredient and for the purpose of this disclosure is defined as "**AI-1**"

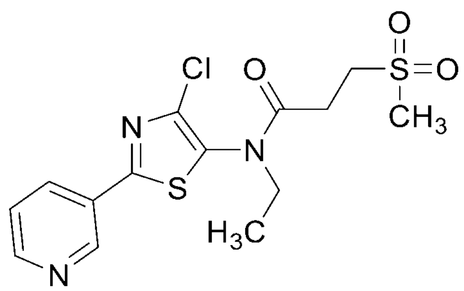

The molecule named *N*-(3-chloro--(pyridin-3-yl)-1*H*-pyrazol-4-yl)-2-(methylsulfonyl)propanamide is an active ingredient and for the purpose of this disclosure is defined as **"AI-2."**

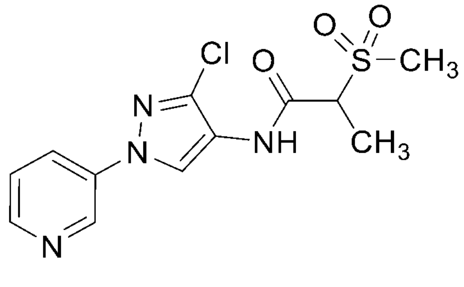

The term "locus" means a habitat, breeding ground, plant, seed, soil, material, or environment, in which a pest is growing, may grow, or may traverse. For example, a locus may be: where crops, trees, fruits, cereals, fodder species, vines, turf, and/or ornamental plants, are growing; where domesticated animals are residing; the interior or exterior surfaces of buildings (such as places where grains are stored); the materials of construction used in buildings (such as impregnated wood); and the soil around buildings.

The term "pest" means an organism that is detrimental to humans, or human concerns (such as, crops, food, livestock, etc.), where said organism is from Phyla Arthropoda, Mollusca, or Nematoda. Particular examples are ants, aphids, bed bugs, beetles, bristletails, caterpillars, cockroaches, crickets, earwigs, fleas, flies, grasshoppers, grubs, hornets, jassids, leafhoppers, lice, locusts, maggots, mealybugs, mites, moths, nematodes, plantbugs, planthoppers, psyllids, sawflies, scales, silverfish, slugs, snails, spiders, springtails, stink bugs, symphylans, termites, thrips, ticks, wasps, whiteflies, and wireworms.

Additional examples are pests in

(1) Subphyla Chelicerata, Myriapoda, and Hexapoda.

(2) Classes of Arachnida, Symphyla, and Insecta.

(3) Order Anoplura. A non-exhaustive list of particular genera includes, but is not limited to, *Haematopinus* spp., *Hoplopleura* spp., *Linognathus* spp., *Pediculus* spp., *Polyplax* spp., *Solenopotes* spp., and *Neohaematopinis* spp. A non-exhaustive list of particular species includes, but is not limited to, *Haematopinus asini, Haematopinus suis, Linognathus setosus, Linognathus ovillus, Pediculus humanus capitis, Pediculus humanus humanus,* and *Pthirus pubis.*

(4) Order Coleoptera. A non-exhaustive list of particular genera includes, but is not limited to, *Acanthoscelides* spp., *Agriotes* spp., *Anthonomus* spp., *Apion* spp., *Apogonia* spp., *Araecerus* spp., *Aulacophora* spp., *Bruchus* spp., *Cerosterna* spp., *Cerotoma* spp., *Ceutorhynchus* spp., *Chaetocnema* spp., *Colaspis* spp., *Ctenicera* spp., *Curculio* spp., *Cyclocephala* spp., *Diabrotica* spp., *Dinoderus* spp., *Gnathocerus* spp., *Hemicoelus* spp., *Heterobostruchus* spp., *Hypera* spp., *Ips* spp., *Lyctus* spp., *Megascelis* spp., *Meligethes* spp., *Mezium* spp., *Niptus* spp., *Otiorhynchus* spp., *Pantomorus* spp., *Phyllophaga* spp., *Phyllotreta* spp., *Ptinus* spp., *Rhizotrogus* spp., *Rhynchites* spp., *Rhynchophorus* spp., *Scolytus* spp., *Sphenophorus* spp., *Sitophilus* spp., *Tenebrio* spp., and *Tribolium* spp. A non-exhaustive list of particular species includes, but is not limited to, *Acanthoscelides obtectus, Agrilus planipennis, Ahasverus advena, Alphitobius diaperinus, Anoplophora glabripennis, Anthonomus grandis, Anthrenus verbasci, Anthrenus falvipes, Ataenius spretulus, Atomaria linearis, Attagenus unicolor, Bothynoderes punctiventris, Bruchus pisorum, Callosobruchus maculatus, Carpophilus hemipterus, Cassida vittata, Cathartus quadricollis, Cerotoma trifurcata, Ceutorhynchus assimilis, Ceutorhynchus napi, Conoderus scalaris, Conoderus stigmosus, Conotrachelus nenuphar, Cotinis nitida, Crioceris asparagi, Cryptolestes ferrugineus, Cryptolestes pusillus, Cryptolestes turcicus, Cylindrocopturus adspersus, Deporaus marginatus, Dermestes lardarius, Dermestes maculatus, Epilachna varivestis, Euvrilletta peltata, Faustinus cubae, Hylobius pales, Hylotrupes bajulus, Hypera postica, Hypothenemus hampei, Lasioderma serricorne, Leptinotarsa decemlineata, Limonius canus, Liogenys fuscus, Liogenys suturalis, Lissorhoptrus oryzophilus, Lophocateres pusillus, Lyctus planicollis, Maecolaspis joliveti, Melanotus communis, Meligethes aeneus, Melolontha melolontha, Necrobia rufipes, Oberea brevis, Oberea linearis, Oryctes rhinoceros, Oryzaephilus mercator, Oryzaephilus surinamensis, Oulema melanopus, Oulema oryzae, Phyllophaga cuyabana, Polycaon stoutti, Popillia japonica, Prostephanus truncatus, Rhyzopertha dominica, Sitona lineatus, Sitophilus granarius, Sitophilus oryzae, Sitophilus zeamais, Stegobium paniceum, Tenebroides mauritanicus, Tribolium castaneum, Tribolium confusum, Trogoderma granarium, Trogoderma variabile, Xestobium rufovillosum,* and *Zabrus tenebrioides.*

(5) Order Dermaptera. A non-exhaustive list of particular species includes, but is not limited to, *Forficula auricularia.*

(6) Order Blattaria. A non-exhaustive list of particular species includes, but is not limited to, *Blattella germanica, Blattella asahinai, Blatta orientalis, Blatta lateralis, Parcoblatta pennsylvanica, Periplaneta americana, Periplaneta australasiae, Periplaneta brunnea, Periplaneta fuliginosa, Pycnoscelus surinamensis,* and *Supella longipalpa.*

(7) Order Diptera. A non-exhaustive list of particular genera includes, but is not limited to, *Aedes* spp., *Agromyza* spp., *Anastrepha* spp., *Anopheles* spp., *Bactrocera* spp., *Ceratitis* spp., *Chrysops* spp., *Cochliomyia* spp., *Contarinia* spp., *Culex* spp., *Culicoides* spp., *Dasineura* spp., *Delia* spp., *Drosophila* spp., *Fannia* spp., *Hylemya* spp., *Liriomyza* spp., *Musca* spp., *Phorbia* spp., *Pollenia* spp., *Psychoda* spp., *Simulium* spp., *Tabanus* spp., and *Tipula* spp. A non-exhaustive list of particular species includes, but is not limited to, *Agromyza frontella, Anastrepha suspensa, Anastrepha ludens, Anastrepha obliqua, Bactrocera cucurbitae, Bactrocera dorsalis, Bactrocera invadens, Bactrocera zonata, Ceratitis capitata, Dasineura brassicae, Delia platura, Fannia canicularis, Fannia scalaris, Gasterophilus intestinalis, Gracillia perseae, Haematobia irritans, Hypoderma lineatum, Liriomyza brassicae, Liriomyza sativa, Melophagus ovinus, Musca autumnalis, Musca domestica, Oestrus ovis, Oscinella frit, Pegomya betae, Piophila casei, Psila rosae, Rhagoletis cerasi, Rhagoletis pomonella, Rhagoletis mendax, Sitodiplosis mosellana,* and *Stomoxys calcitrans.*

(8) Order Hemiptera. A non-exhaustive list of particular genera includes, but is not limited to, *Adelges* spp., *Aulacaspis* spp., *Aphrophora* spp., *Aphis* spp., *Bemisia* spp., *Ceroplastes* spp., *Chionaspis* spp., *Chrysomphalus* spp., *Coccus* spp., *Empoasca* spp., *Euschistus* spp., *Lepidosaphes* spp., *Lagynotomus* spp., *Lygus* spp., *Macrosiphum* spp., *Nephotettix* spp., *Nezara* spp., *Nilaparvata* spp., *Philaenus* spp., *Phytocoris* spp., *Piezodorus* spp., *Planococcus* spp., *Pseudococcus* spp., *Rhopalosiphum* spp., *Saissetia* spp., *Therioaphis* spp., *Toumeyella* spp., *Toxoptera* spp.,

*Trialeurodes* spp., *Triatoma* spp., and *Unaspis* spp. A non-exhaustive list of particular species includes, but is not limited to, *Acrosternum hilare, Acyrthosiphon pisum, Aleyrodes proletella, Aleurodicus dispersus, Aleurothrixus floccosus, Amrasca biguttula biguttula, Aonidiella aurantii, Aphis fabae, Aphis gossypii, Aphis glycines, Aphis pomi, Aulacorthum solani, Bactericera cockerelli, Bagrada hilaris, Bemisia argentifolii, Bemisia tabaci, Blissus leucopterus, Boisea trivittata, Brachycorynella asparagi, Brevennia rehi, Brevicoryne brassicae, Cacopsylla pyri, Cacopsylla pyricola, Calocoris norvegicus, Ceroplastes rubens, Cimex hemipterus, Cimex lectularius, Coccus pseudomagnoliarum, Dagbertus fasciatus, Dichelops furcatus, Diuraphis noxia, Diaphorina citri, Dysaphis plantaginea, Dysdercus suturellus, Edessa meditabunda, Empoasca vitis, Eriosoma lanigerum, Erythroneura elegantula, Eurygaster maura, Euschistus conspersus, Euschistus heros, Euschistus servus, Halyomorpha halys, Helopeltis antonii, Hyalopterus pruni, Helopeltis antonii, Helopeltis theivora, Icerya purchasi, Idioscopus nitidulus, Jacobiasca formosana, Laodelphax striatellus, Lecanium corni, Leptocorisa oratorius, Leptocorisa varicornis, Lygus hesperus, Maconellicoccus hirsutus, Macrosiphum euphorbiae, Macrosiphum granarium, Macrosiphum rosae, Macrosteles quadrilineatus, Mahanarva frimbiolata, Megacopta cribraria, Metopolophium dirhodum, Mictis longicornis, Myzus persicae, Nasonovia ribisnigri, Nephotettix cincticeps, Neurocolpus longirostris, Nezara viridula, Nilaparvata lugens, Paracoccus marginatus, Paratrioza cockerelli, Parlatoria pergandii, Parlatoria ziziphi, Peregrinus maidis, Phylloxera vitifoliae, Physokermes piceae, Phytocoris californicus, Phytocoris relativus, Piezodorus guildinii, Planococcus citri, Planococcus ficus, Poecilocapsus lineatus, Psallus vaccinicola, Pseudacysta perseae, Pseudococcus brevipes, Quadraspidiotus perniciosus, Rhopalosiphum maidis, Rhopalosiphum padi, Saissetia oleae, Scaptocoris castanea, Schizaphis graminum, Sitobion avenae, Sogatella furcifera, Trialeurodes vaporariorum, Trialeurodes abutiloneus, Unaspis yanonensis,* and *Zulia entrerriana.*

(9) Order Hymenoptera. A non-exhaustive list of particular genera includes, but is not limited to, *Acromyrmex* spp., *Atta* spp., *Camponotus* spp., *Diprion* spp., *Dolichovespula* spp., *Formica* spp., *Monomorium* spp., *Neodiprion* spp., *Paratrechina* spp., *Pheidole* spp., *Pogonomyrmex* spp., *Polistes* spp., *Solenopsis* spp., *Technomyrmex,* spp., *Tetramorium* spp., *Vespula* spp., *Vespa* spp., and *Xylocopa* spp. A non-exhaustive list of particular species includes, but is not limited to, *Athalia rosae, Atta texana, Caliroa cerasi, Cimbex americana, Iridomyrmex humilis, Linepithema humile, Mellifera Scutellata, Monomorium minimum, Monomorium pharaonis, Neodiprion sertifer, Solenopsis invicta, Solenopsis geminata, Solenopsis molesta, Solenopsis richtery, Solenopsis xyloni, Tapinoma sessile,* and *Wasmannia auropunctata.*

(10) Order Isoptera. A non-exhaustive list of particular genera includes, but is not limited to, *Coptotermes* spp., *Cornitermes* spp., *Cryptotermes* spp., *Heterotermes* spp., *Kalotermes* spp., *Incisitermes* spp., *Macrotermes* spp., *Marginitermes* spp., *Microcerotermes* spp., *Procornitermes* spp., *Reticulitermes* spp., *Schedorhinotermes* spp., and *Zootermopsis* spp. A non-exhaustive list of particular species includes, but is not limited to, *Coptotermes acinaciformis, Coptotermes curvignathus, Coptotermes frenchi, Coptotermes formosanus, Coptotermes gestroi, Cryptotermes brevis, Heterotermes aureus, Heterotermes tenuis, Incisitermes minor, Incisitermes snyderi, Microtermes obesi, Nasutitermes corniger, Odontotermes formosanus, Odontotermes obesus, Reticulitermes banyulensis, Reticulitermes grassei, Reticulitermes flavipes, Reticulitermes hageni, Reticulitermes hesperus, Reticulitermes santonensis, Reticulitermes speratus, Reticulitermes tibialis,* and *Reticulitermes virginicus.*

(11) Order Lepidoptera. A non-exhaustive list of particular genera includes, but is not limited to, *Adoxophyes* spp., *Agrotis* spp., *Argyrotaenia* spp., *Cacoecia* spp., *Caloptilia* spp., *Chilo* spp., *Chrysodeixis* spp., *Colias* spp., *Crambus* spp., *Diaphania* spp., *Diatraea* spp., *Earias* spp., *Ephestia* spp., *Epimecis* spp., *Feltia* spp., *Gortyna* spp., *Helicoverpa* spp., *Heliothis* spp., *Indarbela* spp., *Lithocolletis* spp., *Loxagrotis* spp., *Malacosoma* spp., *Nemapogon* spp., *Peridroma* spp., *Phyllonorycter* spp., *Pseudaletia* spp., *Plutella* spp., *Sesamia* spp., *Spodoptera* spp., *Synanthedon* spp., and *Yponomeuta* spp. A non-exhaustive list of particular species includes, but is not limited to, *Achaea janata, Adoxophyes orana, Agrotis ipsilon, Alabama argillacea, Amorbia cuneana, Amyelois transitella, Anacamptodes defectaria, Anarsia lineatella, Anomis sabulifera, Anticarsia gemmatalis, Archips argyrospila, Archips rosana, Argyrotaenia citrana, Autographa gamma, Bonagota cranaodes, Borbo cinnara, Bucculatrix thurberiella, Capua reticulana, Carposina niponensis, Chlumetia transversa, Choristoneura rosaceana, Cnaphalocrocis medinalis, Conopomorpha cramerella, Corcyra cephalonica, Cossus cossus, Cydia caryana, Cydia funebrana, Cydia molesta, Cydia nigricana, Cydia pomonella, Darna diducta, Diaphania nitidalis, Diatraea saccharalis, Diatraea grandiosella, Earias insulana, Earias vittella, Ecdytolopha aurantianum, Elasmopalpus lignosellus, Ephestia cautella, Ephestia elutella, Ephestia kuehniella, Epinotia aporema, Epiphyas postvittana, Erionota thrax, Estigmene acrea, Eupoecilia ambiguella, Euxoa auxiliaris, Galleria mellonella, Grapholita molesta, Hedylepta indicata, Helicoverpa armigera, Helicoverpa zea, Heliothis virescens, Hellula undalis, Keiferia lycopersicella, Leucinodes orbonalis, Leucoptera coffeella, Leucoptera malifoliella, Lobesia botrana, Loxagrotis albicosta, Lymantria dispar, Lyonetia clerkella, Mahasena corbetti, Mamestra brassicae, Manduca sexta, Maruca testulalis, Metisa plana, Mythimna unipuncta, Neoleucinodes elegantalis, Nymphula depunctalis, Operophtera brumata, Ostrinia nubilalis, Oxydia vesulia, Pandemis cerasana, Pandemis heparana, Papilio demodocus, Pectinophora gossypiella, Peridroma saucia, Perileucoptera coffeella, Phthorimaea operculella, Phyllocnistis citrella, Phyllonorycter blancardella, Pieris rapae, Plathy-*

*pena scabra, Platynota idaeusalis, Plodia interpunctella, Plutella xylostella, Polychrosis viteana, Prays endocarpa, Prays oleae, Pseudaletia unipuncta, Pseudoplusia includens, Rachiplusia nu, Scirpophaga incertulas, Sesamia inferens, Sesamia nonagrioides, Setora nitens, Sitotroga cerealella, Sparganothis pilleriana, Spodoptera exigua, Spodoptera frugiperda, Spodoptera eridania, Thecla basilides, Tinea pellionella, Tineola bisselliella, Trichoplusia ni, Tuta absoluta, Zeuzera coffeae,* and *Zeuzea pyrina.*

(12) Order Mallophaga. A non-exhaustive list of particular genera includes, but is not limited to, *Anaticola* spp., *Bovicola* spp., *Chelopistes* spp., *Goniodes* spp., *Menacanthus* spp., and *Trichodectes* spp. A non-exhaustive list of particular species includes, but is not limited to, *Bovicola bovis, Bovicola caprae, Bovicola ovis, Chelopistes meleagridis, Goniodes dissimilis, Goniodes gigas, Menacanthus stramineus, Menopon gallinae,* and *Trichodectes canis.*

(13) Order Orthoptera. A non-exhaustive list of particular genera includes, but is not limited to, *Melanoplus* spp. and *Pterophylla* spp. A non-exhaustive list of particular species includes, but is not limited to, *Acheta domesticus, Anabrus simplex, Gryllotalpa africana, Gryllotalpa australis, Gryllotalpa brachyptera, Gryllotalpa hexadactyla, Locusta migratoria, Microcentrum retinerve, Schistocerca gregaria,* and *Scudderia furcata.*

(14) Order Psocoptera. A non-exhaustive list of particular species includes, but is not limited to, *Liposcelis decolor, Liposcelis entomophila, Lachesilla quercus,* and *Trogium pulsatorium.*

(15) Order Siphonaptera. A non-exhaustive list of particular species includes, but is not limited to, *Ceratophyllus gallinae, Ceratophyllus niger, Ctenocephalides canis, Ctenocephalides felis,* and *Pulex irritans.*

(16) Order Thysanoptera. A non-exhaustive list of particular genera includes, but is not limited to, *Caliothrips* spp., *Frankliniella* spp., *Scirtothrips* spp., and *Thrips* spp. A non-exhaustive list of particular species includes, but is not limited to, *Caliothrips phaseoli, Frankliniella bispinosa, Frankliniella fusca, Frankliniella occidentalis, Frankliniella schultzei, Frankliniella tritici, Frankliniella williamsi, Heliothrips haemorrhoidalis, Rhipiphorothrips cruentatus, Scirtothrips citri, Scirtothrips dorsalis, Taeniothrips rhopalantennalis, Thrips hawaiiensis, Thrips nigropilosus, Thrips orientalis, Thrips palmi,* and *Thrips tabaci.*

(17) Order Thysanura. A non-exhaustive list of particular genera includes, but is not limited to, *Lepisma* spp. and *Thermobia* spp.

(18) Order Acarina. A non-exhaustive list of particular genera includes, but is not limited to, *Acarus* spp., *Aculops* spp., *Argus* spp., *Boophilus* spp., *Demodex* spp., *Dermacentor* spp., *Epitrimerus* spp., *Eriophyes* spp., *Ixodes* spp., *Oligonychus* spp., *Panonychus* spp., *Rhizoglyphus* spp., and *Tetranychus* spp. A non-exhaustive list of particular species includes, but is not limited to, *Acarapis woodi, Acarus siro, Aceria mangiferae, Aculops lycopersici, Aculus pelekassi, Aculus schlechtendali, Amblyomma americanum, Brevipalpus obovatus, Brevipalpus phoenicis, Dermacentor variabilis, Dermatophagoides pteronyssinus, Eotetranychus carpini, Liponyssoides sanguineus, Notoedres cati, Oligonychus coffeae, Oligonychus ilicis, Ornithonyssus bacoti, Panonychus citri, Panonychus ulmi, Phyllocoptruta oleivora, Polyphagotarsonemus latus, Rhipicephalus sanguineus, Sarcoptes scabiei, Tegolophus perseaflorae, Tetranychus urticae, Tyrophagus longior,* and *Varroa destructor.*

(19) Order Araneae. A non-exhaustive list of particular genera includes, but is not limited to, *Loxosceles* spp., *Latrodectus* spp., and *Atrax* spp. A non-exhaustive list of particular species includes, but is not limited to, *Loxosceles reclusa, Latrodectus mactans,* and *Atrax robustus.*

(20) Class Symphyla. A non-exhaustive list of particular species includes, but is not limited to, *Scutigerella immaculata.*

(21) Subclass Collembola. A non-exhaustive list of particular species includes, but is not limited to, *Bourletiella hortensis, Onychiurus armatus, Onychiurus fimetarius,* and *Sminthurus viridis.*

(22) Phylum Nematoda. A non-exhaustive list of particular genera includes, but is not limited to, *Aphelenchoides* spp., *Belonolaimus* spp., *Criconemella* spp., *Ditylenchus* spp., *Globodera* spp., *Heterodera* spp., *Hirschmanniella* spp., *Hoplolaimus* spp., *Meloidogyne* spp., *Pratylenchus* spp., and *Radopholus* spp. A non-exhaustive list of particular species includes, but is not limited to, *Dirofilaria immitis, Globodera pallida, Heterodera glycines, Heterodera zeae, Meloidogyne incognita, Meloidogyne javanica, Onchocerca volvulus, Pratylenchus penetrans, Radopholus similis,* and *Rotylenchulus reniformis.*

(23) Phylum Mollusca. A non-exhaustive list of particular species includes, but is not limited to, *Arion vulgaris, Cornu aspersum, Deroceras reticulatum, Limaxflavus, Milax gagates,* and *Pomacea canaliculata.*

In one aspect, the pest group to control is sap-feeding pests. Sap-feeding pests, in general, have piercing and/or sucking mouthparts and feed on the sap and inner plant tissues of plants. Examples of sap-feeding pests of particular concern to agriculture include, but are not limited to, aphids, leafhoppers, moths, scales, thrips, psyllids, mealybugs, stinkbugs, and whiteflies. Specific examples of Orders that have sap-feeding pests of concern in agriculture include but are not limited to, Anoplura and Hemiptera. Specific examples of Hemiptera that are of concern in agriculture include, but are not limited to, *Aulacaspis* spp., *Aphrophora* spp., *Aphis* spp., *Bemisia* spp., *Coccus* spp., *Euschistus* spp., *Lygus* spp., *Macrosiphum* spp., *Nezara* spp., and *Rhopalosiphum* spp.

In another aspect, the pest group to control is chewing pests. Chewing pests, in general, have mouthparts that allow them to chew on the plant tissue including roots, stems, leaves, buds, and reproductive tissues (including, but not limited to flowers, fruit, and seeds). Examples of chewing pests of particular concern to agriculture include, but are not limited to, caterpillars, beetles, grasshoppers, and locusts. Specific examples of Orders that have chewing pests of concern in agriculture include but are not limited to, Coleoptera and Lepidoptera. Specific examples of Coleoptera that are of concern in agriculture include, but are not limited to, *Anthonomus* spp., *Cerotoma* spp., *Chaetocnema* spp., *Colaspis* spp., *Cyclocephala* spp., *Diabrotica* spp., *Hypera* spp., *Phyllophaga* spp., *Phyllotreta* spp., *Sphenophorus* spp., *Sitophilus* spp.

The phrase "pesticidally effective amount" means the amount of a pesticide needed to achieve an observable effect on a pest, for example, the effects of necrosis, death, retardation, prevention, removal, destruction, or otherwise diminishing the occurrence and/or activity of a pest in a locus. This effect may come about when pest populations are repulsed from a locus, pests are incapacitated in or around a locus, and/or pests are exterminated in or around a locus. Of course, a combination of these effects can occur. Generally, pest populations, activity, or both are desirably reduced more than fifty percent, preferably more than 90 percent, and most preferably more than 99 percent. In general, a pesticidally effective amount, for agricultural purposes, is from about 0.0001 grams per hectare to about 5000 grams per hectare, preferably from about 0.0001 grams per hectare to about 500 grams per hectare, and it is even more preferably from about 0.0001 grams per hectare to about 50 grams per hectare.

All references, including publications, patent applications, and patents, referred to herein are incorporated by reference herein to the same extent as if each reference were individually and specifically indicated to be incorporated by reference and were set forth in its entirety.

The use of the terms "a" and "an" and "the" and "at least one" and similar referents in the context of this disclosure (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (*i.e.,* meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples or exemplary language (*e.g.*, "such as") provided herein is intended merely to better illuminate the disclosure and does not pose a limitation on the scope of the disclosure unless otherwise claimed. No language in the specification should be construed as indicating any non-claimed element as essential to the practice of any embodiment herein. In this disclosure the terms "molecule" and "compound" may be used interchangeably.

## DETAILED DESCRIPTION FOR THIS DISCLOSURE

This document discloses pesticidal compositions comprising:

**(A)** a molecule having a structure according to **Formula One**

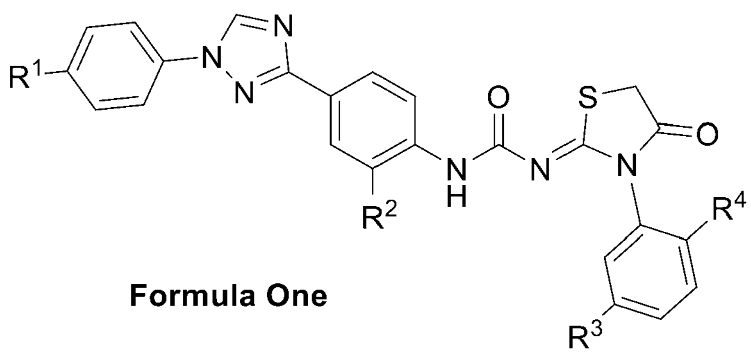

**Formula One**

wherein:

$R^1$ is $CF_3$, $CHF_2$, $CF_2CF_3$, $OCF_3$, $OCF_2CF_3$, $SF_5$, or $SO_2CF_3$;
$R^2$ is H, F, or $CH_3$;

$R^3$ is $CH_3$ or $OCH_3$; and
$R^4$ is $CH_2OCH_2CH_3$, $CH_2OCH_2CF_3$, or $CH_2OCH_2CH_2F$;
and

**(B)** a mixing partner that is

(1) a member of AIGA-1;
(2) a member of AIGA-2;
(3) AI-1; or
(4) AI-2.

Examples of molecules of Formula One are shown in Table One.

| TABLE ONE | |
|---|---|
| **#** | **Structure** |
| **F1** | 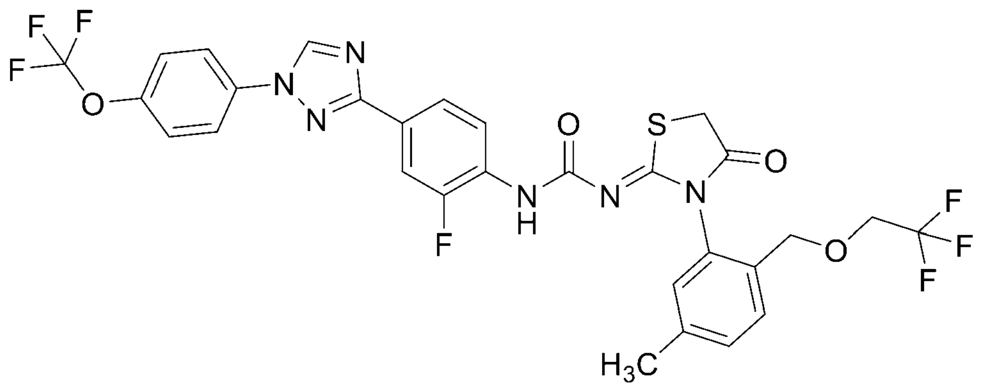 |
| **F2** | 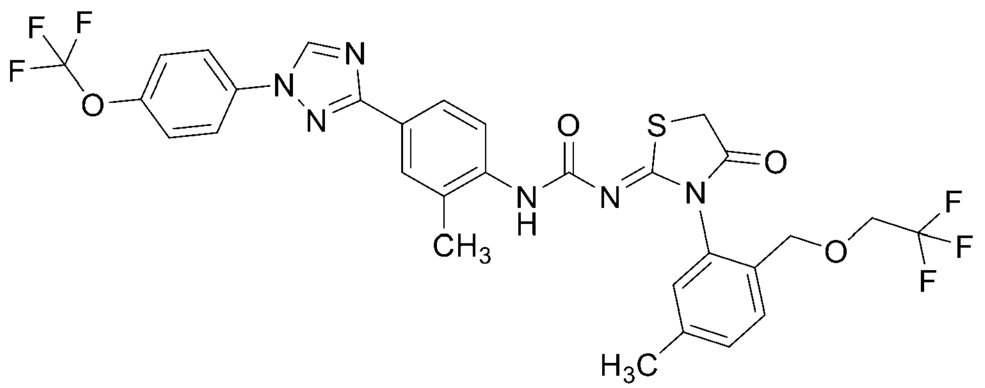 |
| **F3** | 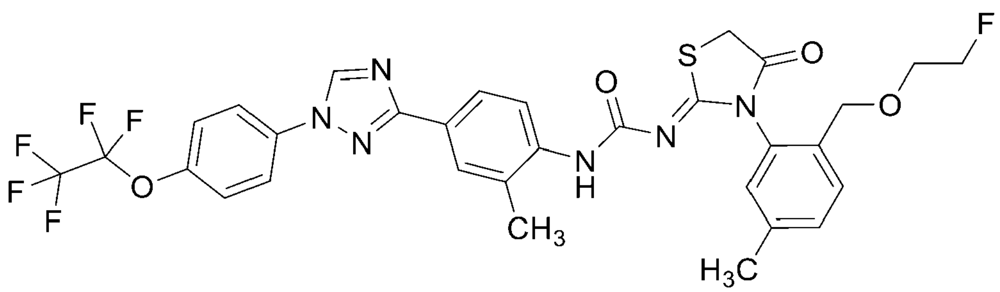 |

(continued)

| TABLE ONE | |
|---|---|
| # | Structure |
| F4 | 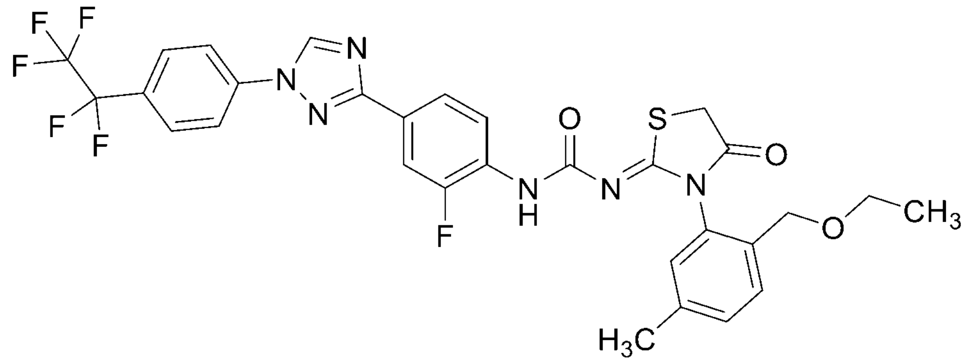 |
| F5 | 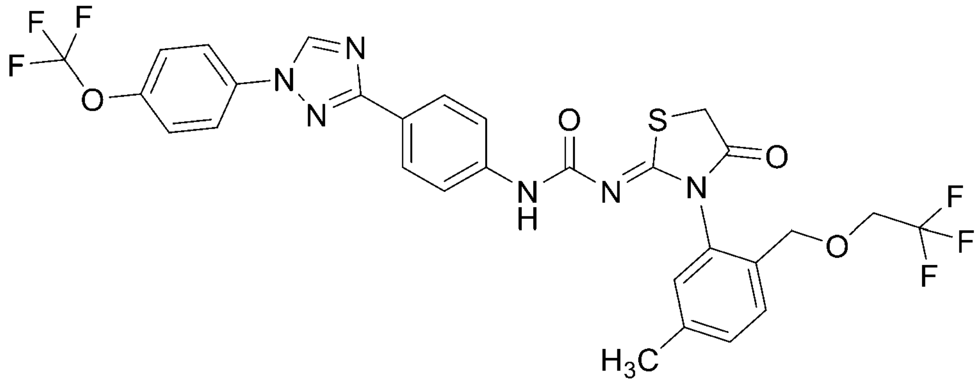 |
| F6 | 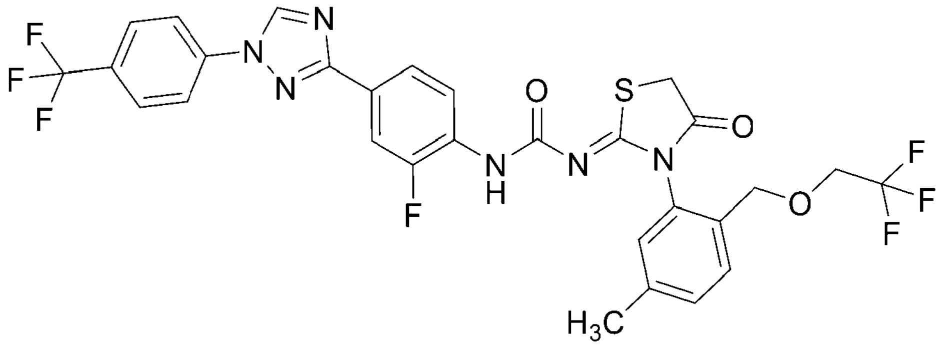 |
| F7 | 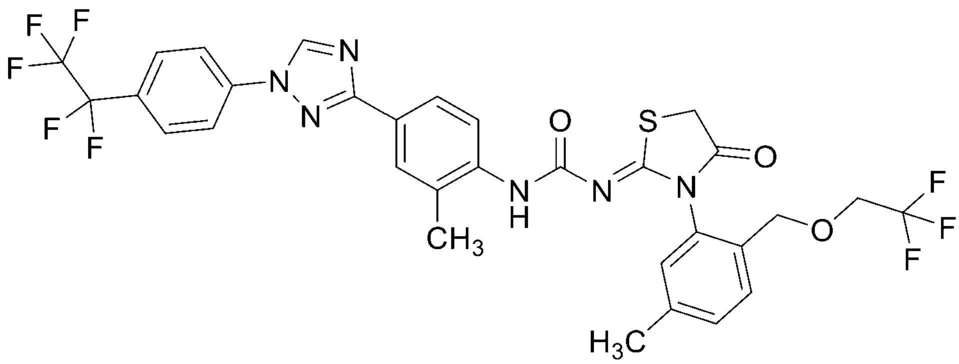 |

(continued)

| TABLE ONE | |
|---|---|
| # | Structure |
| F8 | 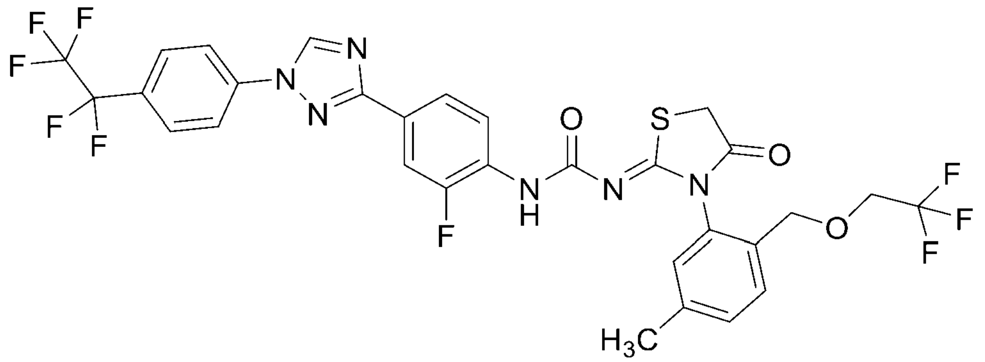 |
| F9 | 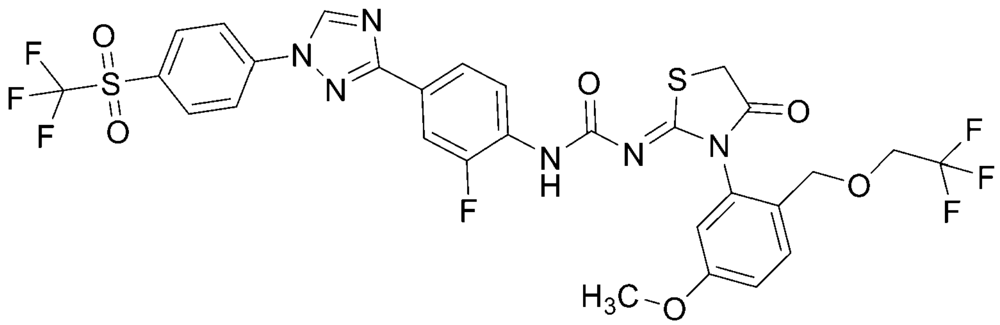 |
| F10 | 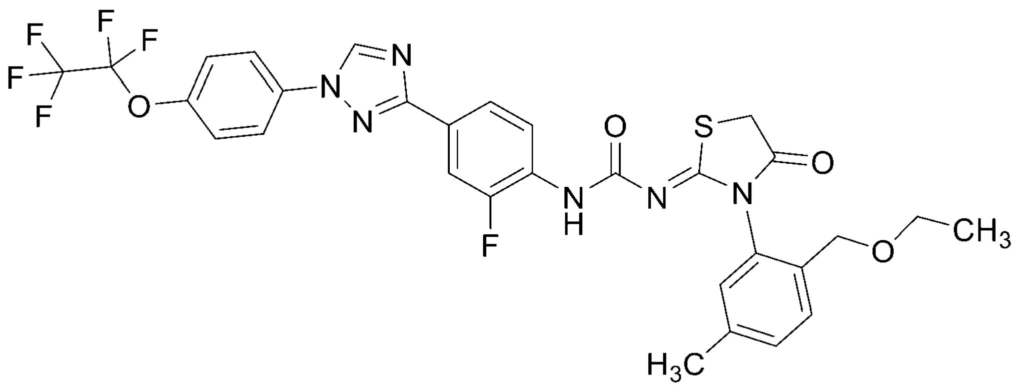 |
| F11 | 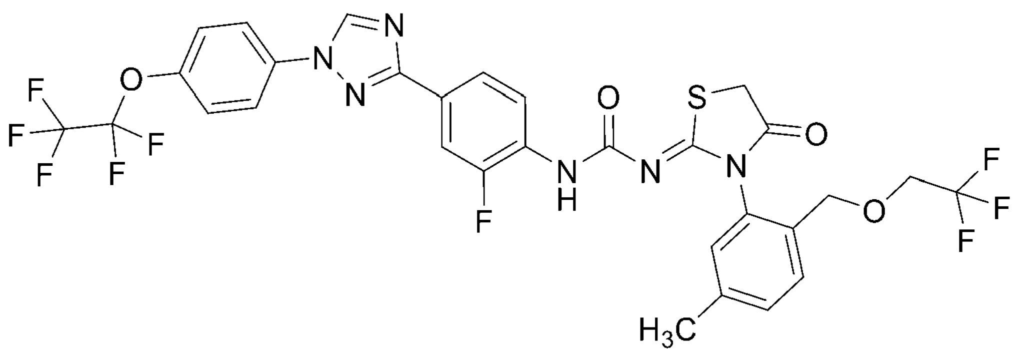 |

(continued)

| TABLE ONE | |
|---|---|
| # | Structure |
| F12 | 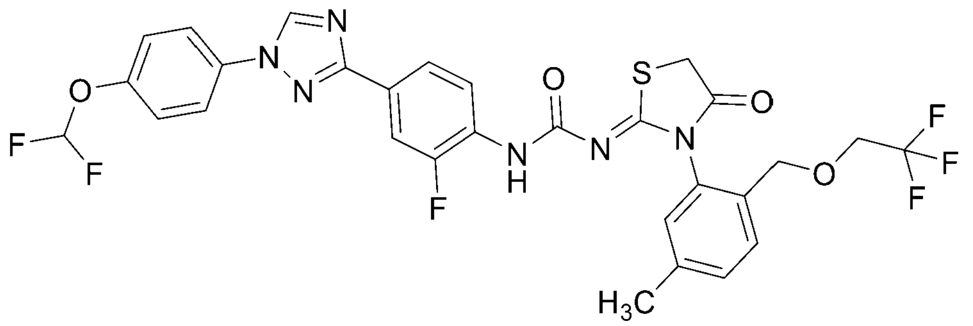 |
| F13 | 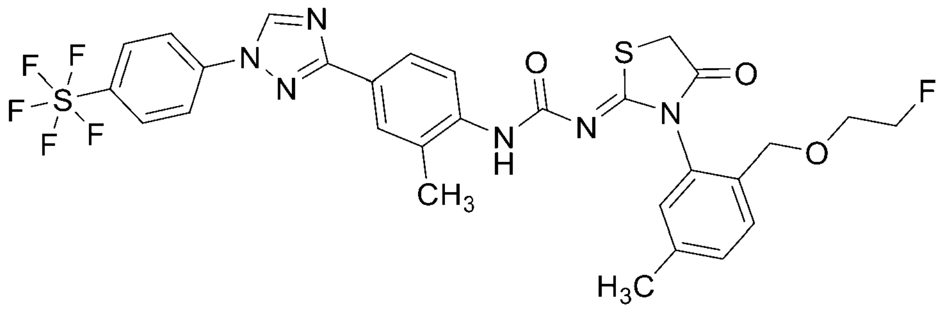 |
| F14 | 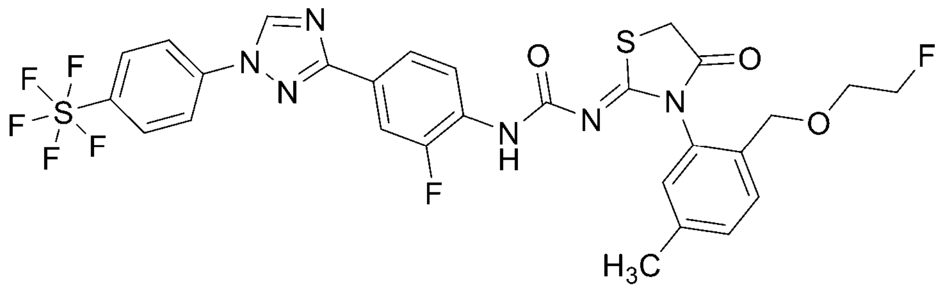 |
| F15 | 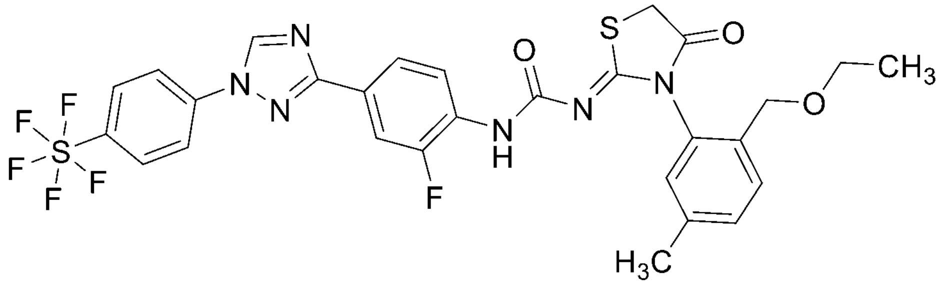 |
| F16 | 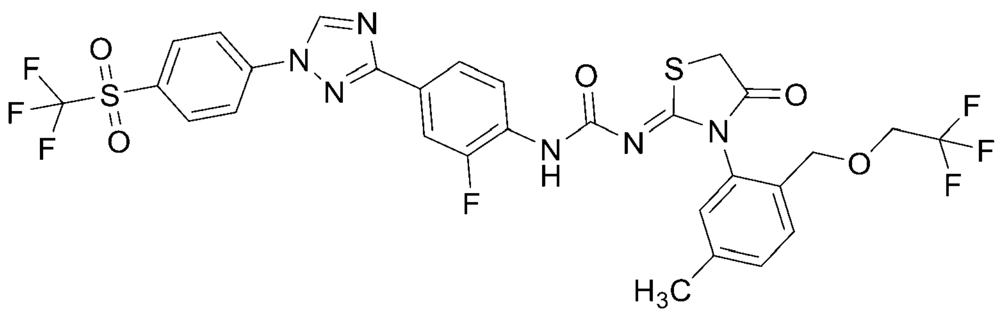 |

The molecules in part (A) of Formula One and specifically, molecules F1, F2, F3, F4, F5, F6, F7, F8, F9, F10, F11,

F12, F13, F14, F15, and F16 can be made by persons skilled in the art. For example, see WO 2021/011722 A1, WO 2014/160031, and WO 2013/009791.

The pesticidal composition may be mixed with active ingredients and other mixing partners to enhance usefulness of said compositions. Such active ingredients may have, for example, acaricidal, insecticidal, fungicidal, nematicidal activity, which broadens the spectrum of pest control, as well as other materials, compounds, and compositions. Procedures for making such compositional mixtures are known in the art.

In light of the above the following details are additionally provided.

1d. A pesticidal composition comprising:

**(A)** a molecule having a structure according to **Formula One**

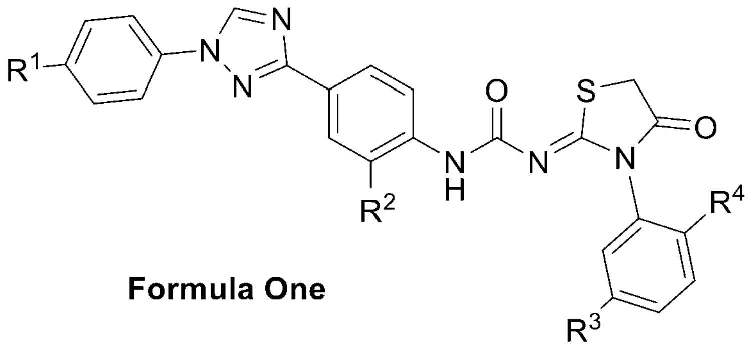

**Formula One**

wherein:

$R^1$ is $CF_3$, $CHF_2$, $CF_2CF_3$, $OCF_3$, $OCF_2CF_3$, $SF_5$, or $SO_2CF_3$;
$R^2$ is H, F, or $CH_3$;
$R^3$ is $CH_3$ or $OCH_3$; and
$R^4$ is $CH_2OCH_2CH_3$, $CH_2OCH_2CF_3$, or $CH_2OCH_2CH_2F$;
and

**(B)** a mixing partner that is

(1) a member of AIGA;
(2) a member of AIGA-1;
(3) a member of AIGA-2;
(3) AI-1; or
(4) AI-2.

2d. A pesticidal composition according to detail 1d wherein a molecule having a structure according to **Formula One** is F1, F2, F3, F4, F5, F6, F7, F8, F9, F10, F11, F12, F13, F14, F15, or F16.
3d. A composition according to detail 2d wherein said molecule is F1
4d. A composition according to detail 2d wherein said molecule is F2.
5d. A composition according to detail 2d wherein said molecule is F3.
6d. A composition according to detail 2d wherein said molecule is F4.
7d. A composition according to detail 2d wherein said molecule is F5.
8d. A composition according to detail 2d wherein said molecule is F6.
9d. A composition according to detail 2d wherein said molecule is F7.
10d. A composition according to detail 2d wherein said molecule is F8.
11d. A composition according to detail 2d wherein said molecule is F9.
12d. A composition according to detail 2d wherein said molecule is F10.
13d. A composition according to detail 2d wherein said molecule is F11.
14d. A composition according to detail 2d wherein said molecule is F12.
15d. A composition according to detail 2d wherein said molecule is F13.
16d. A composition according to detail 2d wherein said molecule is F14.
17d. A composition according to detail 2d wherein said molecule is F15.
18d. A composition according to detail 2d wherein said molecule is F16.

19d. A composition according to detail 2d wherein said molecule is a stereoisomer of F1, F2, F3, F4, F5, F6, F7, F8, F9, F10, F11, F12, F13, F14, F15, or F16.
20d. A composition according to details 1d though 19d wherein the mixing partner is one selected from AIGA.
21d. A composition according to details 1d though 19d wherein the mixing partner is one selected from AIGA-1.
22d. A composition according to details 1d through 21d wherein said mixing partner is abamectin.
23d. A composition according to details 1d through 21d wherein said mixing partner is acephate.
24d. A composition according to details 1d through 21d wherein said mixing partner is acequinocyl.
25d. A composition according to details 1d through 21d wherein said mixing partner is acetamiprid.
26d. A composition according to details 1d through 21d wherein said mixing partner is acrinathrin.
27d. A composition according to details 1d through 21d wherein said mixing partner is acynonapyr.
28d. A composition according to details 1d through 21d wherein said mixing partner is afidopyropen.
29d. A composition according to details 1d through 21d wherein said mixing partner is alanycarb.
30d. A composition according to details 1d through 21d wherein said mixing partner is aldicarb.
31d. A composition according to details 1d through 21d wherein said mixing partner is allethrin.
32d. A composition according to details 1d through 21d wherein said mixing partner is *alpha*-cypermethrin.
33d. A composition according to details 1d through 21d wherein said mixing partner is aminopyralid.
34d. A composition according to details 1d through 21d wherein said mixing partner is amitraz.
35d. A composition according to details 1d through 21d wherein said mixing partner is azadirachtin.
36d. A composition according to details 1d through 21d wherein said mixing partner is azamethiphos.
37d. A composition according to details 1d through 21d wherein said mixing partner is azinphos-ethyl.
38d. A composition according to details 1d through 21d wherein said mixing partner is azinphos-methyl.
39d. A composition according to details 1d through 21d wherein said mixing partner is azocyclotin.
40d. A composition according to details 1d through 21d wherein said mixing partner is azoxystrobin.
41d. A composition according to details 1d through 21d wherein said mixing partner is bendiocarb.
42d. A composition according to details 1d through 21d wherein said mixing partner is benfuracarb.
43d. A composition according to details 1d through 21d wherein said mixing partner is bensultap.
44d. A composition according to details 1d through 21d wherein said mixing partner is benzoximate.
45d. A composition according to details 1d through 21d wherein said mixing partner is benzpyrimoxan.
46d. A composition according to details 1d through 21d wherein said mixing partner is *beta*-cyfluthrin.
47d. A composition according to details 1d through 21d wherein said mixing partner is *beta*-cypermethrin.
48d. A composition according to details 1d through 21d wherein said mixing partner is bifenazate.
49d. A composition according to details 1d through 21d wherein said mixing partner is bifenthrin.
50d. A composition according to details 1d through 21d wherein said mixing partner is bioallethrin.
51d. A composition according to details 1d through 21d wherein said mixing partner is bioresmethrin.
52d. A composition according to details 1d through 21d wherein said mixing partner is bistrifluron.
53d. A composition according to details 1d through 21d wherein said mixing partner is broflanilide.
54d. A composition according to details 1d through 21d wherein said mixing partner is bromopropylate.
55d. A composition according to details 1d through 21d wherein said mixing partner is buprofezin.
56d. A composition according to details 1d through 21d wherein said mixing partner is butocarboxim.
57d. A composition according to details 1d through 21d wherein said mixing partner is butoxycarboxim.
58d. A composition according to details 1d through 21d wherein said mixing partner is cadusafos.
59d. A composition according to details 1d through 21d wherein said mixing partner is carbaryl.
60d. A composition according to details 1d through 21d wherein said mixing partner is carbofuran.
61d. A composition according to details 1d through 21d wherein said mixing partner is carbosulfan.
62d. A composition according to details 1d through 21d wherein said mixing partner is carboxin.
63d. A composition according to details 1d through 21d wherein said mixing partner is cartap hydrochloride.
64d. A composition according to details 1d through 21d wherein said mixing partner is chinomethionat.
65d. A composition according to details 1d through 21d wherein said mixing partner is chlorantraniliprole.
66d. A composition according to details 1d through 21d wherein said mixing partner is chlordane.
67d. A composition according to details 1d through 21d wherein said mixing partner is chlorethoxyfos.
68d. A composition according to details 1d through 21d wherein said mixing partner is chlorfenapyr.
69d. A composition according to details 1d through 21d wherein said mixing partner is chlorfenvinphos.
70d. A composition according to details 1d through 21d wherein said mixing partner is chlorfluazuron.
71d. A composition according to details 1d through 21d wherein said mixing partner is chlormephos.
72d. A composition according to details 1d through 21d wherein said mixing partner is chlorpyrifos.
73d. A composition according to details 1d through 21d wherein said mixing partner is chlorpyrifos-methyl.
74d. A composition according to details 1d through 21d wherein said mixing partner is chromafenozide.
75d. A composition according to details 1d through 21d wherein said mixing partner is clofentezine.

76d. A composition according to details 1d through 21d wherein said mixing partner is clopyralid.
77d. A composition according to details 1d through 21d wherein said mixing partner is cloquintocet.
78d. A composition according to details 1d through 21d wherein said mixing partner is clothianidin.
79d. A composition according to details 1d through 21d wherein said mixing partner is copper hydroxide.
80d. A composition according to details 1d through 21d wherein said mixing partner is coumaphos.
81d. A composition according to details 1d through 21d wherein said mixing partner is cyanophos.
82d. A composition according to details 1d through 21d wherein said mixing partner is cyantraniliprole.
83d. A composition according to details 1d through 21d wherein said mixing partner is cyclaniliprole.
84d. A composition according to details 1d through 21d wherein said mixing partner is cyclobutrifluram.
85d. A composition according to details 1d through 21d wherein said mixing partner is cycloprothrin.
86d. A composition according to details 1d through 21d wherein said mixing partner is cycloxaprid.
87d. A composition according to details 1d through 21d wherein said mixing partner is cyenopyrafen.
88d. A composition according to details 1d through 21d wherein said mixing partner is cyflumetofen.
89d. A composition according to details 1d through 21d wherein said mixing partner is cyfluthrin.
90d. A composition according to details 1d through 21d wherein said mixing partner is cyhalothrin.
91d. A composition according to details 1d through 21d wherein said mixing partner is cyhexatin.
92d. A composition according to details 1d through 21d wherein said mixing partner is cymoxanil.
93d. A composition according to details 1d through 21d wherein said mixing partner is cypermethrin.
94d. A composition according to details 1d through 21d wherein said mixing partner is cyphenothrin.
95d. A composition according to details 1d through 21d wherein said mixing partner is cyproflanilide.
96d. A composition according to details 1d through 21d wherein said mixing partner is cyromazine.
97d. A composition according to details 1d through 21d wherein said mixing partner is *d-cis-trans* allethrin.
98d. A composition according to details 1d through 21d wherein said mixing partner is DDVP.
99d. A composition according to details 1d through 21d wherein said mixing partner is deltamethrin.
100d. A composition according to details 1d through 21d wherein said mixing partner is demeton-S-methyl.
101d. A composition according to details 1d through 21d wherein said mixing partner is diafenthiuron.
102d. A composition according to details 1d through 21d wherein said mixing partner is diazinon.
103d. A composition according to details 1d through 21d wherein said mixing partner is dichlorvos.
104d. A composition according to details 1d through 21d wherein said mixing partner is dicofol.
105d. A composition according to details 1d through 21d wherein said mixing partner is dicrotophos.
106d. A composition according to details 1d through 21d wherein said mixing partner is difenoconazole.
107d. A composition according to details 1d through 21d wherein said mixing partner is diflovidazin.
108d. A composition according to details 1d through 21d wherein said mixing partner is diflubenzuron.
109d. A composition according to details 1d through 21d wherein said mixing partner is dimethoate.
110d. A composition according to details 1d through 21d wherein said mixing partner is dimethylvinphos.
111d. A composition according to details 1d through 21d wherein said mixing partner is dimpropyridaz.
112d. A composition according to details 1d through 21d wherein said mixing partner is dinotefuran.
113d. A composition according to details 1d through 21d wherein said mixing partner is disulfoton.
114d. A composition according to details 1d through 21d wherein said mixing partner is DNOC.
115d. A composition according to details 1d through 21d wherein said mixing partner is *d-trans* allethrin.
116d. A composition according to details 1d through 21d wherein said mixing partner is emamectin.
117d. A composition according to details 1d through 21d wherein said mixing partner is emamectin benzoate.
118d. A composition according to details 1d through 21d wherein said mixing partner is empenthrin.
119d. A composition according to details 1d through 21d wherein said mixing partner is endosulfan.
120d. A composition according to details 1d through 21d wherein said mixing partner is EPN.
121d. A composition according to details 1d through 21d wherein said mixing partner is esfenvalerate.
122d. A composition according to details 1d through 21d wherein said mixing partner is ethaboxam.
123d. A composition according to details 1d through 21d wherein said mixing partner is ethiofencarb.
124d. A composition according to details 1d through 21d wherein said mixing partner is ethion.
125d. A composition according to details 1d through 21d wherein said mixing partner is ethiprole.
126d. A composition according to details 1d through 21d wherein said mixing partner is ethoprophos.
127d. A composition according to details 1d through 21d wherein said mixing partner is etofenprox.
128d. A composition according to details 1d through 21d wherein said mixing partner is famoxadone.
129d. A composition according to details 1d through 21d wherein said mixing partner is famphur.
130d. A composition according to details 1d through 21d wherein said mixing partner is fenamiphos.
131d. A composition according to details 1d through 21d wherein said mixing partner is fenazaquin.
132d. A composition according to details 1d through 21d wherein said mixing partner is fenbuconazole.
133d. A composition according to details 1d through 21d wherein said mixing partner is fenbutatin oxide.

134d. A composition according to details 1d through 21d wherein said mixing partner is fenitrothion.
135d. A composition according to details 1d through 21d wherein said mixing partner is fenmezoditiaz.
136d. A composition according to details 1d through 21d wherein said mixing partner is fenobucarb.
137d. A composition according to details 1d through 21d wherein said mixing partner is fenoxycarb.
138d. A composition according to details 1d through 21d wherein said mixing partner is fenpropathrin.
139d. A composition according to details 1d through 21d wherein said mixing partner is fenpyroximate.
140d. A composition according to details 1d through 21d wherein said mixing partner is fenthion.
141d. A composition according to details 1d through 21d wherein said mixing partner is fenvalerate.
142d. A composition according to details 1d through 21d wherein said mixing partner is fipronil.
143d. A composition according to details 1d through 21d wherein said mixing partner is flazasulfuron.
144d. A composition according to details 1d through 21d wherein said mixing partner is flonicamid.
145d. A composition according to details 1d through 21d wherein said mixing partner is florasulam.
146d. A composition according to details 1d through 21d wherein said mixing partner is fluacrypyrim.
147d. A composition according to details 1d through 21d wherein said mixing partner is fluazaindolizine.
148d. A composition according to details 1d through 21d wherein said mixing partner is flubendiamide.
149d. A composition according to details 1d through 21d wherein said mixing partner is flucycloxuron.
150d. A composition according to details 1d through 21d wherein said mixing partner is flucythrinate.
151d. A composition according to details 1d through 21d wherein said mixing partner is fludioxonil.
152d. A composition according to details 1d through 21d wherein said mixing partner is fluensulfone.
153d. A composition according to details 1d through 21d wherein said mixing partner is flufenoxuron.
154d. A composition according to details 1d through 21d wherein said mixing partner is flumethrin.
155d. A composition according to details 1d through 21d wherein said mixing partner is flumioxazin.
156d. A composition according to details 1d through 21d wherein said mixing partner is fluopyram.
157d. A composition according to details 1d through 21d wherein said mixing partner is fluoxapiprolin.
158d. A composition according to details 1d through 21d wherein said mixing partner is fluoxastrobin.
159d. A composition according to details 1d through 21d wherein said mixing partner is flupyradifurone.
160d. A composition according to details 1d through 21d wherein said mixing partner is flupyrimin.
161d. A composition according to details 1d through 21d wherein said mixing partner is fluroxypyr.
162d. A composition according to details 1d through 21d wherein said mixing partner is fluxametamide.
163d. A composition according to details 1d through 21d wherein said mixing partner is fluxapyroxad.
164d. A composition according to details 1d through 21d wherein said mixing partner is formetanate.
165d. A composition according to details 1d through 21d wherein said mixing partner is fosthiazate.
166d. A composition according to details 1d through 21d wherein said mixing partner is furathiocarb.
167d. A composition according to details 1d through 21d wherein said mixing partner is gamma-cyhalothrin.
168d. A composition according to details 1d through 21d wherein said mixing partner is glyphosate.
169d. A composition according to details 1d through 21d wherein said mixing partner is halauxifen.
170d. A composition according to details 1d through 21d wherein said mixing partner is halfenprox.
171d. A composition according to details 1d through 21d wherein said mixing partner is halofenozide.
172d. A composition according to details 1d through 21d wherein said mixing partner is heptenophos.
173d. A composition according to details 1d through 21d wherein said mixing partner is hexaflumuron.
174d. A composition according to details 1d through 21d wherein said mixing partner is hexythiazox.
175d. A composition according to details 1d through 21d wherein said mixing partner is hydramethylnon.
176d. A composition according to details 1d through 21d wherein said mixing partner is hydroprene.
177d. A composition according to details 1d through 21d wherein said mixing partner is imazamox.
178d. A composition according to details 1d through 21d wherein said mixing partner is imazapyr.
179d. A composition according to details 1d through 21d wherein said mixing partner is imicyafos.
180d. A composition according to details 1d through 21d wherein said mixing partner is imidacloprid.
181d. A composition according to details 1d through 21d wherein said mixing partner is imiprothrin.
182d. A composition according to details 1d through 21d wherein said mixing partner is indazapyroxamet.
183d. A composition according to details 1d through 21d wherein said mixing partner is indoxacarb.
184d. A composition according to details 1d through 21d wherein said mixing partner is inpyrfluxam.
185d. A composition according to details 1d through 21d wherein said mixing partner is ipconazole.
186d. A composition according to details 1d through 21d wherein said mixing partner is isocycloseram.
187d. A composition according to details 1d through 21d wherein said mixing partner is isofenphos.
188d. A composition according to details 1d through 21d wherein said mixing partner is isoflucypram.
189d. A composition according to details 1d through 21d wherein said mixing partner is isoprocarb.
190d. A composition according to details 1d through 21d wherein said mixing partner is isoxathion.
191d. A composition according to details 1d through 21d wherein said mixing partner is kadethrin.

192d. A composition according to details 1d through 21d wherein said mixing partner is kinoprene.
193d. A composition according to details 1d through 21d wherein said mixing partner is lambda-cyhalothrin.
194d. A composition according to details 1d through 21d wherein said mixing partner is lepimectin.
195d. A composition according to details 1d through 21d wherein said mixing partner is lufenuron.
196d. A composition according to details 1d through 21d wherein said mixing partner is malathion.
197d. A composition according to details 1d through 21d wherein said mixing partner is mancozeb.
198d. A composition according to details 1d through 21d wherein said mixing partner is MCPA.
199d. A composition according to details 1d through 21d wherein said mixing partner is mecarbam.
200d. A composition according to details 1d through 21d wherein said mixing partner is mefenoxam.
201d. A composition according to details 1d through 21d wherein said mixing partner is metaflumizone.
202d. A composition according to details 1d through 21d wherein said mixing partner is metalaxyl.
203d. A composition according to details 1d through 21d wherein said mixing partner is metconazole.
204d. A composition according to details 1d through 21d wherein said mixing partner is methamidophos.
205d. A composition according to details 1d through 21d wherein said mixing partner is methenamine.
206d. A composition according to details 1d through 21d wherein said mixing partner is methidathion.
207d. A composition according to details 1d through 21d wherein said mixing partner is methiocarb.
208d. A composition according to details 1d through 21d wherein said mixing partner is methomyl.
209d. A composition according to details 1d through 21d wherein said mixing partner is methoprene.
210d. A composition according to details 1d through 21d wherein said mixing partner is methoxychlor.
211d. A composition according to details 1d through 21d wherein said mixing partner is methoxyfenozide.
212d. A composition according to details 1d through 21d wherein said mixing partner is metolcarb.
213d. A composition according to details 1d through 21d wherein said mixing partner is metsulfuron.
214d. A composition according to details 1d through 21d wherein said mixing partner is mevinphos.
215d. A composition according to details 1d through 21d wherein said mixing partner is milbemectin.
216d. A composition according to details 1d through 21d wherein said mixing partner is monocrotophos.
217d. A composition according to details 1d through 21d wherein said mixing partner is myclobutanil.
218d. A composition according to details 1d through 21d wherein said mixing partner is naled.
219d. A composition according to details 1d through 21d wherein said mixing partner is nicosulfuron.
220d. A composition according to details 1d through 21d wherein said mixing partner is nitrapyrin.
221d. A composition according to details 1d through 21d wherein said mixing partner is novaluron.
222d. A composition according to details 1d through 21d wherein said mixing partner is noviflumuron.
223d. A composition according to details 1d through 21d wherein said mixing partner is omethoate.
224d. A composition according to details 1d through 21d wherein said mixing partner is oxamyl.
225d. A composition according to details 1d through 21d wherein said mixing partner is oxathiapiprolin.
226d. A composition according to details 1d through 21d wherein said mixing partner is oxazosulfyl.
227d. A composition according to details 1d through 21d wherein said mixing partner is oxydemeton-methyl.
228d. A composition according to details 1d through 21d wherein said mixing partner is parathion.
229d. A composition according to details 1d through 21d wherein said mixing partner is parathion-methyl.
230d. A composition according to details 1d through 21d wherein said mixing partner is penflufen.
231d. A composition according to details 1d through 21d wherein said mixing partner is penthiopyrad.
232d. A composition according to details 1d through 21d wherein said mixing partner is permethrin.
233d. A composition according to details 1d through 21d wherein said mixing partner is phenothrin.
234d. A composition according to details 1d through 21d wherein said mixing partner is phenthoate.
235d. A composition according to details 1d through 21d wherein said mixing partner is phorate.
236d. A composition according to details 1d through 21d wherein said mixing partner is phosalone.
237d. A composition according to details 1d through 21d wherein said mixing partner is phosmet.
238d. A composition according to details 1d through 21d wherein said mixing partner is phosphamidon.
239d. A composition according to details 1d through 21d wherein said mixing partner is phoxim.
240d. A composition according to details 1d through 21d wherein said mixing partner is picarbutrazox.
241d. A composition according to details 1d through 21d wherein said mixing partner is picloram.
242d. A composition according to details 1d through 21d wherein said mixing partner is picoxystrobin.
243d. A composition according to details 1d through 21d wherein said mixing partner is pinoxaden.
244d. A composition according to details 1d through 21d wherein said mixing partner is pirimicarb.
245d. A composition according to details 1d through 21d wherein said mixing partner is pirimiphos-methyl.
246d. A composition according to details 1d through 21d wherein said mixing partner is prallethrin.
247d. A composition according to details 1d through 21d wherein said mixing partner is profenofos.
248d. A composition according to details 1d through 21d wherein said mixing partner is propargite.
249d. A composition according to details 1d through 21d wherein said mixing partner is propetamphos.

250d. A composition according to details 1d through 21d wherein said mixing partner is propiconazole.
251d. A composition according to details 1d through 21d wherein said mixing partner is propoxur.
252d. A composition according to details 1d through 21d wherein said mixing partner is propyzamide.
253d. A composition according to details 1d through 21d wherein said mixing partner is prothioconazole.
254d. A composition according to details 1d through 21d wherein said mixing partner is prothiofos.
255d. A composition according to details 1d through 21d wherein said mixing partner is pydiflumetofen.
256d. A composition according to details 1d through 21d wherein said mixing partner is pyflubumide.
257d. A composition according to details 1d through 21d wherein said mixing partner is pymetrozine.
258d. A composition according to details 1d through 21d wherein said mixing partner is pyraclofos.
259d. A composition according to details 1d through 21d wherein said mixing partner is pyraclostrobin.
260d. A composition according to details 1d through 21d wherein said mixing partner is pyrethrum.
261d. A composition according to details 1d through 21d wherein said mixing partner is pyridaben.
262d. A composition according to details 1d through 21d wherein said mixing partner is pyridalyl.
263d. A composition according to details 1d through 21d wherein said mixing partner is pyridaphenthion.
264d. A composition according to details 1d through 21d wherein said mixing partner is pyrifluquinazon.
265d. A composition according to details 1d through 21d wherein said mixing partner is pyrimidifen.
266d. A composition according to details 1d through 21d wherein said mixing partner is pyriproxyfen.
267d. A composition according to details 1d through 21d wherein said mixing partner is pyroxasulfone.
268d. A composition according to details 1d through 21d wherein said mixing partner is quinalphos.
269d. A composition according to details 1d through 21d wherein said mixing partner is resmethrin.
270d. A composition according to details 1d through 21d wherein said mixing partner is rimsulfuron.
271d. A composition according to details 1d through 21d wherein said mixing partner is rotenone.
272d. A composition according to details 1d through 21d wherein said mixing partner is sedaxane.
273d. A composition according to details 1d through 21d wherein said mixing partner is silafluofen.
274d. A composition according to details 1d through 21d wherein said mixing partner is spidoxamat.
275d. A composition according to details 1d through 21d wherein said mixing partner is spinetoram.
276d. A composition according to details 1d through 21d wherein said mixing partner is spinosad.
277d. A composition according to details 1d through 21d wherein said mixing partner is spirobudifen.
278d. A composition according to details 1d through 21d wherein said mixing partner is spirodiclofen.
279d. A composition according to details 1d through 21d wherein said mixing partner is spiromesifen.
280d. A composition according to details 1d through 21d wherein said mixing partner is spiropidion.
281d. A composition according to details 1d through 21d wherein said mixing partner is spirotetramat.
282d. A composition according to details 1d through 21d wherein said mixing partner is sulfluramid.
283d. A composition according to details 1d through 21d wherein said mixing partner is sulfotep.
284d. A composition according to details 1d through 21d wherein said mixing partner is sulfoxaflor.
285d. A composition according to details 1d through 21d wherein said mixing partner is *tau*-fluvalinate.
286d. A composition according to details 1d through 21d wherein said mixing partner is tebuconazole.
287d. A composition according to details 1d through 21d wherein said mixing partner is tebufenozide.
288d. A composition according to details 1d through 21d wherein said mixing partner is tebufenpyrad.
289d. A composition according to details 1d through 21d wherein said mixing partner is tebupirimfos.
290d. A composition according to details 1d through 21d wherein said mixing partner is teflubenzuron.
291d. A composition according to details 1d through 21d wherein said mixing partner is tefluthrin.
292d. A composition according to details 1d through 21d wherein said mixing partner is temephos.
293d. A composition according to details 1d through 21d wherein said mixing partner is terbufos.
294d. A composition according to details 1d through 21d wherein said mixing partner is tetrachlorvinphos.
295d. A composition according to details 1d through 21d wherein said mixing partner is tetradifon.
296d. A composition according to details 1d through 21d wherein said mixing partner is tetramethrin.
297d. A composition according to details 1d through 21d wherein said mixing partner is tetraniliprole.
298d. A composition according to details 1d through 21d wherein said mixing partner is *theta*-cypermethrin.
299d. A composition according to details 1d through 21d wherein said mixing partner is thiabendazole.
300d. A composition according to details 1d through 21d wherein said mixing partner is thiamethoxam.
301d. A composition according to details 1d through 21d wherein said mixing partner is thiocyclam.
302d. A composition according to details 1d through 21d wherein said mixing partner is thiodicarb.
303d. A composition according to details 1d through 21d wherein said mixing partner is thiofanox.
304d. A composition according to details 1d through 21d wherein said mixing partner is thiometon.
305d. A composition according to details 1d through 21d wherein said mixing partner is thiosultap-sodium.
306d. A composition according to details 1d through 21d wherein said mixing partner is thiram.
307d. A composition according to details 1d through 21d wherein said mixing partner is tiorantraniliprole.

308d. A composition according to details 1d through 21d wherein said mixing partner is tioxazafen.
309d. A composition according to details 1d through 21d wherein said mixing partner is tolfenpyrad.
310d. A composition according to details 1d through 21d wherein said mixing partner is tralkoxydim.
311d. A composition according to details 1d through 21d wherein said mixing partner is tralomethrin.
312d. A composition according to details 1d through 21d wherein said mixing partner is transfluthrin.
313d. A composition according to details 1d through 21d wherein said mixing partner is triazamate.
314d. A composition according to details 1d through 21d wherein said mixing partner is triazophos.
315d. A composition according to details 1d through 21d wherein said mixing partner is trichlorfon.
316d. A composition according to details 1d through 21d wherein said mixing partner is triclopyr.
317d. A composition according to details 1d through 21d wherein said mixing partner is trifloxystrobin.
318d. A composition according to details 1d through 21d wherein said mixing partner is triflumezopyrim.
319d. A composition according to details 1d through 21d wherein said mixing partner is triflumuron.
320d. A composition according to details 1d through 21d wherein said mixing partner is trimethacarb.
321d. A composition according to details 1d through 21d wherein said mixing partner is vamidothion.
322d. A composition according to details 1d through 21d wherein said mixing partner is XMC.
323d. A composition according to details 1d through 21d wherein said mixing partner is xylylcarb.
324d. A composition according to details 1d through 21d wherein said mixing partner is *zeta*-cypermethrin.
325d. A composition according to details 1d through 21d wherein said mixing partner is 2,4-D.
326d. A composition according to any of the previous details from 1d though 21d wherein said mixing partner is metarylpicoxamid.
327d. A composition according to any of the previous details from 1d though 21d wherein said mixing partner is *N*-(4-chloro-2-(pyridin-3-yl)thiazol-5-yl)-*N*-ethyl-3-(methylsulfonyl)propanamide (AI-1)

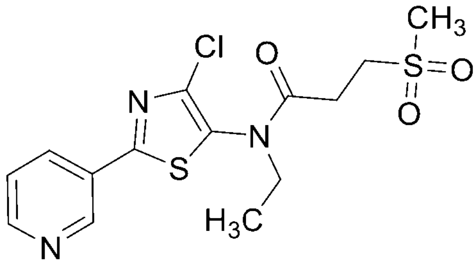
.

328d. A composition according to any of the previous details from 1d though 21d wherein said mixing partner is *N*-(3-chloro-1-(pyridin-3-yl)-1*H*-pyrazol-4-yl)-2-(methylsulfonyl)propanamide (AI-2)

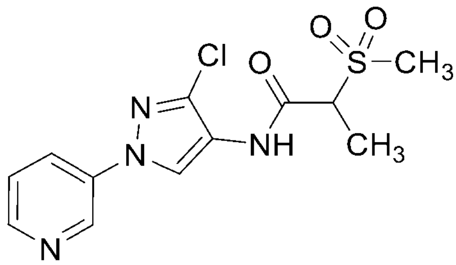
.

329d. A composition according to any of the previous details from 1d though 328d wherein the weight ratio of said molecule to said mixing partner is about 50000:1 to about 1:50000.
330d. A composition according to any of the previous details from 1d though 328d wherein the weight ratio of said molecule to said mixing partner is about 40000:1 to about 1:40000.
331d. A composition according to any of the previous details from 1d though 328d wherein the weight ratio of said molecule to said mixing partner is about 10256:1 to about 1:10256.
332d. A composition according to any of the previous details from 1d though 328d wherein the weight ratio of said molecule to said mixing partner is about 10000:1 to about 1:10000.
333d. A composition according to any of the previous details from 1d though 328d wherein the weight ratio of said molecule to said mixing partner is about 2564:1 to about 1:2564.
334d. A composition according to any of the previous details from 1d though 328d wherein the weight ratio of said molecule to said mixing partner is 1000:1 to about 1:1000.
335d. A composition according to any of the previous details from 1d though 328d wherein the weight ratio of said

molecule to said mixing partner is about 640:1 to about 1:640.
336d. A composition according to any of the previous details from 1d though 238d wherein the weight ratio of said molecule to said mixing partner is 500:1 to about 1:500.
337d. A composition according to any of the previous details from 1d though 238d wherein the weight ratio of said molecule to said mixing partner is 100:1 to about 1:100.
338d. A composition according to any of the previous details from 1d though 238d wherein the weight ratio of said molecule to said mixing partner is 50:1 to about 1:50.
339d. A composition according to any of the previous details from 1d though 238d wherein the weight ratio of said molecule to said mixing partner is 20:1 to about 1:20.
340d. A composition according to any of the previous details from 1d though 328d wherein the weight ratio of said molecule to said mixing partner is about 16:1 to about 1:16.
341d. A composition according to any of the previous details from 1d though 238d wherein the weight ratio of said molecule to said mixing partner is 10:1 to about 1:10.
342d. A composition according to any of the previous details from 1d though 238d wherein the weight ratio of said molecule to said mixing partner is 5:1 to about 1:5.
343d. A composition according to any of the previous details from 1d though 238d wherein the weight ratio of said molecule to said mixing partner is 3:1 to about 1:3.
344d. A composition according to any of the previous details from 1d though 238d wherein the weight ratio of said molecule to said mixing partner is 2:1 to about 1:2.
345d. A composition according to any of the previous details from 1d though 238d wherein the weight ratio of said molecule to said mixing partner is 1:1.
346d. A process to control pests in a locus by using a pesticidally effective amount of a pesticidal composition according to any of the previous details 1d through 345d.
347d. A process according to detail 346d wherein said pests are from Phyla Arthropoda, Mollusca, and/or Nematoda.
348d. A process according to detail 346d wherein said pests are ants, aphids, bed bugs, beetles, bristletails, caterpillars, cockroaches, crickets, earwigs, fleas, flies, grasshoppers, grubs, hornets, jassids, leafhoppers, lice, locusts, maggots, mealybugs, mites, moths, nematodes, plantbugs, planthoppers, psyllids, sawflies, scales, silverfish, slugs, snails, spiders, springtails, stink bugs, symphylans, termites, thrips, ticks, wasps, whiteflies, and/or wireworms.
349d. A process according to detail 346d wherein said pests are aphids, leafhoppers, moths, scales, thrips, psyllids, mealybugs, stinkbugs, and/or whiteflies.
350d. A process according to detail 346d wherein said pests are caterpillars, beetles, grasshoppers, and/or locusts.
351d. A composition according to detail 3d wherein the mixing partner is one selected from AIGA.
352d. A composition according to detail 3d wherein the mixing partner is one selected from AIGA-1.
353d. A composition according to detail 3d wherein said mixing partner is abamectin.
354d. A composition according to detail 3d wherein said mixing partner is acephate.
355d. A composition according to detail 3d wherein said mixing partner is acequinocyl.
356d. A composition according to detail 3d wherein said mixing partner is acetamiprid.
357d. A composition according to detail 3d wherein said mixing partner is acrinathrin.
358d. A composition according to detail 3d wherein said mixing partner is acynonapyr.
359d. A composition according to detail 3d wherein said mixing partner is afidopyropen.
360d. A composition according to detail 3d wherein said mixing partner is alanycarb.
361d. A composition according to detail 3d wherein said mixing partner is aldicarb.
362d. A composition according to detail 3d wherein said mixing partner is allethrin.
363d. A composition according to detail 3d wherein said mixing partner is alpha-cypermethrin.
364d. A composition according to detail 3d wherein said mixing partner is aminopyralid.
365d. A composition according to detail 3d wherein said mixing partner is amitraz.
366d. A composition according to detail 3d wherein said mixing partner is azadirachtin.
367d. A composition according to detail 3d wherein said mixing partner is azamethiphos.
368d. A composition according to detail 3d wherein said mixing partner is azinphos-ethyl.
369d. A composition according to detail 3d wherein said mixing partner is azinphos-methyl.
370d. A composition according to detail 3d wherein said mixing partner is azocyclotin.
371d. A composition according to detail 3d wherein said mixing partner is azoxystrobin.
372d. A composition according to detail 3d wherein said mixing partner is bendiocarb.
373d. A composition according to detail 3d wherein said mixing partner is benfuracarb.
374d. A composition according to detail 3d wherein said mixing partner is bensultap.
375d. A composition according to detail 3d wherein said mixing partner is benzpyrimoxan.
376d. A composition according to detail 3d wherein said mixing partner is beta-cyfluthrin.

377d. A composition according to detail 3d wherein said mixing partner is beta-cypermethrin.
378d. A composition according to detail 3d wherein said mixing partner is bifenazate.
379d. A composition according to detail 3d wherein said mixing partner is bifenthrin.
380d. A composition according to detail 3d d wherein said mixing partner is bioallethrin.
381d. A composition according to detail 3d wherein said mixing partner is bioresmethrin.
382d. A composition according to detail 3d wherein said mixing partner is bistrifluron.
383d. A composition according to detail 3d wherein said mixing partner is broflanilide.
384d. A composition according to detail 3d wherein said mixing partner is bromopropylate.
385d. A composition according to detail 3d wherein said mixing partner is buprofezin.
386d. A composition according to detail 3d wherein said mixing partner is butocarboxim.
387d. A composition according to detail 3d wherein said mixing partner is butoxycarboxim.
388d. A composition according to detail 3d wherein said mixing partner is cadusafos.
389d. A composition according to detail 3d wherein said mixing partner is carbaryl.
390d. A composition according to detail 3d wherein said mixing partner is carbofuran.
391d. A composition according to details 1d through 21d wherein said mixing partner is carbosulfan.
392d. A composition according to detail 3d wherein said mixing partner is carboxin.
393d. A composition according to detail 3d wherein said mixing partner is cartap hydrochloride.
394d. A composition according to detail 3d wherein said mixing partner is chinomethionat.
395d. A composition according to detail 3d wherein said mixing partner is chlorantraniliprole.
396d. A composition according to detail 3d wherein said mixing partner is chlordane.
398. A composition according to detail 3d wherein said mixing partner is chlorfenapyr.
399d. A composition according to detail 3d wherein said mixing partner is chlorfenvinphos.
400d. A composition according to detail 3d wherein said mixing partner is chlorfluazuron.
401d. A composition according to detail 3d wherein said mixing partner is chlormephos.
402d. A composition according to detail 3d wherein said mixing partner is chlorpyrifos.
403d. A composition according to detail 3d wherein said mixing partner is chlorpyrifos-methyl.
404d. A composition according to detail 3d wherein said mixing partner is chromafenozide.
405d. A composition according to detail 3d wherein said mixing partner is clopyralid.
406d. A composition according to detail 3d wherein said mixing partner is cloquintocet.
407d. A composition according to detail 3d wherein said mixing partner is clothianidin.
408d. A composition according to detail 3d wherein said mixing partner is copper hydroxide.
409d. A composition according to detail 3d wherein said mixing partner is coumaphos.
410d. A composition according to detail 3d wherein said mixing partner is cyanophos.
411d. A composition according to detail 3d wherein said mixing partner is cyantraniliprole.
412d. A composition according to detail 3d wherein said mixing partner is cyclaniliprole.
413d. A composition according to detail 3d wherein said mixing partner is cyclobutrifluram.
414d. A composition according to detail 3d wherein said mixing partner is cycloprothrin.
415d. A composition according to detail 3d wherein said mixing partner is cycloxaprid.
416d. A composition according to detail 3d wherein said mixing partner is cyenopyrafen.
417d. A composition according to detail 3d wherein said mixing partner is cyflumetofen.
418d. A composition according to detail 3d wherein said mixing partner is cyfluthrin.
419d. A composition according to detail 3d wherein said mixing partner is cyhalothrin.
420d. A composition according to detail 3d wherein said mixing partner is cyhexatin.
421d. A composition according to detail 3d wherein said mixing partner is cymoxanil.
422d. A composition according to detail 3d wherein said mixing partner is cypermethrin.
423d. A composition according to detail 3d wherein said mixing partner is cyphenothrin.
424d. A composition according to detail 3d wherein said mixing partner is cyproflanilide.
425d. A composition according to detail 3d wherein said mixing partner is cyromazine.
426d. A composition according to detail 3d wherein said mixing partner is *d-cis-trans* allethrin.
427d. A composition according to detail 3d wherein said mixing partner is DDVP.
428d. A composition according to detail 3d wherein said mixing partner is deltamethrin.
429d. A composition according to detail 3d wherein said mixing partner is demeton-S-methyl.
430d. A composition according to detail 3d wherein said mixing partner is diafenthiuron.
431d. A composition according to detail 3d wherein said mixing partner is diazinon.
432d. A composition according to detail 3d wherein said mixing partner is dichlorvos.
433d. A composition according to detail 3d wherein said mixing partner is dicofol.
434d. A composition according to detail 3d wherein said mixing partner is dicrotophos.
435d. A composition according to detail 3d wherein said mixing partner is difenoconazole.

436d. A composition according to detail 3d wherein said mixing partner is diflovidazin.
437d. A composition according to detail 3d wherein said mixing partner is diflubenzuron.
438d. A composition according to detail 3d wherein said mixing partner is dimethoate.
439d. A composition according to detail 3d wherein said mixing partner is dimethylvinphos.
440d. A composition according to detail 3d wherein said mixing partner is dimpropyridaz.
441d. A composition according to detail 3d wherein said mixing partner is dinotefuran.
442d. A composition according to detail 3d wherein said mixing partner is disulfoton.
443d. A composition according to detail 3d wherein said mixing partner is DNOC.
444d. A composition according to detail 3d wherein said mixing partner is *d-trans* allethrin.
445d. A composition according to detail 3d wherein said mixing partner is emamectin.
446d. A composition according to detail 3d wherein said mixing partner is emamectin benzoate.
447d. A composition according to detail 3d wherein said mixing partner is empenthrin.
448d. A composition according to detail 3d wherein said mixing partner is endosulfan.
449d. A composition according to detail 3d wherein said mixing partner is EPN.
450d. A composition according to detail 3d wherein said mixing partner is esfenvalerate.
451d. A composition according to detail 3d wherein said mixing partner is ethaboxam.
452d. A composition according to detail 3d wherein said mixing partner is ethiofencarb.
453d. A composition according to details detail 3d wherein said mixing partner is ethion.
454d. A composition according to detail 3d wherein said mixing partner is ethiprole.
455d. A composition according to detail 3d wherein said mixing partner is ethoprophos.
456d. A composition according to detail 3d wherein said mixing partner is etofenprox.
457d. A composition according to detail 3d wherein said mixing partner is famoxadone.
458d. A composition according to detail 3d wherein said mixing partner is famphur.
459d. A composition according to detail 3d wherein said mixing partner is fenamiphos.
460d. A composition according to detail 3d wherein said mixing partner is fenazaquin.
461d. A composition according to detail 3d wherein said mixing partner is fenbuconazole.
462d. A composition according to detail 3d wherein said mixing partner is fenbutatin oxide.
463d. A composition according to detail 3d wherein said mixing partner is fenitrothion.
464d. A composition according to detail 3d wherein said mixing partner is fenmezoditiaz.
465d. A composition according to detail 3d wherein said mixing partner is fenobucarb.
466d. A composition according to detail 3d wherein said mixing partner is fenoxycarb.
467d. A composition according to detail 3d wherein said mixing partner is fenpropathrin.
468d. A composition according to detail 3d wherein said mixing partner is fenpyroximate.
469d. A composition according to detail 3d wherein said mixing partner is fenthion.
470d. A composition according to detail 3d wherein said mixing partner is fenvalerate.
471d. A composition according to detail 3d wherein said mixing partner is fipronil.
472d. A composition according to detail 3d wherein said mixing partner is flazasulfuron.
473d. A composition according to detail 3d wherein said mixing partner is flonicamid.
474d. A composition according to detail 3d wherein said mixing partner is florasulam.
475d. A composition according to detail 3d wherein said mixing partner is fluacrypyrim.
476d. A composition according to detail 3d wherein said mixing partner is fluazaindolizine.
477d. A composition according to detail 3d wherein said mixing partner is flubendiamide.
478d. A composition according to detail 3d wherein said mixing partner is flucycloxuron.
479d. A composition according to detail 3d wherein said mixing partner is flucythrinate.
480d. A composition according to detail 3d wherein said mixing partner is fludioxonil.
481d. A composition according to detail 3d wherein said mixing partner is fluensulfone.
482d. A composition according to detail 3d wherein said mixing partner is flufenoxuron.
483d. A composition according to detail 3d wherein said mixing partner is flumethrin.
484d. A composition according to detail 3d wherein said mixing partner is flumioxazin.
485d. A composition according to detail 3d wherein said mixing partner is fluopyram.
486d. A composition according to detail 3d wherein said mixing partner is fluoxapiprolin.
487d. A composition according to detail 3d wherein said mixing partner is fluoxastrobin.
488d. A composition according to detail 3d wherein said mixing partner is flupyradifurone.
489d. A composition according to detail 3d wherein said mixing partner is flupyrimin.
490d. A composition according to detail 3d wherein said mixing partner is fluroxypyr.
491d. A composition according to detail 3d wherein said mixing partner is fluxametamide.
492d. A composition according to detail 3d wherein said mixing partner is fluxapyroxad.
493d. A composition according to detail 3d wherein said mixing partner is formetanate.

494d. A composition according to detail 3d wherein said mixing partner is fosthiazate.
495d. A composition according to detail 3d wherein said mixing partner is furathiocarb.
496d. A composition according to detail 3d wherein said mixing partner is *gamma*-cyhalothrin.
497d. A composition according to detail 3d wherein said mixing partner is glyphosate.
498d. A composition according to detail 3d wherein said mixing partner is halauxifen.
499d. A composition according to detail 3d wherein said mixing partner is halfenprox.
500d. A composition according to detail 3d wherein said mixing partner is halofenozide.
501d. A composition according to detail 3d wherein said mixing partner is heptenophos.
502d. A composition according to detail 3d wherein said mixing partner is hexaflumuron.
503d. A composition according to detail 3d wherein said mixing partner is hexythiazox.
504d. A composition according to detail 3d wherein said mixing partner is hydramethylnon.
505d. A composition according to detail 3d wherein said mixing partner is hydroprene.
506d. A composition according to detail 3d wherein said mixing partner is imazamox.
507d. A composition according to detail 3d wherein said mixing partner is imazapyr.
508d. A composition according to detail 3d wherein said mixing partner is imicyafos.
509d. A composition according to detail 3d wherein said mixing partner is imidacloprid.
510d. A composition according to detail 3d wherein said mixing partner is imiprothrin.
511 d. A composition according to detail 3d wherein said mixing partner is indazapyroxamet.
512d. A composition according to detail 3d wherein said mixing partner is indoxacarb.
513d. A composition according to detail 3d wherein said mixing partner is inpyrfluxam.
514d. A composition according to detail 3d wherein said mixing partner is ipconazole.
515d. A composition according to detail 3d wherein said mixing partner is isocycloseram.
516d. A composition according to detail 3d wherein said mixing partner is isofenphos.
517d. A composition according to detail 3d wherein said mixing partner is isoflucypram.
518d. A composition according to detail 3d wherein said mixing partner is isoprocarb.
519d. A composition according to detail 3d wherein said mixing partner is isoxathion.
520d. A composition according to detail 3d wherein said mixing partner is kadethrin.
521d. A composition according to detail 3d wherein said mixing partner is kinoprene.
522d. A composition according to detail 3d wherein said mixing partner is *lambda*-cyhalothrin.
523d. A composition according to detail 3d wherein said mixing partner is lepimectin.
524d. A composition according to detail 3d wherein said mixing partner is lufenuron.
525d. A composition according to detail 3d wherein said mixing partner is malathion.
526d. A composition according to detail 3d wherein said mixing partner is mancozeb.
527d. A composition according to detail 3d wherein said mixing partner is MCPA.
528d. A composition according to detail 3d wherein said mixing partner is mecarbam.
529d. A composition according to detail 3d wherein said mixing partner is mefenoxam.
530d. A composition according to detail 3d wherein said mixing partner is metaflumizone.
531d. A composition according to detail 3d wherein said mixing partner is metalaxyl.
532d. A composition according to detail 3d wherein said mixing partner is metconazole.
533d. A composition according to detail 3d wherein said mixing partner is methamidophos.
534d. A composition according to detail 3d wherein said mixing partner is methenamine.
535d. A composition according to detail 3d wherein said mixing partner is methidathion.
536d. A composition according to detail 3d wherein said mixing partner is methiocarb.
537d. A composition according to detail 3d wherein said mixing partner is methomyl.
538d. A composition according to detail 3d wherein said mixing partner is methoprene.
539d. A composition according to detail 3d wherein said mixing partner is methoxychlor.
540d. A composition according to detail 3d wherein said mixing partner is methoxyfenozide.
541d. A composition according to detail 3d wherein said mixing partner is metolcarb.
542d. A composition according to details detail 3d wherein said mixing partner is metsulfuron.
543d. A composition according to detail 3d wherein said mixing partner is mevinphos.
544d. A composition according to detail 3d wherein said mixing partner is milbemectin.
545d. A composition according to detail 3d wherein said mixing partner is monocrotophos.
546d. A composition according to detail 3d wherein said mixing partner is myclobutanil.
547d. A composition according to detail 3d wherein said mixing partner is naled.
548d. A composition according to detail 3d wherein said mixing partner is nicosulfuron.
549d. A composition according to detail 3d wherein said mixing partner is nitrapyrin.
550d. A composition according to detail 3d wherein said mixing partner is novaluron.
551d. A composition according to detail 3d wherein said mixing partner is noviflumuron.

552d. A composition according to detail 3d wherein said mixing partner is omethoate.
553d. A composition according to detail 3d wherein said mixing partner is oxamyl.
554d. A composition according to detail 3d wherein said mixing partner is oxathiapiprolin.
555d. A composition according to detail 3d wherein said mixing partner is oxazosulfyl.
556d. A composition according to detail 3d wherein said mixing partner is oxydemeton-methyl.
557d. A composition according to detail 3d wherein said mixing partner is parathion.
558d. A composition according to detail 3d wherein said mixing partner is parathion-methyl.
559d. A composition according to detail 3d wherein said mixing partner is penflufen.
560d. A composition according to detail 3d wherein said mixing partner is penthiopyrad.
561d. A composition according to detail 3d wherein said mixing partner is permethrin.
562d. A composition according to detail 3d wherein said mixing partner is phenothrin.
563d. A composition according to detail 3d wherein said mixing partner is phenthoate.
564d. A composition according to detail 3d wherein said mixing partner is phorate.
565d. A composition according to detail 3d wherein said mixing partner is phosalone.
566d. A composition according to detail 3d wherein said mixing partner is phosmet.
567d. A composition according to detail 3d wherein said mixing partner is phosphamidon.
568d. A composition according to detail 3d wherein said mixing partner is phoxim.
569d. A composition according to detail 3d wherein said mixing partner is picarbutrazox.
570d. A composition according to detail 3d wherein said mixing partner is picloram.
571d. A composition according to detail 3d wherein said mixing partner is picoxystrobin.
572d. A composition according to detail 3d wherein said mixing partner is pinoxaden.
573d. A composition according to detail 3d wherein said mixing partner is pirimicarb.
574d. A composition according to detail 3d wherein said mixing partner is pirimiphos-methyl.
575d. A composition according to detail 3d wherein said mixing partner is prallethrin.
576d. A composition according to detail 3d wherein said mixing partner is profenofos.
577d. A composition according to detail 3d wherein said mixing partner is propargite.
578d. A composition according to detail 3d wherein said mixing partner is propetamphos.
579d. A composition according to detail 3d wherein said mixing partner is propiconazole.
580d. A composition according to detail 3d wherein said mixing partner is propoxur.
581d. A composition according to detail 3d wherein said mixing partner is propyzamide.
582d. A composition according to detail 3d wherein said mixing partner is prothioconazole.
584d. A composition according to detail 3d wherein said mixing partner is pydiflumetofen.
585d. A composition according to detail 3d wherein said mixing partner is pyflubumide.
586d. A composition according to detail 3d wherein said mixing partner is pymetrozine.
587d. A composition according to detail 3d wherein said mixing partner is pyraclofos.
588d. A composition according to detail 3d wherein said mixing partner is pyraclostrobin.
589d. A composition according to detail 3d wherein said mixing partner is pyrethrum.
590d. A composition according to detail 3d wherein said mixing partner is pyridaben.
591d. A composition according to detail 3d wherein said mixing partner is pyridalyl.
592d. A composition according to detail 3d wherein said mixing partner is pyridaphenthion.
593d. A composition according to detail 3d wherein said mixing partner is pyrifluquinazon.
594d. A composition according to detail 3d wherein said mixing partner is pyrimidifen.
595d. A composition according to detail 3d wherein said mixing partner is pyriproxyfen.
596d. A composition according to detail 3d wherein said mixing partner is pyroxasulfone.
597d. A composition according to detail 3d wherein said mixing partner is quinalphos.
598d. A composition according to detail 3d wherein said mixing partner is resmethrin.
599d. A composition according to detail 3d wherein said mixing partner is rimsulfuron.
600d. A composition according to detail 3d wherein said mixing partner is rotenone.
601d. A composition according to detail 3d wherein said mixing partner is sedaxane.
602d. A composition according to detail 3d wherein said mixing partner is silafluofen.
603d. A composition according to detail 3d wherein said mixing partner is spidoxamat.
604d. A composition according to detail 3d wherein said mixing partner is spinetoram.
605d. A composition according to detail 3d wherein said mixing partner is spinosad.
606d. A composition according to detail 3d wherein said mixing partner is spirobudifen.
607d. A composition according to detail 3d wherein said mixing partner is spirodiclofen.
608d. A composition according to detail 3d wherein said mixing partner is spiromesifen.
609d. A composition according to detail 3d wherein said mixing partner is spiropidion.
610d. A composition according to detail 3d wherein said mixing partner is spirotetramat.

611d. A composition according to detail 3d wherein said mixing partner is sulfluramid.
612d. A composition according to detail 3d wherein said mixing partner is sulfotep.
613d. A composition according to detail 3d wherein said mixing partner is sulfoxaflor.
614d. A composition according to detail 3d wherein said mixing partner is *tau*-fluvalinate.
615d. A composition according to detail 3d wherein said mixing partner is tebuconazole.
618d. A composition according to detail 3d wherein said mixing partner is tebupirimfos.
619d. A composition according to detail 3d wherein said mixing partner is teflubenzuron.
620d. A composition according to detail 3d wherein said mixing partner is tefluthrin.
621d. A composition according to detail 3d wherein said mixing partner is temephos.
622d. A composition according to detail 3d wherein said mixing partner is terbufos.
623d. A composition according to detail 3d wherein said mixing partner is tetrachlorvinphos.
624d. A composition according to detail 3d wherein said mixing partner is tetradifon.
625d. A composition according to detail 3d wherein said mixing partner is tetramethrin.
626d. A composition according to detail 3d wherein said mixing partner is tetraniliprole.
627d. A composition according to detail 3d wherein said mixing partner is theta-cypermethrin.
628d. A composition according to detail 3d wherein said mixing partner is thiabendazole.
629d. A composition according to detail 3d wherein said mixing partner is thiamethoxam.
630d. A composition according to detail 3d wherein said mixing partner is thiocyclam.
631d. A composition according to detail 3d wherein said mixing partner is thiodicarb.
632d. A composition according to detail 3d wherein said mixing partner is thiofanox.
633d. A composition according to detail 3d wherein said mixing partner is thiometon.
634d. A composition according to detail 3d wherein said mixing partner is thiosultap-sodium.
635d. A composition according to detail 3d wherein said mixing partner is thiram.
636d. A composition according to detail 3d wherein said mixing partner is tiorantraniliprole.
637d. A composition according to detail 3d wherein said mixing partner is tioxazafen.
638d. A composition according to details detail 3d wherein said mixing partner is tolfenpyrad.
639d. A composition according to details detail 3d wherein said mixing partner is tralkoxydim.
640d. A composition according to detail 3d herein said mixing partner is tralomethrin.
641d. A composition according to detail 3d wherein said mixing partner is transfluthrin.
642d. A composition according to detail 3d wherein said mixing partner is triazamate.
643d. A composition according to detail 3d wherein said mixing partner is triazophos.
644d. A composition according to detail 3d wherein said mixing partner is trichlorfon.
645d. A composition according to detail 3d wherein said mixing partner is triclopyr.
646d. A composition according to detail 3d wherein said mixing partner is trifloxystrobin.
647d. A composition according to detail 3d wherein said mixing partner is triflumezopyrim.
648d. A composition according to detail 3d wherein said mixing partner is triflumuron.
649d. A composition according to detail 3d wherein said mixing partner is trimethacarb.
650d. A composition according to detail 3d wherein said mixing partner is triticonazole.
651d. A composition according to detail 3d wherein said mixing partner is vamidothion.
652d. A composition according to detail 3d wherein said mixing partner is XMC.
653d. A composition according to detail 3d wherein said mixing partner is xylylcarb.
654d. A composition according to detail 3d wherein said mixing partner is zeta-cypermethrin.
655d. A composition according to detail 3d wherein said mixing partner is 2,4-D.
656d. A composition according to detail 3d wherein said mixing partner is metarylpicoxamid.
657d. A composition according to detail 3d wherein said mixing partner is N-(4-chloro-2-(pyridin-3-yl)thiazol-5-yl)-N-ethyl-3-(methylsulfonyl)propanamide (AI-1)

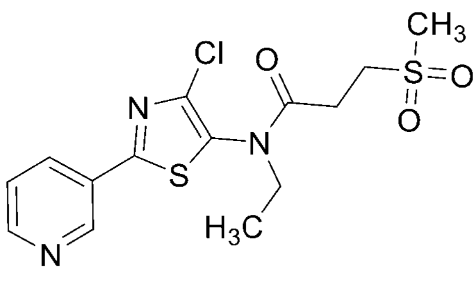

.

658d. A composition according to detail 3d wherein said mixing partner is N-(3-chloro-1-(pyridin-3-yl)-1H-pyrazol-4-yl)-2-(methylsulfonyl)propanamide (AI-2)

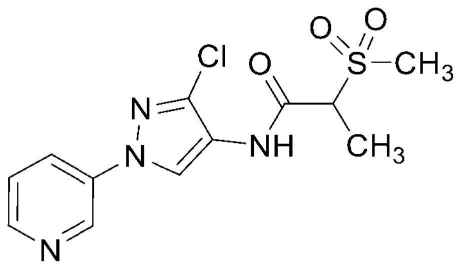

.

659d. A composition according to detail 3d wherein said mixing partner is heat-killed *burkholderia spp.*

660d. A composition according to any of the previous details from 351d though 659d wherein the weight ratio of F1 to said mixing partner is about 40000:1 to about 1:40000.

661d. A composition according to any of the previous details from 351d though 659d wherein the weight ratio of F1 to said mixing partner is about 10256:1 to about 1:10256.

662d. A composition according to any of the previous details from 351d though 659d wherein the weight ratio of F1 to said mixing partner is about 10000:1 to about 1:10000.

663d. A composition according to any of the previous details from 351d though 659d wherein the weight ratio of F1 to said mixing partner is about 2564:1 to about 1:2564.

664d. A composition according to any of the previous details from 351d though 659d wherein the weight ratio of F1 to said mixing partner is 1000:1 to about 1:1000.

665d. A composition according to any of the previous details from 351d though 659d wherein the weight ratio of F1 to said mixing partner is about 640:1 to about 1:640.

666d. A composition according to any of the previous details from 351d though 659d wherein the weight ratio of F1 to said mixing partner is 500:1 to about 1:500.

667d. A composition according to any of the previous details from 351d though 659d wherein the weight ratio of F1to said mixing partner is 100:1 to about 1:100.

668d. A composition according to any of the previous details from 351d though 659d wherein the weight ratio of F1 to said mixing partner is 50:1 to about 1:50.

669d. A composition according to any of the previous details from 351d though 659d wherein the weight ratio of F1 to said mixing partner is 20:1 to about 1:20.

670d. A composition according to any of the previous details from 351d though 659d wherein the weight ratio of F1 to said mixing partner is about 16:1 to about 1:16.

671d. A composition according to any of the previous details from 351d though 659d wherein the weight ratio of F1 to said mixing partner is 10:1 to about 1:10.

672d. A composition according to any of the previous details from 351d though 659d wherein the weight ratio of F1 to said mixing partner is 5:1 to about 1:5.

673d. A composition according to any of the previous details from 351d though 659d wherein the weight ratio of F1 to said mixing partner is 3:1 to about 1:3.

674d. A composition according to any of the previous details from 351d though 659d wherein the weight ratio of F1 to said mixing partner is 2:1 to about 1:2.

675d. A composition according to any of the previous details from 351d though 659d wherein the weight ratio of F1 to said mixing partner is 1:1.

676d. A composition according to any of the previous details from 351d though 659d wherein the weight ratio of F1 to said mixing partner is 1:20,000 to 20,000:1.

677d. A composition according to any of the previous details from 351d though 659d wherein the weight ratio of F1 to said mixing partner is 1:2,000 to 2,000:1.

678d. A composition according to any of the previous details from 351d though 659d wherein the weight ratio of F1 to said mixing partner is 1:160,000 to 160,000:1.

679d. A composition according to any of the previous details from 351d though 659d wherein the weight ratio of F1 to said mixing partner is 1:80,000 to 80,000:1.

680d. A composition according to any of the previous details from 351d though 659d wherein the weight ratio of F1 to said mixing partner is 1:16,000 to 16,000:1.

681d. A composition according to any of the previous details from 351d though 659d wherein the weight ratio of F1 to said mixing partner is 1:8,000 to 8,000:1.

682d. A composition according to any of the previous details from 351d though 659d wherein the weight ratio of F1 to

said mixing partner is 1:250 to 250:1.

683d. A composition according to any of the previous details from 351d though 659d wherein the weight ratio of F1 to said mixing partner is 1:25 to 25:1.

684d. A process to control pests in a locus by using a pesticidally effective amount of a pesticidal composition according to any of the previous details 351d though 683d.

685d. A process according to detail 684d wherein said pests are from Phyla Arthropoda, Mollusca, and/or Nematoda.

686d. A process according to detail 684d wherein said pests are ants, aphids, bed bugs, beetles, bristletails, caterpillars, cockroaches, crickets, earwigs, fleas, flies, grasshoppers, grubs, hornets, jassids, leafhoppers, lice, locusts, maggots, mealybugs, mites, moths, nematodes, plantbugs, planthoppers, psyllids, sawflies, scales, silverfish, slugs, snails, spiders, springtails, stink bugs, symphylans, termites, thrips, ticks, wasps, whiteflies, and/or wireworms.

687d. A process according to detail 684d wherein said pests are aphids, leafhoppers, moths, scales, thrips, psyllids, mealybugs, stinkbugs, and/or whiteflies.

688d. A process according to detail 684d wherein said pests are caterpillars, beetles, grasshoppers, and/or locusts.

689d. A composition according to detail 3d comprising:

**(A)** F1;

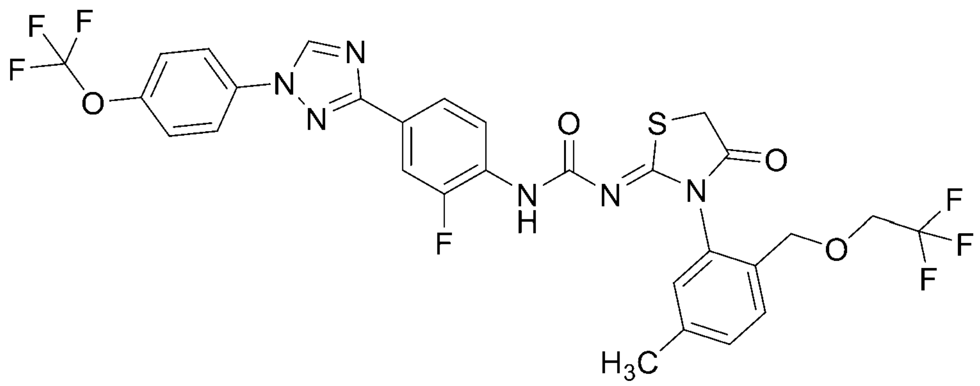

**F1**

**B)** a mixing partner selected from the group consisting of abamectin, acephate, acequinocyl, acetamiprid, acrinathrin, acynonapyr, afidopyropen, alanycarb, aldicarb, allethrin, *alpha*-cypermethrin, aminopyralid, amitraz, azadirachtin, azamethiphos, azinphos-ethyl, azinphos-methyl, azocyclotin, azoxystrobin, bendiocarb, benfuracarb, bensultap, benzoximate, benzpyrimoxan, *beta*-cyfluthrin, *beta*-cypermethrin, bifenazate, bifenthrin, bioallethrin, bioresmethrin, bistrifluron, broflanilide, bromopropylate, buprofezin, butocarboxim, butoxycarboxim, cadusafos, carbaryl, carbofuran, carbosulfan, carboxin, cartap hydrochloride, chinomethionat, chlorantraniliprole, chlordane, chlorethoxyfos, chlorfenapyr, chlorfenvinphos, chlorfluazuron, chlormephos, chlorpyrifos, chlorpyrifos-methyl, chromafenozide, clofentezine, clopyralid, cloquintocet, clothianidin, copper hydroxide, coumaphos, cyanophos, cyantraniliprole, cyclaniliprole, cyclobutrifluram, cycloprothrin, cycloxaprid, cyenopyrafen, cyflumetofen, cyfluthrin, cyhalothrin, cyhexatin, cymoxanil, cypermethrin, cyphenothrin, cyproflanilide, cyromazine, *d-cis-trans* allethrin, DDVP, deltamethrin, demeton-S-methyl, diafenthiuron, diazinon, dichlorvos, dicofol, dicrotophos, difenoconazole, diflovidazin, diflubenzuron, dimethoate, dimethylvinphos, dimpropyridaz, dinotefuran, disulfoton, DNOC, *d-trans* allethrin, emamectin, emamectin benzoate, empenthrin, endosulfan, EPN, esfenvalerate, ethaboxam, ethiofencarb, ethion, ethiprole, ethoprophos, etofenprox, famoxadone, famphur, fenamiphos, fenazaquin, fenbuconazole, fenbutatin oxide, fenitrothion, fenmezoditiaz, fenobucarb, fenoxycarb, fenpropathrin, fenpyroximate, fenthion, fenvalerate, fipronil, flazasulfuron, flonicamid, florasulam, fluacrypyrim, fluazaindolizine, flubendiamide, flucycloxuron, flucythrinate, fludioxonil, fluensulfone, flufenoxuron, flumethrin, flumioxazin, fluopyram, fluoxapiprolin, fluoxastrobin, flupyradifurone, flupyrimin, fluroxypyr, fluxametamide, fluxapyroxad, formetanate, fosthiazate, furathiocarb, *gamma-cyhalothrin,* glyphosate, halauxifen, halfenprox, halofenozide, heptenophos, hexaflumuron, hexythiazox, hydramethylnon, hydroprene, imazamox, imazapyr, imicyafos, imidacloprid, imiprothrin, indazapyroxamet, indoxacarb, inpyrfluxam, ipconazole, isocycloseram, isofenphos, isoflucypram, isoprocarb, isoxathion, kadethrin, kinoprene, *lambda*-cyhalothrin, lepimectin, lufenuron, malathion, mancozeb, MCPA, mecarbam, mefenoxam, metaflumizone, metalaxyl, metconazole, methamidophos, methenamine, methidathion, methiocarb, methomyl, methoprene, methoxychlor, methoxyfenozide, metolcarb, metsulfuron, mevinphos, milbemectin, monocrotophos, myclobutanil, naled, nicosulfuron,

nitrapyrin, novaluron, noviflumuron, omethoate, oxamyl, oxathiapiprolin, oxazosulfyl, oxydemeton-methyl, parathion, parathion-methyl, penflufen, penthiopyrad, permethrin, phenothrin, phenthoate, phorate, phosalone, phosmet, phosphamidon, phoxim, picarbutrazox, picloram, picoxystrobin, pinoxaden, pirimicarb, pirimiphos-methyl, prallethrin, profenofos, propargite, propetamphos, propiconazole, propoxur, propyzamide, prothioconazole, prothiofos, spiflumetofen, pyflubumide, pymetrozine, pyraclofos, pyraclostrobin, pyrethrum, pyridaben, pyridalyl, pyridaphenthion, pyrifluquinazon, pyrimidifen, pyriproxyfen, pyroxasulfone, quinalphos, resmethrin, rimsulfuron, rotenone, sedaxane, silafluofen, spidoxamat, spinetoram, spinosad, spirobudifen, spirodiclofen, spiromesifen, spiropidion, spirotetramat, sulfluramid, sulfotep, sulfoxaflor, *tau*-fluvalinate, tebuconazole, tebufenozide, tebufenpyrad, tebupirimfos, teflubenzuron, tefluthrin, temephos, terbufos, tetrachlorvinphos, tetradifon, tetramethrin, tetraniliprole, *theta*-cypermethrin, thiabendazole, thiamethoxam, thiocyclam, thiodicarb, thiofanox, thiometon, thiosultap-sodium, thiram, tiorantraniliprole, tioxazafen, tolfenpyrad, tralkoxydim, tralomethrin, transfluthrin, triazamate, triazophos, trichlorfon, triclopyr, trifloxystrobin, triflumezopyrim, triflumuron, trimethacarb, vamidothion, XMC, xylylcarb, *zeta*-cypermethrin, AI-1, AI-2, and 2,4-D.

690d. A pesticidal composition according to detail 1d wherein the mixing partner is selected from the group consisting of abamectin, acetamiprid, benzpyrimoxan, bifenthrin, chlorantraniliprole, chlorfenapyr, cyantraniliprole, cyclobutrifluram, dimepropyridaz, fipronil, flonicamid, fluoxapiprolin, flupyradifurone, flupyrimin, fluxametamide, imidacloprid, indoxacarb, isocycloseram, *lambda*-cyhalothrin, methoxyfenozide, pymetrozine, pyriproxyfen, spidoxamat, spinetoram, spinosad, spiropidion, spirotetramat, sulfoxaflor, thiamethoxam, and triflumezopyrim.

691d. A pesticidal composition according to detail 689d wherein the mixing partner is selected from the group consisting of azoxystrobin, copper hydroxide, difenoconazole, ethaboxam, fludioxonil, fluopyram, fluoxastrobin, fluxapyroxad, inpyrfluxam, ipconazole, isoflucypram, mefenoxam, mefentrifluconazole, metalaxyl, myclobutanil, oxathiapiprolin, picoxystrobin, propiconazole, prothiaconazole, pydiflumetofen, pyroclostrobin, sedaxane, tebuconazole, thiabendazole, thiram, titriconazole, trifloxystrobin, abamectin, acetamiprid, afidopyropen, AI-1, AI-2, benpyrimoxan, bifenthrin, broflanilide, chlorantraniliprole, chlorfenapyr, clothianidin, cyantraniliprole, deltamethrin, dinotefuran, fipronil, flonicamid, fluazaindolizine, fluensulfone, flupyradifurone, flupyrimin, fluxametamide, heat-killed Burkholderia spp. Strain A 396, imidacloprid, indoxacarb, lambda cyhalothrin, methoxyfenozide, oxamyl, pyriproxyfen, spinosad, spinetoram, spiromesifen, spirotetramet, sulfoxaflor, tetraniliprole, thiamethoxam, and triflumezopyrim.

692d. A pesticidal composition according to detail 690d wherein the mixing partner is selected from the group consisting of azoxystrobin, copper hydroxide, difenoconazole, ethaboxam, fludioxonil, fluopyram, fluoxastrobin, fluxapyroxad, inpyrfluxam, ipconazole, isoflucypram, mefenoxam, mefentrifluconazole, metalaxyl, myclobutanil, oxathiapiprolin, picoxystrobin, propiconazole, prothiaconazole, pydiflumetofen, pyroclostrobin, sedaxane, tebuconazole, thiabendazole, thiram, titriconazole and trifloxystrobin.

693d. A pesticidal composition according to detail 690d wherein the mixing partner is selected from the group consisting of abamectin, acetamiprid, afidopyropen, AI-1, AI-2, benpyrimoxan, bifenthrin, broflanilide, chlorantraniliprole, chlorfenapyr, clothianidin, cyantraniliprole, deltamethrin, dinotefuran, fipronil, flonicamid, fluazaindolizine, fluensulfone, flupyradifurone, flupyrimin, fluxametamide, heat-killed Burkholderia spp. Strain A 396, imidacloprid, indoxacarb, lambda cyhalothrin, methoxyfenozide, oxamyl, pyriproxyfen, spinosad, spinetoram, spiromesifen, spirotetramet, sulfoxaflor, tetraniliprole, thiamethoxam, and triflumezopyrim.

693d. A pesticidal composition according to details 1d-3d or 689d-693d, wherein ratio of F1 to the mixing partner B) is selected from 1:160,000 to 160,000:1, 1:80,000 to 80,000:1, 1:40,000 to 40,000:1, 1:20,000 to 20,000:1, 1:10,000 to 10,000:1, 1:8000 to 8000:1, 1:5000 to 5000:1, 1:2000 to 2000:1, 1:1000 to 1000:1, 1:500 to 500:1, 1:250 to 250:1, 1:100 to 100:1; 1:50 to 50:1, 1:25 to 25:1, 1:10 to 10:1, 1:5 to 5:1, and 1:1.

694d. A method of controlling pests that attack plants, plant propagation parts, plant habitats comprising step of contacting plants, plant propagation parts, plant habitats with a composition as described in details 1d-3d or 689d-693d.

695d. A method of controlling pests that attack plants, plant propagation parts, plant habitats comprising the step of contacting the pests or their habitats, food supply, breeding grounds, their locus with a composition as described in details 1d-3d or 689d-693d.

696d. A method of treating a seed, comprising step of contacting the seed with a composition as described in details 1d-3d, 689d, or 690d.

13. A seed treated with a composition as described in as described in details 1d-3d or 689d-693d.

In some aspects of the pesticidal compositions disclosed herein, the molecule having the structure of Formula One is F1. In some aspects, the pesticidal compositions disclosed herein comprise F1 and at least one active ingredient selected from AIGA-1. In some other aspects, the pesticidal compositions disclosed herein comprise F1 and at least two active ingredients selected from AIGA-1. In some other aspects, the pesticidal compositions disclosed herein comprise F1

and at least there active ingredients selected from AIGA-1. In certain other aspects, the pesticidal compositions disclosed herein comprise F1 and at least four active ingredients selected from AIGA-1. In some aspects, the pesticidal compositions disclosed herein comprise F1 and AI-2. In some other aspects, the pesticidal compositions disclosed herein comprise F1 and AI-1.

In some aspects, pesticidal compositions disclosed herein comprise F1 and another active ingredient selected from the group consisting of cyclobutrifluram, isocycloseram, spidoxamat, spiropidion, dimpropyridaz, and fenmezoditiaz. The ratio of F1 to any of these ingredients is in the ratio of 1:100 to 100: 1.

In some aspects, pesticidal compositions disclosed herein comprise F1 and cyclobutrifluram. The ratio of F1 to cyclobutrifluram is 1:200 to 200:1. Enhanced efficacy when F1 is mixed with cyclobutrifluram may be expected at a certain ratio within this range. "Enhanced efficacy" in this context means an efficacy greater than expected efficay as calculated by the Colby equation.

In some aspects, pesticidal compositions disclosed herein comprise F1 and isocycloseram. The ratio of F1 to isocycloseram is 1:200 to 200: 1. Enhanced efficacy when F1 is mixed with isocycloseram may be expected at a certain ratio within this range. "Enhanced efficacy" in this context means an efficacy greater than expected efficay as calculated by the Colby equation..

In some aspects, pesticidal compositions disclosed herein comprise F1 and spidoxamat. The ratio of F1 to spidoxamat is 1:200 to 200:1. Enhanced efficacy when F1 is mixed with spidoxamat may be expected at a certain ratio within this range. "Enhanced efficacy" in this context means an efficacy greater than expected efficay as calculated by the Colby equation..

In some aspects, pesticidal compositions disclosed herein comprise F1 and spiropidion The ratio of F1 to spiropidion is 1:200 to 200:1. Enhanced efficacy when F1 is mixed with spiropidion may be expected at a certain ratio within this range. "Enhanced efficacy" in this context means an efficacy greater than expected efficay as calculated by the Colby equation..

In some aspects, pesticidal compositions disclosed herein comprise F1 and dimpropyridaz. The ratio of F1 to dimpropyridaz is 1:200 to 200: 1. Enhanced efficacy when F1 is mixed with dimpropyridaz may be expected at a certain ratio within this range. "Enhanced efficacy" in this context means an efficacy greater than expected efficay as calculated by the Colby equation..

In some aspects, pesticidal compositions disclosed herein comprise F1 and fenmezoditiaz. The ratio of F1 to fenmezoditiaz is 1:200 to 200:1. Enhanced efficacy when F1 is mixed with fenmezoditiaz may be expected at a certain ratio within this range. "Enhanced efficacy" in this context means an efficacy greater than expected efficay as calculated by the Colby equation.

In some aspects, the pesticidal compositions disclosed herein comprise F1 and at least one active ingredient selected from AIGA-2. In some other aspects, the pesticidal compositions disclosed herein comprise F1 and at least two active ingredients selected from AIGA-2. In some other aspects, the pesticidal compositions disclosed herein comprise F1 and at least there active ingredients selected from AIGA-2. In certain other aspects, the pesticidal compositions disclosed herein comprise F1 and at least four active ingredients selected from AIGA-2.

In certain aspects, combinations of F1 with at least one other active can be used for any of foliar, seed, soil or furrow treatments. In some preferred aspects combinations of F1 with at least one other active can be used for seed treatments. In some aspects, such seed treatment mixtures can comprise F1 and at least two actives. In some other aspects, such seed treatment mixtures can comprise F1 and at least three actives. In certain other aspects, such seed treatment mixtures can comprise F1 and at least four actives.

In some aspects, combinations of F1 and other actives can be any one of the following:

1. F1, imidacloprid, metalaxyl, picoxystrobin, ethaboxam, ipconazole, oxathiapiprolin
2. F1, metalaxyl, picoxystrobin, ethaboxam, ipconazole, oxathiapiprolin
3. F1, mefenoxam, picoxystrobin, ethaboxam, ipconazole, oxathiapiprolin
4. F1, pydiflumetofen, oxathiapiprolin
5. F1, imidacloprid, isocycloseram, picoxystrobin, ethaboxam, ipconazole, oxathiapiprolin
6. F1, isocycloseram, picoxystrobin, ethaboxam, ipconazole, oxathiapiprolin
7. F1, cyclobutrifluram, picoxystrobin, ethaboxam, ipconazole, oxathiapiprolin
8. F1, fludioxonil, mefenoxam, thiabendazole, azoxystrobin
9. F1, inpyrfluxam, ethaboxam, metalaxyl
10. F1, prothioconazole, fluoxastrobin, metalaxyl
11. F1, fludioxonil, thiabendazole, azoxystrobin, mefenoxam, sedaxane
12. F1, penflufen, prothioconazole, metalaxyl
13. F1, difenaconazole, inpyrfluxam, ipconazole, mefenoxam

Aspect A:

One aspect of pesticidal compositions disclosed herein is a pesticidal composition comprising:

(A) F1;

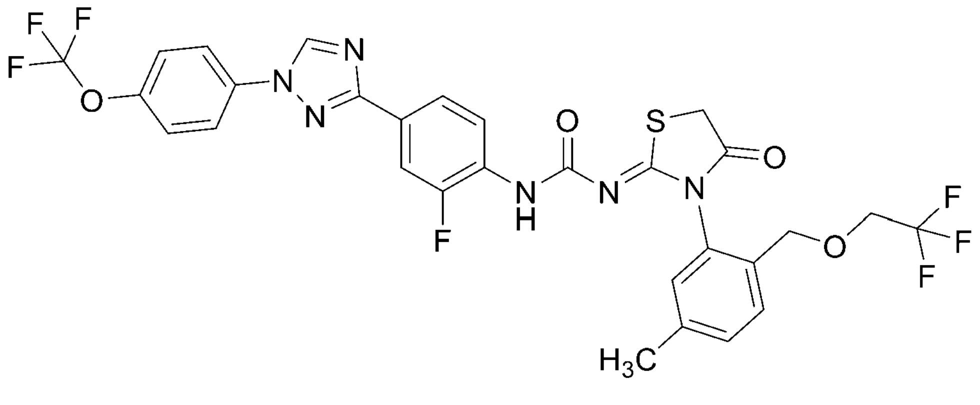

**F1**

**B)** a mixing partner selected from the group consisting of abamectin, acephate, acequinocyl, acetamiprid, acrinathrin, acynonapyr, afidopyropen, alanycarb, aldicarb, allethrin, *alpha*-cypermethrin, aminopyralid, amitraz, azadirachtin, azamethiphos, azinphos-ethyl, azinphos-methyl, azocyclotin, azoxystrobin, bendiocarb, benfuracarb, bensultap, benzoximate, benzpyrimoxan, *beta*-cyfluthrin, *beta*-cypermethrin, bifenazate, bifenthrin, bioallethrin, bioresmethrin, bistrifluron, broflanilide, bromopropylate, buprofezin, butocarboxim, butoxycarboxim, cadusafos, carbaryl, carbofuran, carbosulfan, carboxin, cartap hydrochloride, chinomethionat, chlorantraniliprole, chlordane, chlorethoxyfos, chlorfenapyr, chlorfenvinphos, chlorfluazuron, chlormephos, chlorpyrifos, chlorpyrifos-methyl, chromafenozide, clofentezine, clopyralid, cloquintocet, clothianidin, copper hydroxide, coumaphos, cyanophos, cyantraniliprole, cyclaniliprole, cyclobutrifluram, cycloprothrin, cycloxaprid, cyenopyrafen, cyflumetofen, cyfluthrin, cyhalothrin, cyhexatin, cymoxanil, cypermethrin, cyphenothrin, cyproflanilide, cyromazine, *d-cis-trans* allethrin, DDVP, deltamethrin, demeton-S-methyl, diafenthiuron, diazinon, dichlorvos, dicofol, dicrotophos, difenoconazole, diflovidazin, diflubenzuron, dimethoate, dimethylvinphos, dimpropyridaz, dinotefuran, disulfoton, DNOC, *d-trans* allethrin, emamectin, emamectin benzoate, empenthrin, endosulfan, EPN, esfenvalerate, ethaboxam, ethiofencarb, ethion, ethiprole, ethoprophos, etofenprox, famoxadone, famphur, fenamiphos, fenazaquin, fenbuconazole, fenbutatin oxide, fenitrothion, fenmezoditiaz, fenobucarb, fenoxycarb, fenpropathrin, fenpyroximate, fenthion, fenvalerate, fipronil, flazasulfuron, flonicamid, florasulam, fluacrypyrim, fluazaindolizine, flubendiamide, flucycloxuron, flucythrinate, fludioxonil, fluensulfone, flufenoxuron, flumethrin, flumioxazin, fluopyram, fluoxapiprolin, fluoxastrobin, flupyradifurone, flupyrimin, fluroxypyr, fluxametamide, fluxapyroxad, formetanate, fosthiazate, furathiocarb, *gamma*-cyhalothrin, glyphosate, halauxifen, halfenprox, halofenozide, heptenophos, hexaflumuron, hexythiazox, hydramethylnon, hydroprene, imazamox, imazapyr, imicyafos, imidacloprid, imiprothrin, indazapyroxamet, indoxacarb, inpyrfluxam, ipconazole, isocycloseram, isofenphos, isoflucypram, isoprocarb, isoxathion, kadethrin, kinoprene, *lambda*-cyhalothrin, lepimectin, lufenuron, malathion, mancozeb, MCPA, mecarbam, mefenoxam, metaflumizone, metalaxyl, metconazole, methamidophos, methenamine, methidathion, methiocarb, methomyl, methoprene, methoxychlor, methoxyfenozide, metolcarb, metsulfuron, mevinphos, milbemectin, monocrotophos, myclobutanil, naled, nicosulfuron, nitrapyrin, novaluron, noviflumuron, omethoate, oxamyl, oxathiapiprolin, oxazosulfyl, oxydemeton-methyl, parathion, parathion-methyl, penflufen, penthiopyrad, permethrin, phenothrin, phenthoate, phorate, phosalone, phosmet, phosphamidon, phoxim, picarbutrazox, picloram, picoxystrobin, pinoxaden, pirimicarb, pirimiphos-methyl, prallethrin, profenofos, propargite, propetamphos, propiconazole, propoxur, propyzamide, prothioconazole, prothiofos, spiflumetofen, pyflubumide, pymetrozine, pyraclofos, pyraclostrobin, pyrethrum, pyridaben, pyridalyl, pyridaphenthion, pyrifluquinazon, pyrimidifen, pyriproxyfen, pyroxasulfone, quinalphos, resmethrin, rimsulfuron, rotenone, sedaxane, silafluofen, spidoxamat, spinetoram, spinosad, spirobudifen, spirodiclofen, spiromesifen, spiropidion, spirotetramat, sulfluramid, sulfotep, sulfoxaflor, *tau*-fluvalinate, tebuconazole, tebufenozide, tebufenpyrad, tebupirimfos, teflubenzuron, tefluthrin, temephos, terbufos, tetrachlorvinphos, tetradifon, tetramethrin, tetraniliprole, *theta*-cypermethrin, thiabendazole, thiamethoxam, thiocyclam, thiodicarb, thiofanox, thiometon, thiosultap-sodium, thiram, tiorantraniliprole, tioxazafen, tolfenpyrad, tralkoxydim, tralomethrin, transfluthrin, triazamate, triazophos, trichlorfon, triclopyr, trifloxystrobin, triflumezopyrim, triflumuron, trimethacarb, vamidothion, XMC, xylylcarb, *zeta*-cypermethrin, AI-1, AI-2, and 2,4-D.

Aspect B

Another aspect is a a pesticidal composition comprising F1 and a mixing parter, wherein the mixing partner is selected from the group consisting of abamectin, acetamiprid, benzpyrimoxan, bifenthrin, chlorantraniliprole, chlorfenapyr, cyantraniliprole, cyclobutrifluram, dimepropyridaz, fipronil, flonicamid, fluoxapiprolin, flupyradifurone, flupyrimin, fluxametamide, imidacloprid, indoxacarb, isocycloseram, *lambda*-cyhalothrin, methoxyfenozide, pymetrozine, pyriproxyfen, spidoxamat, spinetoram, spinosad, spiropidion, spirotetramat, sulfoxaflor, thiamethoxam, and triflumezopyrim.

Aspect C

Another aspect is a pesticidal composition comprising F1 and a mixing parter wherein the mixing partner is selected from the group consisting of azoxystrobin, copper hydroxide, difenoconazole, ethaboxam, fludioxonil, fluopyram, fluoxastrobin, fluxapyroxad, inpyrfluxam, ipconazole, isoflucypram, mefenoxam, mefentrifluconazole, metalaxyl, myclobutanil, oxathiapiprolin, picoxystrobin, propiconazole, prothiaconazole, pydiflumetofen, pyroclostrobin, sedaxane, tebuconazole, thiabendazole, thiram, titriconazole, trifloxystrobin, abamectin, acetamiprid, afidopyropen, AI-1, AI-2, benpyrimoxan, bifenthrin, broflanilide, chlorantraniliprole, chlorfenapyr, clothianidin, cyantraniliprole, deltamethrin, dinotefuran, fipronil, flonicamid, fluazaindolizine, fluensulfone, flupyradifurone, flupyrimin, fluxametamide, heat-killed Burkholderia spp. Strain A 396, imidacloprid, indoxacarb, lambda cyhalothrin, methoxyfenozide, oxamyl, pyriproxyfen, spinosad, spinetoram, spiromesifen, spirotetramet, sulfoxaflor, tetraniliprole, thiamethoxam, and triflumezopyrim.

Aspect D

Another aspect is a pesticidal composition comprising F1 and a mixing parter wherein the mixing partner is selected from the group consisting of azoxystrobin, copper hydroxide, difenoconazole, ethaboxam, fludioxonil, fluopyram, fluoxastrobin, fluxapyroxad, inpyrfluxam, ipconazole, isoflucypram, mefenoxam, mefentrifluconazole, metalaxyl, myclobutanil, oxathiapiprolin, picoxystrobin, propiconazole, prothiaconazole, pydiflumetofen, pyroclostrobin, sedaxane, tebuconazole, thiabendazole, thiram, titriconazole and trifloxystrobin.

Aspect E

Another aspect is a pesticidal composition comprising F1 and a mixing parter wherein the mixing partner is selected from the group consisting of abamectin, acetamiprid, afidopyropen, AI-1, AI-2, benpyrimoxan, bifenthrin, broflanilide, chlorantraniliprole, chlorfenapyr, clothianidin, cyantraniliprole, deltamethrin, dinotefuran, fipronil, flonicamid, fluazaindolizine, fluensulfone, flupyradifurone, flupyrimin, fluxametamide, heat-killed Burkholderia spp. Strain A 396, imidacloprid, indoxacarb, lambda cyhalothrin, methoxyfenozide, oxamyl, pyriproxyfen, spinosad, spinetoram, spiromesifen, spirotetramet, sulfoxaflor, tetraniliprole, thiamethoxam, and triflumezopyrim.

In any of the pesticidal composition according to aspects A-E , the ratio of F1 to the mixing partner B) is selected from 1:160,000 to 160,000:1, 1:80,000 to 80,000:1, 1:40,000 to 40,000:1, 1:20,000 to 20,000:1, 1:10,000 to 10,000:1, 1:8000 to 8000:1, 1:5000 to 5000:1, 1:2000 to 2000:1, 1:1000 to 1000:1, 1:500 to 500:1, 1:250 to 250:1, 1:100 to 100:1; 1:50 to 50:1, 1:25 to 25:1, 1:10 to 10:1, 1:5 to 5:1, and 1:1.

Disclosed herein is also a method of controlling pests that attack plants, plant propagation parts, plant habitats comprising step of contacting plants, plant propagation parts, plant habitats with a composition of aspects A-E.

Also disclosed herein is a method of controlling pests that attack plants, plant propagation parts, plant habitats comprising the step of contacting the pests or their habitats, food supply, breeding grounds, their locus with a composition of aspects A-E.

Disclosed herein is a method of treating a seed, comprising step of contacting the seed with a composition of aspects A-E.

Disclosed herein is also a seed treated with a composition of aspects A-E.

These combinations that contain more than two actives, can be mixed in appropriate ratio such that all actives together with F1 can show enhanced effect on activity than when they are used alone. For example, a certain mixture of F1 that contain more than two actives, F1, inpyrfluxam, ethaboxam and metalaxyl may show enhanced activity with respect to the combination of the actives when calculated using the Colby equation (that is, the expected efficacy is calculated using the Colby equation, and compared with the observed efficacy; if the observed efficacy is greater than the expected efficacy calculated using the Colby equation, then the composition shows enhanced efficacy) or any other manner, in comparison with the activity of any of the actives alone. Besides providing an enhanced activity, these combinations may provide further surprising advantageous properties. For example, desirable degradable properties, improved toxicological and/or ecotoxicological profile, improved properties of useful plants including emergence, crop yields, more developed root system, tillering increase, increase in plant heights, greenness, bigger leaf blade, less dead basal leaves, stronger tillers,

earlier flowing, earlier grain maturity, increases shoot growth, improved essential nutrient content, improved plant vigor and early germination.

While enhanced activities of the disclosed compositions herein are unexpected and surprising, such activity also extends the range of action of F1 alone or any of the actives alone in two ways: the rates of application of F1 and any of the other actives are lowered while the activity remains good or better, where the mixture still achieves a high degree of pest control even when the two individual components have become ineffective on their own at such a low application rate range. In addition, a substantial broadening of the spectrum of the pests that can be controlled may be achieved with such mixtures.

## BIOLOGICAL ASSAYS

The following bioassays were conducted against green peach aphid *(Myzus persicae),* sweet potato whitefly *(Bemisia tabaci),* western flower thrips *(Frankliniella occidentalis),* brown planthopper (*Nilaparvata lugens),* neotropical brown stink bug *(Euschistus heros),* corn earworm *(Helicoverpa zea*), fall armyworm (*Spodoptera frugiperda*), and soybean looper (*Chrysodeixis includens*), which are good indicator species for a broad range of agricultural pests. The results with these indicator species show the broad usefulness of various pesticides (also referred to as active ingredients) mixed with molecules of Formula One in controlling pest insects.

### Bioassay 1: Green Peach Aphid (*Myzus persicae,* MYZUPE, "GPA").

Green peach aphid is the most significant aphid pest of peach trees, causing decreased growth, shriveling of the leaves, and the death of various tissues. It is also hazardous because it acts as a vector for the transport of plant viruses, such as potato virus Y and potato leafroll virus to members of the nightshade/potato family *Solanaceae,* and various mosaic viruses to many other food crops. GPA attacks such plants as broccoli, burdock, cabbage, carrot, cauliflower, daikon, eggplant, green beans, lettuce, macadamia, papaya, peppers, sweet potatoes, tomatoes, watercress, and zucchini, among other crops. GPA also attacks many ornamental crops such as carnation, chrysanthemum, flowering white cabbage, poinsettia, and roses. GPA has developed resistance to many pesticides. Currently, it is a pest that has the third largest number of reported cases of insect resistance (Sparks et al.). Consequently, because of the above factors, control of this pest is important. Furthermore, molecules that control GPA, which is a sap-feeding pest, are useful in controlling other pests that feed on the sap from plants.

Stock solutions of F1 and various active ingredients were prepared initially at a concentration of 4 milligrams per milliliter (mg/mL) for F1 and 0.1 mg/mL for the active ingredients, respectively, using a 1:1 mixture of acetone:methanol as a diluent. Stock solutions were prepared with F1 as well as for each of the active ingredients individually. Test solutions were prepared from the stock solutions. Test solutions were prepared containing F1, the individual active ingredients, and mixtures of F1 with each of the active ingredients. The test solutions for F1 and the individual active ingredients were prepared by adding 750 microliters (μL) of stock solution to a 25 mL glass vial, then adding 750 μL of 1:1 acetone:methanol solvent, followed by the addition of 13.5 mL water with 0.025% Tween® 20 to create a 0.0005% (weight/volume (w/v)) solution. The test solutions containing mixtures of F1, and the individual active ingredients were prepared by adding 750 μL of the active ingredient stock solution to a 25 mL glass vial, followed by 750 μL of the F1 stock solution, then by the addition of 13.5 mL water with 0.025% Tween® 20 to create a test solution containing 0.0005% (w/v) F1 and 0.0005% (w/v) of the active ingredient. Each test solution was serially diluted to create desired doses of test solutions (0.0005% (w/v), 0.000125% (w/v), 0.00003125% (w/v), 0.0000078% (w/v), 0.00000195% (w/v), and 0.0000005% (w/v)). In test solutions containing mixtures of F1 and the active ingredients, the active ingredients were diluted as described above, but the concentration of F1 was held constant (0.04% (w/v)).

The test solutions were tested against GPA using the following procedure: cabbage seedlings, grown in 3-inch pots with 2-3 small (3-5 centimeter (cm)) true leaves, were used as test substrate. The seedlings were infested with 20-50 GPA (wingless adult and nymph stages) one day prior to chemical application. Four pots with individual seedlings were used for each treatment. A hand-held aspirator-type sprayer was used for spraying a solution to both sides of cabbage leaves until runoff. Reference plants (solvent check) were sprayed with the diluent only (0.025% Tween® 20 and 10% acetone:methanol (1:1) in water). Treated plants were held in a holding room for three days at approximately 25 °C and ambient relative humidity (RH about 20% to about 45%) prior to grading. Evaluation was conducted by counting the number of live aphids per plant under a microscope three days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live aphids on solvent check plants and Y = No. of live aphids on treated plants. In Table B1 the "Expected

% Control" was calculated using the method described in Colby S. R., Weeds, 1967, 15, 20-22. The results are indicated in Table 1 in the Table Section.

**Bioassay 2: Sweet Potato Whitefly (*Bemisia tabaci,* BEMITA, "SPW").**

Sweet potato whitefly is a major destructive pest to cotton. It is also a serious pest to many vegetable crops, such as melons, cole crops, tomatoes, and head lettuce, as well as ornamental plants. SPW causes damage both through direct feeding damage and virus transmission. SPW is a sap-feeding insect, and its feeding removes nutrients from the plant. This may result in stunted growth, defoliation, reduced yields, and boll shed in cotton. SPW produces large quantities of honeydew, which supports the growth of sooty molds on the plant leaves. SPW is also a vector for viruses, such as cotton leaf crumple virus and tomato yellow leaf curl virus.

Stock solutions of F1 and one or more active ingredients were prepared at a concentration of 0.2 mg/mL using acetone as a diluent. Stock solutions were prepared with F1 as well as for each of the active ingredients individually. Test solutions were prepared from the stock solutions. Test solutions were prepared containing F1, the individual active ingredients, and mixtures of F1 with each of the active ingredients. The test solutions for F1 and the individual active ingredients were prepared by adding 500 μL of stock solution to a 25 mL glass vial, then adding 500 μL of acetone, followed by the addition of 9 mL water with 0.025% Tween® 20 to create a 0.001% (w/v) solution. The test solutions containing mixtures of F1, and the individual active ingredients were prepared by adding 500 μL of the active ingredient stock solution to a 25 mL glass vial, followed by 500 μL of the F1 stock solution, then by the addition of 9 mL water with 0.025% Tween® 20 to create a test solution containing 0.001% (w/v) F1 and 0.001% (w/v) of the active ingredient. Each test solution was serially diluted to create desired doses of test solutions (0.001% (w/v), 0.0001% (w/v), 0.00001% (w/v), 0.000001% (w/v), 0.0000001% (w/v), and 0.00000001% (w/v)).

The test solutions were tested against SPW using the following procedure: Cotton seedlings grown in 3-inch pots, pruned so that only one true leaf remained, were used as test substrate. Adult *B. tabaci* were allowed to colonize the cotton plants and lay eggs for 24 hours after which all adults were removed from the plants using compressed air. Plants were monitored for egg development, and when crawler emergence was underway (>25% emergence based on visual examination using a microscope), the plants were sprayed using the test solutions and methods described above for green peach aphids (GPA). Treated plants were held in a holding room at approximately 25 °C and ambient relative humidity (RH) prior to grading. Evaluation was conducted by counting the number of developed 2-3 instar nymphs per plant under a microscope 7-9 days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check plants and Y = No. of live nymphs on treated plants. In Table B2 the "Expected % Control" was calculated using the method described in Colby S. R., Weeds, 1967, 15, 20-22. The results are indicated in Table 2 in the Table Section.

**Bioassay 3: Western Flower Thrips (*Frankliniella occidentalis,* FRANOC, "WFT").**

Western flower thrips is a major destructive pest on a wide variety of commercially relevant plant species (over 500 species of host plants have been documented) including many fruits, vegetables, and ornamental plants. WFT is a sap-feeding insect which feeds on a variety of plant parts, destroying plant cells as they feed. WFT is also known to act as a vector for plant diseases and is one of the major vectors of tomato spotted wilt virus.

Stock solutions of F1 and various active ingredients were prepared initially at a concentration of 0.1 mg/mL using acetone as a diluent. Stock solutions were prepared with F1 as well as for each of the active ingredients individually. Test solutions were prepared from the stock solutions. Test solutions were prepared containing F1, the individual active ingredients, and mixtures of F1 with each of the active ingredients. The test solutions for F1 and the individual active ingredients were prepared by adding 500 μL of stock solution to a 25 mL glass vial, then adding 500 μL of acetone, followed by the addition of 9 mL water with 0.025% Tween® 20 to create a 0.0005% (w/v) solution. The test solutions containing mixtures of F1, and the individual active ingredients were prepared by adding 500 μL of the active ingredient stock solution to a 25 mL glass vial, followed by 500 μL of the F1 stock solution, then by the addition of 9 mL water with 0.025% Tween® 20 to create a test solution containing 0.0005% (w/v) F1 and 0.0005% (w/v) of the active ingredient. Each test solution was serially diluted to create desired doses of test solutions (0.0005% (w/v), 0.000125% (w/v), 0.00003125% (w/v), 0.0000078% (w/v), and 0.00000195% (w/v)).

The test solutions were tested against WFT using the following procedure: Leaf discs (2.7 cm in diameter) were cut from the true leaves of cotton plants. Leaf discs were dipped into the test solutions and shaken to ensure complete

coverage of the leaf disc and then placed in Millipore® PetriSlides containing a filter paper disc. Treated leaf discs were air dried for approximately 1 hour. Each leaf disc was infested with 5 WFT (9-10-day old nymphs) by placement on each leaf disc, and the PetriSlides were capped to prevent escape. Each treatment was replicated three times and the test treatments were held at approximately 26 °C and ambient relative humidity (RH) prior to grading. Reference discs (solvent check) were treated with the diluent only. Evaluation was conducted by counting the number of live WFT under magnification 3 days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check leaf discs and Y = No. of live nymphs on treated leaf discs. In Table B3 the "Expected % Control" was calculated using the method described in Colby S. R., Weeds, 1967, 15, 20-22. The results are indicated in Table 3 in the Table Section.

**Bioassay 4: Corn earworm *(Helicoverpa zea,* HELIZE, "CEW"), Fall Armyworm (*Spodoptera frugiperda,* LAPHFR, "FAW"), and Soybean Looper (*Chrysodeixis includens,* PSEPIN, "SBL").**

Corn earworm is one of the costliest crop pests in North America, typically attacking the harvested portion of many valuable crops. In addition to corn and tomato, CEW larvae also attack artichoke, asparagus, cabbage, cantaloupe, collard, cowpea, cucumber, eggplant, lettuce, lima bean, melon, okra, pea, pepper, potato, pumpkin, snap bean, spinach, squash, sweet potato, and watermelon. Other crops injured by corn earworm include alfalfa, clover, cotton, flax, oat, millet, rice, sorghum, soybean, sugarcane, sunflower, tobacco, vetch, and wheat. Fall armyworm is a global pest of many agriculturally important plant species, including alfalfa, barley, buckwheat, cotton, clover, corn, oat, millet, peanut, rice, ryegrass, sorghum, sugar beet, soybean, sugarcane, timothy, tobacco, wheat, and many more. The larvae of FAW damage plants by feeding on the foliage and fruit, resulting in yield loss and even death of the host plants. Similarly, soybean looper is a common and devastating pest of soybean, but it also feeds on other agronomic crops such as peanut, cotton, and corn, as well as vegetable crops including peas, crucifers, sweet potatoes, tomatoes, bell peppers, bush beans, cucumber, and watermelon, among others. CEW, FAW, and SBL are good representatives of damaging larval lepidopteran pests.

Stock solutions of F1 and one or more active ingredients were prepared at a concentration of 0.4 mg/mL for F1 and 4 mg/mL for the active ingredients, using a 9:1 mixture of acetone:water as a diluent. Stock solutions were prepared with F1 as well as for each of the active ingredients individually. Test solutions were prepared from the stock solutions. Test solutions were prepared containing F1, the individual active ingredients, and mixtures of F1 with each of the active ingredients. The test solution for F1 was prepared by adding 500 μL of the stock solution to a 25 mL glass vial, then adding 500 μL of a 9:1 mixture of acetone:water. The individual active ingredients were prepared by adding 500 μL of stock solution to a 25 mL glass vial, then adding 500 μL of a 9:1 mixture of acetone:water. The test solutions containing mixtures of F1, and the individual active ingredients were prepared by adding 500 μL of the active ingredient stock solution to a 25 mL glass vial, followed by 500 μL of the F1 stock solution, creating a test solution containing 0.04% (w/v) of F1 and 0.4% (w/v) of the active ingredient. Each test solution was serially diluted to create desired doses of test solutions (F1 at 0.04% (w/v), 0.004% (w/v), 0.0004% (w/v), 0.00004% (w/v), 0.000004% (w/v), and 0.0000004% (w/v) and active ingredients at 0.4% (w/v), 0.04% (w/v), 0.004% (w/v), 0.0004% (w/v), 0.00004% (w/v), and 0.000004% (w/v)).

The test solutions were tested against CEW, FAW, and SBL using the following procedure: an artificial lepidopteran diet (Multispecies Lepidopteran Diet, Southland Products) was distributed in 128-cell bioassay trays (Frontier Agricultural Sciences™). 50 μL of test solution was pipetted into a cell in the bioassay tray. (The test solution doses of 0.04% (w/v), 0.004% (w/v), 0.0004% (w/v), 0.00004% (w/v), 0.000004% (w/v), and 0.0000004% (w/v) translated to concentrations of 5, 0.5, 0.05, 0.005, 0.0005, and 0.00005 $\mu g/cm^2$ on the diet, respectively.) A reference treatment (solvent check) was treated with the diluent only. Each treatment was replicated 8 times for each species. A 2nd instar CEW, FAW, or SBL larva was placed on top of the diet in each cell and was contained with a clear perforated adhesive lid. Test trays were held at approximately 26 °C and ambient relative humidity (RH) prior to grading. After 5 days, the number of live larvae were recorded from each cell and percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live larvae on solvent check and Y = No. of live larvae on treated diet. In Table B4 the "Expected % Control" was calculated using the method described in Colby S. R., Weeds, 1967, 15, 20-22. The results are indicated in Table 4 in

the Table Section.

**Bioassay 5: Neotropical Brown Stink Bug *(Euschistus heros,* EUSCHE, "BSB").**

The neotropical brown stink bug is a major pest of soybean, cotton, sunflower, and other economically important crops. BSB is a sap-feeding insect that damages plant cells and seeds during feeding. Feeding on plant seeds can reduce the viability of seeds and reduce yield.

Stock solutions of F1 and one or more active ingredients were prepared at a concentration of 0.2 mg/mL using dimethyl sulfoxide (DMSO) as a solvent. Stock solutions were prepared with F1 as well as for each of the active ingredients individually. Test solutions were prepared from the stock solutions. Test solutions were prepared containing F1, the individual active ingredients, and mixtures of F1 with each of the active ingredients. The test solution for F1 and the individual active ingredients were prepared by adding 30 μL of the stock solution to a single well of a 96 well plate, then adding 30 μL of DMSO, followed by the addition of 140 μL of a 2:1 mixture of acetone:water as a diluent to create a 0.03% (w/v) solution. The test solutions containing mixtures of F1 and the individual active ingredients were prepared by adding 30 μL of the F1 stock solution to a single well of a 96 well plate, then adding 30 μL of the individual active ingredient stock solution to the same well, followed by the addition of 140 μL of a 2:1 mixture of acetone:water as a diluent to create a test solution containing 0.03% (w/v) of F1 and 0.03% (w/v) of the active ingredient. Each test solution was serially diluted to create desired doses of test solutions (0.03% (w/v), 0.0075% (w/v), 0.001875% (w/v), 0.000469% (w/v), 0.000117% (w/v), and 0.000029% (w/v)).

The test solutions were tested against BSB using the following procedure: an artificial agar diet (2% agar, 12% sucrose) was distributed in 48 well plastic plates (Fisher Scientific™). 25 μL of test solution was pipetted into a cell in the bioassay tray. (The test solution doses of 0.03% (w/v), 0.0075% (w/v), 0.001875% (w/v), 0.000469% (w/v), 0.000117% (w/v), and 0.000029% (w/v) translated to concentrations of 36, 9, 2.25, 0.5625, 0.140625, and 0.035156 $\mu g/cm^2$ on the diet, respectively.) A reference treatment (solvent check) was treated with the diluent only. Each treatment was replicated three times and the test treatments were held at approximately 26 °C and ambient relative humidity (RH) prior to grading. Three to five BSB nymphs were added to and contained in each well with a clear perforated adhesive lid. The total number of living BSB nymphs was recorded four days after application. Scoring was based off the total number of living nymphs out of all three replicates. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check and Y = No. of live nymphs on treated bean segments. In Table B5 the "Expected % Control" was calculated using the method described in Colby S. R., Weeds, 1967, 15, 20-22. The results are indicated in Table 5 in the Table Section.

**Bioassay 6: Brown Planthopper (*Nilaparvata lugens,* NILALU, "BPH").**

Brown planthopper is a highly destructive pest of rice that is present across the Asia-Pacific region. BPH is a sap-feeding insect that can mechanically damage rice enough to kill the plant and vector viral pathogens that reduce the yield of rice production. In addition, BPH has developed resistance to multiple insecticides that have been used to control outbreaks. Because of these factors, management of BPH is important, as is the development of new technologies to control this major pest species.

F1 and one or more active ingredients were tested at 50, 12.5, 3.125, and 0.78 grams of active ingredient per hectare (g/ha). At these rates, F1 and the individual active ingredients were tested at a ratio of 1:1. Because of the high potency of triflumezopyrim on BPH, this chemistry was tested at lower rates of 0.78, 0.19, 0.049, and 0.012 g/ha. F1 and triflumezopyrim were tested at a ratio of 16:1. Test solutions were prepared containing F1, the individual active ingredients, and mixtures of F1 with each of the active ingredients. Test solutions were prepared by weighing 5 mg of each test chemistry (either alone or in combination depending on the treatment) into a 25 mL glass vial. Next, 1 mL of acetone was added to each vial to dissolve the test chemistries, followed by 19 mL of water with 0.125% Tween 20 adjuvant. This test solution represented the 50 g/ha treatment, which was then serially diluted four-fold to create the three lower rates of 12.5, 3.125, and 0.78 g/ha. Triflumezopyrim was prepared in a similar manner, but two additional serial dilutions were conducted to create solutions representing 6 rates of 12.5, 3.125, 0.78, 0.19, 0.049, and 0.012 g/ha. The higher two doses were discarded, and the four lower doses were used for testing. Each rate was replicated four times, and solvent blanks were used as control treatments.

Five (5) rice seedlings (10-12 days old) planted in 3-inch pots were used as test plants. Rice seedlings were grown in soil and the soil was covered with a 2% agar solution. The test solutions were applied to test plants using a Devries

laboratory research sprayer, set to spray at 200 liters per hectare (L/ha) using a TeeJet hollow cone nozzle. Following application, the rice seedlings were dried for 1 hour, after which a single clear plastic tube (2 inches in diameter x 12 inches in height) was placed over the seedlings in each pot. The tube was pushed down into the agar to create a sealed test chamber. The agar prevented insects from hiding in the soil and made adult collection and grading easier. Ten to fifteen (10-15) $5^{th}$ instar BPH nymphs were transferred to each test chamber using a vacuum aspirator. Immediately following BPH infestation, the test chamber was covered with a piece of grade 90 cheesecloth and secured with a rubber band, sealing the test chamber. The test chambers were held at 25 °C for 6 days, after which the total number of live insects was counted in each test chamber. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live insects on solvent check and Y = No. of live insects in treated chambers. In Table B6 the "Expected % Control" was calculated using the method described in Colby S. R., Weeds, 1967, 15, 20-22. The results are indicated in Table 6 in the Table Section.

**Bioassay 7: Corn earworm (Helicoverpa zea, HELIZE, "CEW"), Fall Armyworm (Spodoptera frugiperda, LAPHFR, "FAW"), Beet Armyworm (Spodoptera exigua, LAPHEG, "BAW"),and Soybean Looper (Chrysodeixis includens, PSEPIN, "SBL").**

The test solutions were tested against CEW, FAW, BAW, and SBL using the following procedure: an artificial lepidopteran diet (Multispecies Lepidopteran Diet, Southland Products) was distributed in 96 well plate. Twenty μL of test solution was pipetted onto a cell in the bioassay plate. The test solution doses of 5, 0.5, 0.05, 0.005, 0.0005, and 0.00005 mg/cm2 on the diet. (The test solution doses of 0.04% (w/v), 0.004% (w/v), 0.0004% (w/v), 0.00004% (w/v), 0.000004% (w/v), and 0.0000004% (w/v) translated to concentrations of 5, 0.5, 0.05, 0.005, 0.0005, and 0.00005 mg/cm2 on the diet, respectively.) A reference treatment (solvent check) was treated with the diluent only. Each treatment was replicated 5 times for each species. Approximately five first instar CEW, FAW, BAW, or SBL larva were placed on top of the diet in each cell and was contained with a clear perforated adhesive lid. Test trays were held at approximately 25°C and ambient relative humidity prior to grading. After five days, the number of cells where all the larvae were dead were recorded as 100% and avergaed across all replicates; then the percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live larvae on solvent check and Y = No. of live larvae on treated diet.
In Table 7 the "Expected % Control" was calculated using the method described in Colby S. R., Weeds, 1967, 15, 20-22. The results are indicated in Table 7.

**Bioassay 8: Western Corn Rootworm (Diabrotica virgifera virgifera, DIABVI, "WCR")**

Western Corn Rootworms are one of the most damaging beetles (Order: Coleoptera) pests in North America and Europe, attacking the roots of corn plants every year. The larval stages feed on the corn roots early in the season which prevents normal growth and damages the structural integrity of the plant. This reduces yield and causes plants to lodge. WCR are a good representative of soil pests which feed on plant root system and seed.

Corn seeds were planted in steam pasteurized soil filled greenhouse pots. Western corn rootworm Diabrotica virgifera virgifera eggs supplied from the Corteva Agriscience in Johnston, IA US, were suspended in a 0.08% agar solution added into the soil. Stock solutions of F1 and active ingredients were prepared at a concentration of either 250 or 500 ugai/10mL for F1 and active ingredients at the ratios of (F1:AI) 1:0.004; 1:0.01;1:0.02; 1:0.04; 1:0.08; 1:0.1; 1:0.15; 1:0.2;1:0.4; 1:2; or 1:4, using a 1:1 solution of acetone:water as a diluent. A soil application of solutions were applied as a 10mL drench over the soil. Plants were grown in the greenhouse for 13 days at 25 C after which the roots were removed from the soil, washed, and measured to determine the length of the median nodal roots. The measured lengths were compared to the infested and un-infested untreated checks to determine the mean percent control offered to protect the corn roots. The results are indicated in Table 8.

**Agriculturally acceptable acid addition salts, salt derivatives, solvates, ester derivatives, polymorphs, isotopes, and radionuclides**

Molecules of Formula One may be formulated into agriculturally acceptable acid addition salts. By way of a non-limiting example, an amine function can form salts with hydrochloric, hydrobromic, sulfuric, phosphoric, acetic, benzoic, citric, malonic, salicylic, malic, fumaric, oxalic, succinic, tartaric, lactic, gluconic, ascorbic, maleic, aspartic, benzenesulfonic, methanesulfonic, ethanesulfonic, hydroxymethanesulfonic, and hydroxyethanesulfonic acids. Additionally, by way of a non-limiting example, an acid function can form salts including those derived from alkali or alkaline earth metals and those derived from ammonia and amines. Examples of preferred cations include sodium, potassium, and magnesium.
Molecules of Formula One may be formulated into salt derivatives. By way of a non-limiting example, a salt derivative may be prepared by contacting a free base with a sufficient amount of the desired acid to produce a salt. A free base may be regenerated by treating the salt with a suitable dilute aqueous base solution such as dilute aqueous sodium hydroxide, potassium carbonate, ammonia, and sodium bicarbonate. As an example, in many cases, a pesticide, such as 2,4-D, is made more water-soluble by converting it to its dimethylamine salt.
Molecules of Formula One may be formulated into stable complexes with a solvent, such that the complex remains intact after the non-complexed solvent is removed. These complexes are often referred to as "solvates." However, it is particularly desirable to form stable hydrates with water as the solvent.
Molecules of Formula One containing an acid functionality may be made into ester derivatives. These ester derivatives can then be applied in the same manner as the molecules disclosed in this document are applied.
Molecules of Formula One may be made as various crystal polymorphs. Polymorphism is important in the development of agrochemicals since different crystal polymorphs or structures of the same molecule can have vastly different physical properties and biological performances.
Molecules of Formula One may be made with different isotopes. Of particular importance are molecules having $^{2}H$ (also known as deuterium) or $^{3}H$ (also known as tritium) in place of $^{1}H$. Molecules of Formula One may be made with different radionuclides. Of particular importance are molecules having $^{14}C$ (also known as radiocarbon). Molecules of Formula One having deuterium, tritium, or $^{14}C$ may be used in biological studies allowing tracing in chemical and physiological processes and half-life studies, as well as mode of action studies.

**Formulations**

A pesticide may not be suitable for application in its pure form. It is usually necessary to add other substances so that the pesticide may be used at the required concentration and in an appropriate form, permitting ease of application, handling, transportation, storage, and maximum pesticide activity. Thus, pesticides are formulated into, for example, baits, concentrated emulsions, dusts, emulsifiable concentrates, fumigants, gels, granules, microencapsulations, seed treatments, suspension concentrates, suspoemulsions, tablets, water soluble liquids, water dispersible granules, dry flowables, wettable powders, or ultra-low volume solutions.
Pesticides are applied most often as aqueous suspensions or emulsions prepared from concentrated formulations of such pesticides. Such water-soluble, water-suspendable, or emulsifiable formulations are either solids, usually known as wettable powders, water dispersible granules, liquids usually known as emulsifiable concentrates, or aqueous suspensions. Wettable powders, which may be compacted to form water dispersible granules, comprise an intimate mixture of the pesticide, a carrier, and surfactants. The concentration of the pesticide is usually from about 10% to about 90% by weight. The carrier is usually selected from among the attapulgite clays, the montmorillonite clays, the diatomaceous earths, or the purified silicates. Effective surfactants, comprising from about 0.5% to about 10% of the wettable powder, are found among sulfonated lignins, condensed naphthalenesulfonates, naphthalenesulfonates, alkylbenzenesulfonates, alkyl sulfates, and non-ionic surfactants such as ethylene oxide adducts of alkyl phenols.
Emulsifiable concentrates of pesticides comprise a convenient concentration of a pesticide, such as from about 50 to about 500 grams per liter of liquid dissolved in a carrier that is either a water miscible solvent or a mixture of water-immiscible organic solvent and emulsifiers. Useful organic solvents include aromatics, especially xylenes and petroleum fractions, especially the high-boiling naphthalenic and olefinic portions of petroleum such as heavy aromatic naphtha. Other organic solvents may also be used, such as the terpenic solvents including rosin derivatives, aliphatic ketones such as cyclohexanone, and complex alcohols such as 2-ethoxyethanol. Suitable emulsifiers for emulsifiable concentrates are selected from conventional anionic and non-ionic surfactants.
Aqueous suspensions comprise suspensions of water-insoluble pesticides dispersed in an aqueous carrier at a concentration in the range from about 5% to about 50% by weight. Suspensions are prepared by finely grinding the pesticide and vigorously mixing it into a carrier comprised of water and surfactants. Ingredients, such as inorganic salts and synthetic or natural gums may, also be added to increase the density and viscosity of the aqueous carrier. It is often most effective to grind and mix the pesticide at the same time by preparing the aqueous mixture and homogenizing it in an implement such as a sand mill, ball mill, or piston-type homogenizer. The pesticide in suspension might be microencapsulated in plastic polymer.

Oil dispersions (OD) comprise suspensions of organic solvent-insoluble pesticides finely dispersed in a mixture of organic solvent and emulsifiers at a concentration in the range from about 2% to about 50% by weight. One or more pesticides might be dissolved in the organic solvent. Useful organic solvents include aromatics, especially xylenes and petroleum fractions, especially the high-boiling naphthalenic and olefinic portions of petroleum such as heavy aromatic naphtha. Other solvents may include vegetable oils, seed oils, and esters of vegetable and seed oils. Suitable emulsifiers for oil dispersions are selected from conventional anionic and non-ionic surfactants. Thickeners or gelling agents are added in the formulation of oil dispersions to modify the rheology or flow properties of the liquid and to prevent separation and settling of the dispersed particles or droplets.

Pesticides may also be applied as granular compositions that are particularly useful for applications to the soil. Granular compositions usually contain from about 0.5% to about 10% by weight of the pesticide, dispersed in a carrier that comprises clay or a similar substance. Such compositions are usually prepared by dissolving the pesticide in a suitable solvent and applying it to a granular carrier, which has been pre-formed to the appropriate particle size, in the range of from about 0.5 mm to about 3 mm. Such compositions may also be formulated by making a dough or paste of the carrier and molecule, and then crushing and drying to obtain the desired granular particle size. Another form of granules is a water emulsifiable granule (EG). It is a formulation consisting of granules to be applied as a conventional oil-in-water emulsion of the active ingredient(s), either solubilized or diluted in an organic solvent, after disintegration and dissolution in water. Water emulsifiable granules comprise one or several active ingredient(s), either solubilized or diluted in a suitable organic solvent that is (are) absorbed in a water-soluble polymeric shell or some other type of soluble or insoluble matrix.

Dusts containing a pesticide are prepared by intimately mixing the pesticide in powdered form with a suitable dusty agricultural carrier, such as kaolin clay, ground volcanic rock, and the like. Dusts can suitably contain from about 1% to about 10% of the pesticide. Dusts may be applied as a seed dressing or as a foliage application with a dust blower machine.

It is equally practical to apply a pesticide in the form of a solution in an appropriate organic solvent, usually petroleum oil, such as the spray oils, which are widely used in agricultural chemistry.

Pesticides can also be applied in the form of an aerosol composition. In such compositions, the pesticide is dissolved or dispersed in a carrier, which is a pressure-generating propellant mixture. The aerosol composition is packaged in a container from which the mixture is dispensed through an atomizing valve.

Pesticide baits are formed when the pesticide is mixed with food or an attractant or both. When the pests eat the bait, they also consume the pesticide. Baits may take the form of granules, gels, flowable powders, liquids, or solids. Baits may be used in pest harborages.

Fumigants are pesticides that have a relatively high vapor pressure and hence can exist as a gas in sufficient concentrations to kill pests in soil or enclosed spaces. The toxicity of the fumigant is proportional to its concentration and the exposure time. They are characterized by a good capacity for diffusion and act by penetrating the pest's respiratory system or being absorbed through the pest's cuticle. Fumigants are applied to control stored product pests under gas proof sheets, in gas sealed rooms or buildings, or in special chambers.

Pesticides may be microencapsulated by suspending the pesticide particles or droplets in plastic polymers of various types. By altering the chemistry of the polymer or by changing factors in the processing, microcapsules may be formed of various sizes, solubility, wall thicknesses, and degrees of penetrability. These factors govern the speed with which the active ingredient within is released, which in turn, affects the residual performance, speed of action, and odor of the product. The microcapsules might be formulated as suspension concentrates or water dispersible granules.

Oil solution concentrates are made by dissolving pesticide in a solvent that will hold the pesticide in solution. Oil solutions of a pesticide usually provide faster knockdown and kill of pests than other formulations due to the solvents themselves having pesticidal action and the dissolution of the waxy covering of the integument increasing the speed of uptake of the pesticide. Other advantages of oil solutions include better storage stability, better penetration of crevices, and better adhesion to greasy surfaces.

Another embodiment is an oil-in-water emulsion, wherein the emulsion comprises oily globules which are each provided with a lamellar liquid crystal coating and are dispersed in an aqueous phase, wherein each oily globule comprises at least one molecule which is agriculturally active, and is individually coated with a monolamellar or oligolamellar layer comprising: (1) at least one non-ionic lipophilic surface-active agent, (2) at least one non-ionic hydrophilic surface-active agent, and (3) at least one ionic surface-active agent, wherein the globules having a mean particle diameter of less than 800 nanometers.

### Other Formulation Components

Generally, when the molecules disclosed in Formula One are used in a formulation, such formulation can also contain other components. These components include, but are not limited to, (this is a non-exhaustive and non-mutually exclusive list) wetters, spreaders, stickers, penetrants, buffers, sequestering agents, drift reduction agents, compatibility

agents, anti-foam agents, cleaning agents, and emulsifiers. A few components are described forthwith.

A wetting agent is a substance that when added to a liquid increases the spreading or penetration power of the liquid by reducing the interfacial tension between the liquid and the surface on which it is spreading. Wetting agents are used for two main functions in agrochemical formulations: during processing and manufacture to increase the rate of wetting of powders in water to make concentrates for soluble liquids or suspension concentrates; and during mixing of a product with water in a spray tank to reduce the wetting time of wettable powders and to improve the penetration of water into water-dispersible granules. Examples of wetting agents used in wettable powder, suspension concentrate, and water-dispersible granule formulations are: sodium lauryl sulfate, sodium dioctyl sulfosuccinate, alkyl phenol ethoxylates, and aliphatic alcohol ethoxylates.

A dispersing agent is a substance that adsorbs onto the surface of particles, helps to preserve the state of dispersion of the particles, and prevents them from reaggregating. Dispersing agents are added to agrochemical formulations to facilitate dispersion and suspension during manufacture, and to ensure the particles redisperse into water in a spray tank. They are widely used in wettable powders, suspension concentrates, and water-dispersible granules. Surfactants that are used as dispersing agents have the ability to adsorb strongly onto a particle surface and provide a charged or steric barrier to reaggregation of particles. The most commonly used surfactants are anionic, non-ionic, or mixtures of the two types. For wettable powder formulations, the most common dispersing agents are sodium lignosulfonates. For suspension concentrates, very good adsorption and stabilization are obtained using polyelectrolytes, such as sodium-naphthalene-sulfonate-formaldehyde-condensates. Tristyrylphenol ethoxylate phosphate esters are also used. Non-ionics such as alkylarylethylene oxide condensates and EO-PO block copolymers are sometimes combined with anionics as dispersing agents for suspension concentrates. In recent years, new types of very high molecular weight polymeric surfactants have been developed as dispersing agents. These have very long hydrophobic 'backbones' and a large number of ethylene oxide chains forming the 'teeth' of a 'comb' surfactant. These high molecular weight polymers can give very good long-term stability to suspension concentrates because the hydrophobic backbones have many anchoring points onto the particle surfaces. Examples of dispersing agents used in agrochemical formulations are: sodium lignosulfonates, sodium naphthalene sulfonate formaldehyde condensates, tristyrylphenol-ethoxylate-phosphate-esters, aliphatic alcohol ethoxylates, alkyl ethoxylates, EO-PO block copolymers, and graft copolymers.

An emulsifying agent is a substance that stabilizes a suspension of droplets of one liquid phase in another liquid phase. Without the emulsifying agent, the two liquids would separate into two immiscible liquid phases. The most commonly used emulsifier blends contain an alkylphenol or an aliphatic alcohol with twelve or more ethylene oxide units and the oil-soluble calcium salt of dodecylbenzenesulfonic acid. A range of hydrophile-lipophile balance ("HLB") values from about 8 to about 18 will normally provide good, stable emulsions. Emulsion stability can sometimes be improved by the addition of a small amount of an EO-PO block copolymer surfactant.

A solubilizing agent is a surfactant that will form micelles in water at concentrations above the critical micelle concentration. The micelles are then able to dissolve or solubilize water-insoluble materials inside the hydrophobic part of the micelle. The types of surfactants usually used for solubilization are non-ionics, sorbitan monooleates, sorbitan monooleate ethoxylates, and methyl oleate esters.

Surfactants are sometimes used, either alone or with other additives such as mineral or vegetable oils as adjuvants to spray-tank mixes to improve the biological performance of the pesticide on the target. The types of surfactants used for bioenhancement depend generally on the nature and mode of action of the pesticide. However, they are often non-ionics such as: alkyl ethoxylates, linear aliphatic alcohol ethoxylates, and aliphatic amine ethoxylates.

A carrier or diluent in an agricultural formulation is a material added to the pesticide to give a product of the required strength. Carriers are usually materials with high absorptive capacities, while diluents are usually materials with low absorptive capacities. Carriers and diluents are used in the formulation of dusts, wettable powders, granules, and water-dispersible granules.

Organic solvents are used mainly in the formulation of emulsifiable concentrates, oil-in-water emulsions, suspoemulsions, oil dispersions, and ultra-low volume formulations, and to a lesser extent, granular formulations. Sometimes mixtures of solvents are used. The first main groups of solvents are aliphatic paraffinic oils such as kerosene or refined paraffins. The second main group (and the most common) comprises the aromatic solvents such as xylene and higher molecular weight fractions of C9 and C10 aromatic solvents. Chlorinated hydrocarbons are useful as cosolvents to prevent crystallization of pesticides when the formulation is emulsified into water. Alcohols are sometimes used as cosolvents to increase solvent power. Other solvents may include vegetable oils, seed oils, and esters of vegetable and seed oils.

Thickeners or gelling agents are used mainly in the formulation of suspension concentrates, oil dispersions, emulsions and suspoemulsions to modify the rheology or flow properties of the liquid and to prevent separation and settling of the dispersed particles or droplets. Thickening, gelling, and anti-settling agents generally fall into two categories, namely water-insoluble particulates and water-soluble polymers. It is possible to produce suspension concentrate and oil dispersion formulations using clays and silicas. Examples of these types of materials, include, but are not limited to, montmorillonite, bentonite, magnesium aluminum silicate, and attapulgite. Water-soluble polysaccharides in water-based

suspension concentrates have been used as thickening-gelling agents for many years. The types of polysaccharides most commonly used are natural extracts of seeds and seaweeds or are synthetic derivatives of cellulose. Examples of these types of materials include, but are not limited to, guar gum, locust bean gum, carrageenam, alginates, methyl cellulose, sodium carboxymethyl cellulose (SCMC), and hydroxyethyl cellulose (HEC). Other types of anti-settling agents are based on modified starches, polyacrylates, polyvinyl alcohol, and polyethylene oxide. Another good anti-settling agent is xanthan gum.

Microorganisms can cause spoilage of formulated products. Therefore, preservation agents are used to eliminate or reduce their effect. Examples of such agents include, but are not limited to: propionic acid and its sodium salt, sorbic acid and its sodium or potassium salts, benzoic acid and its sodium salt, p-hydroxybenzoic acid sodium salt, methyl p-hydroxybenzoate, and 1,2-benzisothiazolin-3-one (BIT).

The presence of surfactants often causes water-based formulations to foam during mixing operations in production and in application through a spray tank. In order to reduce the tendency to foam, anti-foam agents are often added either during the production stage or before filling into bottles. Generally, there are two types of anti-foam agents, namely silicones and non-silicones. Silicones are usually aqueous emulsions of dimethyl polysiloxane, while the non-silicone anti-foam agents are water-insoluble oils, such as octanol and nonanol, or silica. In both cases, the function of the anti-foam agent is to displace the surfactant from the air-water interface.

"Green" agents (*e.g.*, adjuvants, surfactants, solvents) can reduce the overall environmental footprint of crop protection formulations. Green agents are biodegradable and generally derived from natural and/or sustainable sources, *e.g.* plant and animal sources. Specific examples are: vegetable oils, seed oils, and esters thereof, also alkoxylated alkyl polyglucosides.

**Applications**

Molecules of Formula One , and combinations thereof disclosed herein, may be applied to any locus. Particular loci to apply such molecules include loci where alfalfa, almonds, apples, barley, beans, canola, corn, cotton, crucifers, flowers, fodder species (Rye Grass, Sudan Grass, Tall Fescue, Kentucky Blue Grass, and Clover), fruits, lettuce, oats, oil seed crops, oranges, peanuts, pears, peppers, potatoes, rice, sorghum, soybeans, strawberries, sugarcane, sugarbeets, sunflowers, tobacco, tomatoes, wheat (for example, Hard Red Winter Wheat, Soft Red Winter Wheat, White Winter Wheat, Hard Red Spring Wheat, and Durum Spring Wheat), and other valuable crops are growing or the seeds thereof are going to be planted.

Molecules of Formula One and combinations thereof disclosed herein may also be applied where plants, such as crops, are growing and where there are low levels (even no actual presence) of pests that can commercially damage such plants. Applying such molecules in such locus is to benefit the plants being grown in such locus. Such benefits, may include, but are not limited to: helping the plant grow a better root system; helping the plant better withstand stressful growing conditions; improving the health of a plant; improving the yield of a plant *(e.g.* increased biomass and/or increased content of valuable ingredients); improving the vigor of a plant (*e.g.* improved plant growth and/or greener leaves); improving the quality of a plant (*e.g.* improved content or composition of certain ingredients); and improving the tolerance to abiotic and/or biotic stress of the plant.

Molecules of Formula One and combinations thereof disclosed herein may be applied with ammonium sulfate when growing various plants as this may provide additional benefits.

Molecules of Formula One and combinations thereof disclosed herein may be applied on, in, or around plants genetically modified to express specialized traits, such as *Bacillus thuringiensis* (for example, Cry1Ab, Cry1Ac, Cry1Fa, Cry1A.105, Cry2Ab, Vip3A, mCry3A, Cry3Ab, Cry3Bb, Cry34Ab1/Cry35Ab1), other insecticidal toxins, or those expressing herbicide tolerance, or those with "stacked" foreign genes expressing insecticidal toxins, herbicide tolerance, nutrition-enhancement, or any other beneficial traits.

Molecules of Formula One and combinations thereof disclosed herein may be applied to the foliar and/or fruiting portions of plants to control pests. Either such molecules will come in direct contact with the pest, or the pest will consume such molecules when eating the plant or while extracting sap or other nutrients from the plant.

Molecules of Formula One and combinations thereof disclosed herein may also be applied to the soil, and when applied in this manner, root and stem feeding pests may be controlled. The roots may absorb such molecules thereby taking it up into the foliar portions of the plant to control above ground chewing and sap feeding pests.

Systemic movement of pesticides in plants may be utilized to control pests on one portion of the plant by applying (for example by spraying a locus) a molecule of Formula One to a different portion of the plant. For example, control of foliar-feeding insects may be achieved by drip irrigation or furrow application, by treating the soil with for example pre- or post-planting soil drench, or by treating the seeds of a plant before planting.

Molecules of Formula One and combinations thereof disclosed herein may be used with baits. Generally, with baits, the baits are placed in the ground where, for example, termites can come into contact with, and/or be attracted to, the bait. Baits can also be applied to a surface of a building, (horizontal, vertical, or slant surface) where, for example, ants,

termites, cockroaches, and flies, can come into contact with, and/or be attracted to, the bait.

Molecules of Formula One and combinations thereof disclosed herein may be encapsulated inside or placed on the surface of a capsule. The size of the capsules can range from nanometer size (about 100-900 nanometers in diameter) to micrometer size (about 10-900 microns in diameter).

Molecules of Formula One and combinations thereof disclosed herein may be applied to eggs of pests. Because of the unique ability of the eggs of some pests to resist certain pesticides, repeated applications of such molecules may be desirable to control newly emerged larvae.

Molecules of Formula One and combinations thereof disclosed herein may be applied as seed treatments. Seed treatments may be applied to all types of seeds, including those from which plants genetically modified to express specialized traits will germinate. Representative examples include those expressing proteins toxic to invertebrate pests, such as *Bacillus thuringiensis* or other insecticidal toxins, those expressing herbicide tolerance, such as "Roundup Ready" seed, or those with "stacked" foreign genes expressing insecticidal toxins, herbicide tolerance, nutrition-enhancement, drought tolerance, or any other beneficial traits. Furthermore, such seed treatments with molecules of Formula One may further enhance the ability of a plant to withstand stressful growing conditions better. This results in a healthier, more vigorous plant, which can lead to higher yields at harvest time. Generally, about 1 gram of such molecules to about 500 grams per 100,000 seeds is expected to provide good benefits, amounts from about 10 grams to about 100 grams per 100,000 seeds is expected to provide better benefits, and amounts from about 25 grams to about 75 grams per 100,000 seeds is expected to provide even better benefits.

Component A (molecules of Formula One) is present in a pesticidally-effective amount in a formulation for a seed treatment, for example, in an amount of 1% to about 60% by weight, based on the total weight of the seed treatment mixture. Each compound of component B is present in a pesticidally-effective amount from about 1% about 60% weight, based on the total weight of the seed treatment mixture. Components A and B may be applied to the seed sequentially or simultaneously.

The seed treatment may include more than one active compound as component B such as compounds having further fungicidal, insecticidal, acaricidal and/or nematocidal properties. As used herein, the term "seed" means any resting stage of a plant that is physically detached from the vegetative state of a plant, and/or may be stored for a prolonged periods of time and/or can be used to regrow another individual plant of the same species. The term "resting" refers to a state where the pant retains viability, within reasonable limits, despite absence of light, water and/or nutrients essential for the vegetative (i.e., non-seed) state. In particular embodiments, the term refers to true seeds.

Molecules of Formula One and combinations thereof disclosed herein may be applied with one or more active ingredients in a soil amendment.

Molecules of Formula One and combinations thereof disclosed herein may be used for controlling endoparasites and ectoparasites in the veterinary medicine sector or in the field of non-human-animal keeping. Such molecules may be applied by oral administration in the form of, for example, tablets, capsules, drinks, granules, by dermal application in the form of, for example, dipping, spraying, pouring on, spotting on, and dusting, and by parenteral administration in the form of, for example, an injection.

Molecules of Formula One and combinations thereof disclosed herein may also be employed advantageously in livestock keeping, for example, cattle, chickens, geese, goats, pigs, sheep, and turkeys. They may also be employed advantageously in pets such as, horses, dogs, and cats. Particular pests to control would be flies, fleas, and ticks that are bothersome to such animals. Suitable formulations are administered orally to the animals with the drinking water or feed. The dosages and formulations that are suitable depend on the species.

Molecules of Formula One and combinations thereof disclosed herein may also be used for controlling parasitic worms, especially of the intestine, in the animals listed above.

Molecules of Formula One and combinations thereof disclosed herein may also be employed in therapeutic methods for human health care. Such methods include, but are limited to, oral administration in the form of, for example, tablets, capsules, drinks, granules, and by dermal application.

Molecules of Formula One and combinations thereof disclosed herein may also be applied to invasive pests. Pests around the world have been migrating to new environments (for such pests) and thereafter becoming a new invasive species in such new environment. Such molecules may also be used on such new invasive species to control them in such new environments.

**TABLE SECTION FOLLOWS**

% increase over expected in the following Tables was calculated according to the following equation:

$$((\text{Observed \% control of the mixture} - \text{expected \% control}) / \text{expected \% control}) \times 100$$

Accordingly, in some instances, * denotes that % increase over expected is too large to calculate using the above equation (for example, when the expected % control = 0).

TABLE 1 - MYZUPE

| Name of AI | Wt% F1 & W% AI ($10^{-6}$) | Wt Ratio F1:AI | Average % Control F1 | Average % Control AI | Observed % Control of Mixture | Expected % Control | % Increase Over Expected |
|---|---|---|---|---|---|---|---|
| Bifenthrin | 0.04 | 1:40000 | 15.8 | 16.3 | 44.1 | 29.5 | 49.8 |
| Chlorantraniliprole | 0.04 | 1:40000 | 15.8 | 8.1 | 43.1 | 22.6 | 90.9 |
| Chlorfenapyr | 0.04 | 1:2564 | 15.8 | 10.1 | 36.9 | 24.3 | 52.0 |
| Fluxametamide | 0.04 | 1:2564 | 8.8 | 23.1 | 39.3 | 29.9 | 31.5 |
| Imidacloprid | 0.04 | 1:10256 | 8.8 | 40.5 | 61.3 | 45.8 | 33.9 |
| Indoxacarb | 0.04 | 1:40000 | 8.8 | 0.0 | 14.3 | 8.8 | 61.8 |
| Indoxacarb | 0.04 | 1:640 | 8.8 | 10.1 | 30.6 | 18.0 | 69.5 |
| Pymetrozine | 0.04 | 1:40000 | 8.8 | 15.4 | 34.3 | 22.9 | 49.7 |
| Pymetrozine | 0.04 | 1:640 | 8.8 | 47.6 | 88.8 | 52.2 | 69.9 |
| Thiamethoxam | 0.04 | 1:40000 | 7.1 | 0.0 | 28.1 | 7.1 | 292.9 |
| Thiamethoxam | 0.04 | 1:10256 | 7.1 | 8.5 | 28.1 | 15.0 | 86.6 |

TABLE 2 - BEMITA

| Name of AI | Wt% F1 | Wt% AI | Wt Ratio F1:AI | Average % Control F1 | Average % Control AI | Observed % Control of Mixture | Expected % Control | % Increase over Expected |
|---|---|---|---|---|---|---|---|---|
| Afidopyropen | 1 | 0.00001 | 1:1 | 72.8 | 0.0 | 90.8 | 73.6 | 23.4 |
| Chlorantraniliprole | 10 | 0.0001 | 1:1 | 50.1 | 28.0 | 89.8 | 64.1 | 40.1 |
| Fipronil | 10 | 0.0001 | 1:1 | 37.4 | 8.9 | 53.9 | 42.9 | 25.5 |
| Flonicamid | 10 | 0.0001 | 1:1 | 37.4 | 0.0 | 82.0 | 37.4 | 119.4 |
| Flupyradifurone | 1 | 0.00001 | 1:1 | 19.9 | 22.9 | 48.1 | 38.2 | 25.7 |
| Flupyradifurone | 10 | 0.0001 | 1:1 | 37.4 | 39.2 | 72.5 | 61.9 | 17.2 |
| Thiamethoxam | 0.1 | 0.000001 | 1:1 | 0.0 | 5.8 | 9.7 | 5.8 | 66.7 |
| Thiamethoxam | 1 | 0.00001 | 1:1 | 0.0 | 35.9 | 77.4 | 35.9 | 115.6 |
| Triflumezopyrim | 0.1 | 0.000001 | 1:1 | 0.0 | 10.1 | 22.3 | 10.1 | 121.3 |
| Triflumezopyrim | 1 | 0.00001 | 1:1 | 0.0 | 31.4 | 40.3 | 31.4 | 28.6 |

TABLE 3 - FRANOC

| Name of AI | Wt% F1 ($10^{-6}$) | Wt Ratio F1:AI | Average % Control F1 | Average % Control AI | Observed % Control of Mixture | Expected % Control | % Increase over Expected |
|---|---|---|---|---|---|---|---|
| Abamectin | 3.125 | 1:1 | 24.1 | 31.0 | 93.1 | 47.7 | 95.3 |
| Afidopyropen | 12.5 | 1:1 | 46.0 | 0.0 | 65.5 | 46.0 | 42.5 |
| Afidopyropen | 50 | 1:1 | 79.3 | 5.7 | 100.0 | 80.5 | 24.2 |
| Bifenthrin | 3.125 | 1:1 | 24.1 | 11.5 | 65.5 | 32.9 | 99.4 |
| Chlorfenapyr | 0.78 | 1:1 | 4.8 | 16.7 | 38.1 | 20.6 | 84.6 |

(continued)

| TABLE 3 - FRANOC | | | | | | | |
|---|---|---|---|---|---|---|---|
| Name of AI | Wt% F1 ($10^{-6}$) | Wt Ratio F1:AI | Average % Control F1 | Average % Control AI | Observed % Control of Mixture | Expected % Control | % Increase over Expected |
| Cyantraniliprole | 0.78 | 1:1 | 4.8 | 0.0 | 16.7 | 4.8 | 250.0 |
| Fipronil | 0.195 | 1:1 | 0.0 | 9.5 | 23.8 | 9.5 | 150.0 |
| Fipronil | 3.125 | 1:1 | 21.4 | 42.9 | 85.7 | 55.1 | 55.6 |
| Flupyrimin | 0.195 | 1:1 | 0.0 | 4.8 | 14.3 | 4.8 | 200.0 |
| Fluxametamide | 3.125 | 1:1 | 21.4 | 4.8 | 57.1 | 25.2 | 127.0 |
| Methoxyfenozide | 3.125 | 1:1 | 23.8 | 4.8 | 42.9 | 27.4 | 56.2 |
| Pymetrozine | 3.125 | 1:1 | 23.8 | 21.4 | 71.4 | 40.1 | 78.0 |
| AI-1 | 0.78 | 1:1 | 0.0 | 9.5 | 16.7 | 9.5 | 75.0 |
| Spinosad | 3.125 | 1:1 | 23.8 | 57.1 | 92.9 | 67.3 | 37.9 |
| Tetraniliprole | 0.195 | 1:1 | 5.7 | 0.0 | 11.5 | 5.7 | 100.0 |

| TABLE 3 - FRANOC | | | | | | | |
|---|---|---|---|---|---|---|---|
| Name of AI | Wt% F1 ($10^{-6}$) | Wt Ratio F1:AI | Average % Control F1 | Average % Control AI | Observed % Control of Mixture | Expected % Control | % Increase over Expected |
| Tetraniliprole | 0.78 | 1:1 | 0.0 | 5.7 | 11.5 | 5.7 | 100.0 |
| Tetraniliprole | 3.125 | 1:1 | 19.5 | 0.0 | 25.3 | 19.5 | 29.4 |
| Tetraniliprole | 12.5 | 1:1 | 46.0 | 12.6 | 79.3 | 52.8 | 50.2 |
| Tetraniliprole | 50 | 1:1 | 79.3 | 0.0 | 100.0 | 79.3 | 26.1 |
| Thiamethoxam | 0.195 | 1:1 | 0.0 | 20.0 | 40.0 | 20.0 | 100.0 |
| Thiamethoxam | 0.78 | 1:1 | 20.0 | 20.0 | 46.7 | 36.0 | 29.6 |
| Thiamethoxam | 3.125 | 1:1 | 53.3 | 6.7 | 73.3 | 56.4 | 29.9 |

TABLE 4 - LAPHFR, PSEPIN, & HELIZE

| Name of AI | Species | Wt% F1 | Wt% AI | Wt Ratio F1:AI | Average % Control F1 | Average % Control AI | Observed % Control of Mixture | Expected % Control | % Increase over Expected |
|---|---|---|---|---|---|---|---|---|---|
| Abamectin | FAW | 0.000004 | 0.00004 | 1:10 | 37.5 | 0.0 | 100.0 | 37.5 | 166.7 |
| Acetamiprid | FAW | 0.000004 | 0.00004 | 1:10 | 37.5 | 0.0 | 100.0 | 37.5 | 166.7 |
| Afidopyropen | FAW | 0.0000004 | 0.000004 | 1:10 | 0.0 | 0.0 | 100.0 | 0.0 | * |
| Afidopyropen | FAW | 0.000004 | 0.00004 | 1:10 | 37.5 | 0.0 | 100.0 | 37.5 | 166.7 |
| Benzpyrimoxan | FAW | 0.0000004 | 0.000004 | 1:10 | 0.0 | 0.0 | 100.0 | 0.0 | * |
| Bifenthrin | FAW | 0.0000004 | 0.000004 | 1:10 | 0.0 | 12.5 | 100.0 | 12.5 | 700.0 |
| Bifenthrin | FAW | 0.000004 | 0.00004 | 1:10 | 0.0 | 12.5 | 100.0 | 12.5 | 700.0 |
| Chlorantraniliprole | FAW | 0.0000004 | 0.000004 | 1:10 | 0.0 | 62.5 | 100.0 | 62.5 | 60.0 |
| Chlorfenapyr | FAW | 0.0000004 | 0.000004 | 1:10 | 0.0 | 0.0 | 100.0 | 0.0 | * |
| Chlorfenapyr | FAW | 0.000004 | 0.00004 | 1:10 | 0.0 | 37.5 | 100.0 | 37.5 | 166.7 |
| Cyantraniliprole | FAW | 0.0000004 | 0.000004 | 1:10 | 0.0 | 0.0 | 100.0 | 0.0 | * |
| Cyantraniliprole | FAW | 0.000004 | 0.00004 | 1:10 | 0.0 | 0.0 | 100.0 | 0.0 | * |
| Fipronil | FAW | 0.0000004 | 0.000004 | 1:10 | 0.0 | 0.0 | 100.0 | 0.0 | * |
| Fipronil | FAW | 0.000004 | 0.00004 | 1:10 | 50.0 | 0.0 | 100.0 | 50.0 | 100.0 |
| Flonicamid | FAW | 0.0000004 | 0.000004 | 1:10 | 0.0 | 0.0 | 100.0 | 0.0 | * |
| Flonicamid | FAW | 0.000004 | 0.00004 | 1:10 | 50.0 | 0.0 | 100.0 | 50.0 | 100.0 |
| Flupyradifurone | FAW | 0.0000004 | 0.000004 | 1:10 | 0.0 | 0.0 | 100.0 | 0.0 | * |
| Flupyradifurone | FAW | 0.000004 | 0.00004 | 1:10 | 12.5 | 0.0 | 100.0 | 12.5 | 700.0 |
| Flupyrimin | FAW | 0.0000004 | 0.000004 | 1:10 | 0.0 | 0.0 | 100.0 | 0.0 | * |
| Flupyrimin | FAW | 0.000004 | 0.00004 | 1:10 | 12.5 | 0.0 | 100.0 | 12.5 | 700.0 |
| Fluxametamide | FAW | 0.0000004 | 0.000004 | 1:10 | 0.0 | 12.5 | 100.0 | 12.5 | 700.0 |
| Imidacloprid | FAW | 0.0000004 | 0.000004 | 1:10 | 0.0 | 0.0 | 100.0 | 0.0 | * |
| Indoxacarb | FAW | 0.0000004 | 0.000004 | 1:10 | 0.0 | 0.0 | 100.0 | 0.0 | * |
| Indoxacarb | FAW | 0.000004 | 0.00004 | 1:10 | 62.5 | 0.0 | 100.0 | 62.5 | 60.0 |
| Lambda-cyhalothrin | FAW | 0.0000004 | 0.000004 | 1:10 | 0.0 | 0.0 | 100.0 | 0.0 | * |

(continued)

TABLE 4 - LAPHFR, PSEPIN, & HELIZE

| Name of AI | Species | Wt% F1 | Wt% AI | Wt Ratio F1:AI | Average % Control F1 | Average % Control AI | Observed % Control of Mixture | Expected % Control | % Increase over Expected |
|---|---|---|---|---|---|---|---|---|---|
| Lambda-cyhalo-thrin | FAW | 0.000004 | 0.00004 | 1:10 | 62.5 | 0.0 | 100.0 | 62.5 | 60.0 |
| Methoxyfenozide | FAW | 0.0000004 | 0.000004 | 1:10 | 0.0 | 12.5 | 100.0 | 12.5 | 700.0 |
| Methoxyfenozide | FAW | 0.000004 | 0.00004 | 1:10 | 12.5 | 0.0 | 100.0 | 12.5 | 700.0 |
| Pymetrozine | FAW | 0.0000004 | 0.000004 | 1:10 | 0.0 | 0.0 | 100.0 | 0.0 | * |
| Pymetrozine | FAW | 0.000004 | 0.00004 | 1:10 | 12.5 | 0.0 | 100.0 | 12.5 | 700.0 |
| Pyriproxyfen | FAW | 0.0000004 | 0.000004 | 1:10 | 12.5 | 12.5 | 100.0 | 23.4 | 326.7 |
| AI-1 | FAW | 0.0000004 | 0.000004 | 1:10 | 12.5 | 0.0 | 100.0 | 12.5 | 700.0 |
| Spinetoram | FAW | 0.0000004 | 0.000004 | 1:10 | 0.0 | 0.0 | 100.0 | 0.0 | * |
| Spinosad | FAW | 0.0000004 | 0.000004 | 1:10 | 0.0 | 12.5 | 100.0 | 12.5 | 700.0 |
| Spirotetramat | FAW | 0.0000004 | 0.000004 | 1:10 | 0.0 | 0.0 | 100.0 | 0.0 | * |
| Sulfoxaflor | FAW | 0.0000004 | 0.000004 | 1:10 | 0.0 | 0.0 | 100.0 | 0.0 | * |
| Tetraniliprole | FAW | 0.0000004 | 0.000004 | 1:10 | 0.0 | 0.0 | 100.0 | 0.0 | * |
| Tetraniliprole | FAW | 0.000004 | 0.00004 | 1:10 | 37.5 | 50.0 | 100.0 | 68.8 | 45.5 |
| Thiamethoxam | FAW | 0.0000004 | 0.000004 | 1:10 | 0.0 | 0.0 | 100.0 | 0.0 | * |
| Thiamethoxam | SBL | 0.0000004 | 0.000004 | 1:10 | 0.0 | 0.0 | 100.0 | 0.0 | * |
| Triflumezopyrim | FAW | 0.0000004 | 0.000004 | 1:10 | 0.0 | 0.0 | 100.0 | 0.0 | * |
| AI-2 | FAW | 0.0000004 | 0.000004 | 1:10 | 0.0 | 0.0 | 100.0 | 0.0 | * |
| Acetamiprid | SBL | 0.000004 | 0.00004 | 1:10 | 12.5 | 0.0 | 100.0 | 12.5 | 700.0 |
| Afidopyropen | SBL | 0.0000004 | 0.000004 | 1:10 | 0.0 | 0.0 | 100.0 | 0.0 | * |
| Afidopyropen | SBL | 0.000004 | 0.00004 | 1:10 | 25.0 | 0.0 | 100.0 | 25.0 | 300.0 |
| Benzpyrimoxan | SBL | 0.0000004 | 0.000004 | 1:10 | 37.5 | 0.0 | 100.0 | 37.5 | 166.7 |
| Bifenthrin | SBL | 0.0000004 | 0.000004 | 1:10 | 12.5 | 0.0 | 100.0 | 12.5 | 700.0 |
| Bifenthrin | SBL | 0.000004 | 0.00004 | 1:10 | 37.5 | 0.0 | 100.0 | 37.5 | 166.7 |
| Chlorantraniliprole | SBL | 0.0000004 | 0.000004 | 1:10 | 12.5 | 37.5 | 100.0 | 45.3 | 120.7 |

(continued)

| TABLE 4 - LAPHFR, PSEPIN, & HELIZE | | | | | | | | | |
|---|---|---|---|---|---|---|---|---|---|
| Name of AI | Species | Wt% F1 | Wt% AI | Wt Ratio F1:AI | Average % Control F1 | Average % Control AI | Observed % Control of Mixture | Expected % Control | % Increase over Expected |
| Chlorfenapyr | SBL | 0.0000004 | 0.000004 | 1:10 | 12.5 | 25.0 | 100.0 | 34.4 | 190.9 |
| Chlorfenapyr | SBL | 0.000004 | 0.00004 | 1:10 | 25.0 | 37.5 | 100.0 | 53.1 | 88.2 |
| Cyantraniliprole | SBL | 0.0000004 | 0.000004 | 1:10 | 0.0 | 0.0 | 100.0 | 0.0 | * |
| Cyantraniliprole | SBL | 0.000004 | 0.00004 | 1:10 | 0.0 | 0.0 | 100.0 | 0.0 | * |
| Fipronil | SBL | 0.0000004 | 0.000004 | 1:10 | 0.0 | 0.0 | 100.0 | 0.0 | * |
| Fipronil | SBL | 0.000004 | 0.00004 | 1:10 | 62.5 | 0.0 | 100.0 | 62.5 | 60.0 |
| Flonicamid | SBL | 0.0000004 | 0.000004 | 1:10 | 0.0 | 0.0 | 100.0 | 0.0 | * |
| Flonicamid | SBL | 0.000004 | 0.00004 | 1:10 | 62.5 | 0.0 | 100.0 | 62.5 | 60.0 |
| Flupyradifurone | SBL | 0.0000004 | 0.000004 | 1:10 | 0.0 | 0.0 | 100.0 | 0.0 | * |
| Flupyradifurone | SBL | 0.000004 | 0.00004 | 1:10 | 12.5 | 0.0 | 100.0 | 12.5 | 700.0 |
| Flupyrimin | SBL | 0.0000004 | 0.000004 | 1:10 | 0.0 | 0.0 | 100.0 | 0.0 | * |
| Flupyrimin | SBL | 0.000004 | 0.00004 | 1:10 | 12.5 | 0.0 | 100.0 | 12.5 | 700.0 |
| Fluxametamide | SBL | 0.0000004 | 0.000004 | 1:10 | 12.5 | 12.5 | 100.0 | 23.4 | 326.7 |
| Imidacloprid | SBL | 0.0000004 | 0.000004 | 1:10 | 12.5 | 12.5 | 100.0 | 23.4 | 326.7 |
| Indoxacarb | SBL | 0.0000004 | 0.000004 | 1:10 | 0.0 | 0.0 | 100.0 | 0.0 | * |
| Lambda-cyhalothrin | SBL | 0.0000004 | 0.000004 | 1:10 | 0.0 | 12.5 | 100.0 | 12.5 | 700.0 |
| Methoxyfenozide | SBL | 0.0000004 | 0.000004 | 1:10 | 12.5 | 25.0 | 100.0 | 34.4 | 190.9 |
| Pymetrozine | SBL | 0.0000004 | 0.000004 | 1:10 | 12.5 | 12.5 | 100.0 | 23.4 | 326.7 |
| Pyriproxyfen | SBL | 0.0000004 | 0.000004 | 1:10 | 12.5 | 12.5 | 100.0 | 23.4 | 326.7 |
| AI-1 | SBL | 0.0000004 | 0.000004 | 1:10 | 12.5 | 12.5 | 100.0 | 23.4 | 326.7 |
| Spinetoram | SBL | 0.0000004 | 0.000004 | 1:10 | 0.0 | 25.0 | 100.0 | 25.0 | 300.0 |
| Spinosad | SBL | 0.0000004 | 0.000004 | 1:10 | 37.5 | 0.0 | 100.0 | 37.5 | 166.7 |
| Spirotetramat | SBL | 0.0000004 | 0.000004 | 1:10 | 0.0 | 12.5 | 100.0 | 12.5 | 700.0 |
| Sulfoxaflor | SBL | 0.0000004 | 0.000004 | 1:10 | 0.0 | 12.5 | 100.0 | 12.5 | 700.0 |

(continued)

TABLE 4 - LAPHFR, PSEPIN, & HELIZE

| Name of AI | Species | Wt% F1 | Wt% AI | Wt Ratio F1:AI | Average % Control F1 | Average % Control AI | Observed % Control of Mixture | Expected % Control | % Increase over Expected |
|---|---|---|---|---|---|---|---|---|---|
| Tetraniliprole | SBL | 0.0000004 | 0.000004 | 1:10 | 0.0 | 0.0 | 100.0 | 0.0 | * |
| Tetraniliprole | SBL | 0.000004 | 0.00004 | 1:10 | 25.0 | 12.5 | 100.0 | 34.4 | 190.9 |
| Triflumezopyrim | SBL | 0.0000004 | 0.000004 | 1:10 | 0.0 | 12.5 | 100.0 | 12.5 | 700.0 |
| AI-2 | SBL | 0.0000004 | 0.000004 | 1:10 | 37.5 | 0.0 | 100.0 | 37.5 | 166.7 |
| Abamectin | CEW | 0.0000004 | 0.000004 | 1:10 | 0.0 | 0.0 | 100.0 | 0.0 | * |
| Abamectin | CEW | 0.000004 | 0.00004 | 1:10 | 0.0 | 0.0 | 100.0 | 0.0 | * |
| Acetamiprid | CEW | 0.0000004 | 0.000004 | 1:10 | 0.0 | 0.0 | 100.0 | 0.0 | * |
| Acetamiprid | CEW | 0.000004 | 0.00004 | 1:10 | 0.0 | 0.0 | 100.0 | 0.0 | * |
| Afidopyropen | CEW | 0.0000004 | 0.000004 | 1:10 | 0.0 | 0.0 | 100.0 | 0.0 | * |
| Afidopyropen | CEW | 0.000004 | 0.00004 | 1:10 | 0.0 | 0.0 | 100.0 | 0.0 | * |
| Benzpyrimoxan | CEW | 0.0000004 | 0.000004 | 1:10 | 0.0 | 0.0 | 100.0 | 0.0 | * |
| Benzpyrimoxan | CEW | 0.000004 | 0.00004 | 1:10 | 0.0 | 0.0 | 100.0 | 0.0 | * |
| Bifenthrin | CEW | 0.0000004 | 0.000004 | 1:10 | 0.0 | 0.0 | 100.0 | 0.0 | * |
| Bifenthrin | CEW | 0.000004 | 0.00004 | 1:10 | 0.0 | 0.0 | 100.0 | 0.0 | * |
| Chlorantraniliprole | CEW | 0.0000004 | 0.000004 | 1:10 | 0.0 | 0.0 | 100.0 | 0.0 | * |
| Chlorantraniliprole | CEW | 0.000004 | 0.00004 | 1:10 | 0.0 | 0.0 | 100.0 | 0.0 | * |
| Chlorfenapyr | CEW | 0.0000004 | 0.000004 | 1:10 | 0.0 | 0.0 | 100.0 | 0.0 | * |
| Chlorfenapyr | CEW | 0.000004 | 0.00004 | 1:10 | 0.0 | 12.5 | 100.0 | 12.5 | 700.0 |
| Cyantraniliprole | CEW | 0.0000004 | 0.000004 | 1:10 | 0.0 | 0.0 | 100.0 | 0.0 | * |
| Cyantraniliprole | CEW | 0.000004 | 0.00004 | 1:10 | 0.0 | 0.0 | 100.0 | 0.0 | * |
| Dinotefuran | CEW | 0.0000004 | 0.000004 | 1:10 | 0.0 | 0.0 | 100.0 | 0.0 | * |
| Dinotefuran | CEW | 0.000004 | 0.00004 | 1:10 | 0.0 | 0.0 | 100.0 | 0.0 | * |
| Fipronil | CEW | 0.0000004 | 0.000004 | 1:10 | 0.0 | 0.0 | 100.0 | 0.0 | * |
| Fipronil | CEW | 0.000004 | 0.00004 | 1:10 | 0.0 | 0.0 | 100.0 | 0.0 | * |
| Flonicamid | CEW | 0.0000004 | 0.000004 | 1:10 | 0.0 | 0.0 | 100.0 | 0.0 | * |

(continued)

TABLE 4 - LAPHFR, PSEPIN, & HELIZE

| Name of AI | Species | Wt% F1 | Wt% AI | Wt Ratio F1:AI | Average % Control F1 | Average % Control AI | Observed % Control of Mixture | Expected % Control | % Increase over Expected |
|---|---|---|---|---|---|---|---|---|---|
| Flonicamid | CEW | 0.000004 | 0.00004 | 1:10 | 0.0 | 0.0 | 100.0 | 0.0 | * |
| Flupyradifurone | CEW | 0.0000004 | 0.000004 | 1:10 | 0.0 | 0.0 | 100.0 | 0.0 | * |
| Flupyradifurone | CEW | 0.000004 | 0.00004 | 1:10 | 0.0 | 0.0 | 100.0 | 0.0 | * |
| Flupyrimin | CEW | 0.0000004 | 0.000004 | 1:10 | 0.0 | 0.0 | 100.0 | 0.0 | * |
| Flupyrimin | CEW | 0.000004 | 0.00004 | 1:10 | 0.0 | 0.0 | 100.0 | 0.0 | * |
| Fluxametamide | CEW | 0.0000004 | 0.000004 | 1:10 | 0.0 | 0.0 | 100.0 | 0.0 | * |
| Fluxametamide | CEW | 0.000004 | 0.00004 | 1:10 | 0.0 | 0.0 | 100.0 | 0.0 | * |
| Imidacloprid | CEW | 0.0000004 | 0.000004 | 1:10 | 0.0 | 0.0 | 100.0 | 0.0 | * |
| Imidacloprid | CEW | 0.000004 | 0.00004 | 1:10 | 0.0 | 0.0 | 100.0 | 0.0 | * |
| Indoxacarb | CEW | 0.0000004 | 0.000004 | 1:10 | 0.0 | 0.0 | 100.0 | 0.0 | * |
| Indoxacarb | CEW | 0.000004 | 0.00004 | 1:10 | 0.0 | 0.0 | 100.0 | 0.0 | * |
| Indoxacarb | CEW | 0.00004 | 0.0004 | 1:10 | 75.0 | 0.0 | 100.0 | 75.0 | 33.3 |
| Lambda-cyhalothrin | CEW | 0.0000004 | 0.000004 | 1:10 | 0.0 | 0.0 | 100.0 | 0.0 | * |
| Methoxyfenozide | CEW | 0.0000004 | 0.000004 | 1:10 | 0.0 | 0.0 | 100.0 | 0.0 | * |
| Methoxyfenozide | CEW | 0.000004 | 0.00004 | 1:10 | 12.5 | 0.0 | 100.0 | 12.5 | 700.0 |
| Pymetrozine | CEW | 0.0000004 | 0.000004 | 1:10 | 0.0 | 0.0 | 100.0 | 0.0 | * |
| Pymetrozine | CEW | 0.000004 | 0.00004 | 1:10 | 37.5 | 0.0 | 100.0 | 37.5 | 166.7 |
| Pyriproxyfen | CEW | 0.0000004 | 0.000004 | 1:10 | 0.0 | 0.0 | 100.0 | 0.0 | * |
| Pyriproxyfen | CEW | 0.000004 | 0.00004 | 1:10 | 12.5 | 0.0 | 100.0 | 12.5 | 700.0 |
| AI-1 | CEW | 0.0000004 | 0.000004 | 1:10 | 0.0 | 0.0 | 100.0 | 0.0 | * |
| AI-1 | CEW | 0.000004 | 0.00004 | 1:10 | 12.5 | 0.0 | 100.0 | 12.5 | 700.0 |
| Spinetoram | CEW | 0.0000004 | 0.000004 | 1:10 | 0.0 | 0.0 | 100.0 | 0.0 | * |
| Spinetoram | CEW | 0.000004 | 0.00004 | 1:10 | 0.0 | 25.0 | 100.0 | 25.0 | 300.0 |
| Spinosad | CEW | 0.0000004 | 0.000004 | 1:10 | 0.0 | 0.0 | 100.0 | 0.0 | * |

(continued)

| TABLE 4 - LAPHFR, PSEPIN, & HELIZE | | | | | | | | | |
|---|---|---|---|---|---|---|---|---|---|
| Name of AI | Species | Wt% F1 | Wt% AI | Wt Ratio F1:AI | Average % Control F1 | Average % Control AI | Observed % Control of Mixture | Expected % Control | % Increase over Expected |
| Spinosad | CEW | 0.000004 | 0.00004 | 1:10 | 0.0 | 0.0 | 100.0 | 0.0 | * |
| Spirotetramat | CEW | 0.0000004 | 0.000004 | 1:10 | 0.0 | 0.0 | 100.0 | 0.0 | * |
| Spirotetramat | CEW | 0.000004 | 0.00004 | 1:10 | 0.0 | 0.0 | 100.0 | 0.0 | * |
| Sulfoxaflor | CEW | 0.0000004 | 0.000004 | 1:10 | 0.0 | 0.0 | 100.0 | 0.0 | * |
| Sulfoxaflor | CEW | 0.000004 | 0.00004 | 1:10 | 0.0 | 0.0 | 100.0 | 0.0 | * |
| Tetraniliprole | CEW | 0.0000004 | 0.000004 | 1:10 | 0.0 | 0.0 | 100.0 | 0.0 | * |
| Tetraniliprole | CEW | 0.000004 | 0.00004 | 1:10 | 0.0 | 0.0 | 100.0 | 0.0 | * |
| Tetraniliprole | CEW | 0.00004 | 0.0004 | 1:10 | 75.0 | 12.5 | 100.0 | 78.1 | 28.0 |
| Thiamethoxam | CEW | 0.0000004 | 0.000004 | 1:10 | 0.0 | 0.0 | 100.0 | 0.0 | * |
| Thiamethoxam | CEW | 0.000004 | 0.00004 | 1:10 | 37.5 | 0.0 | 100.0 | 37.5 | 166.7 |
| Triflumezopyrim | CEW | 0.0000004 | 0.000004 | 1:10 | 0.0 | 0.0 | 100.0 | 0.0 | * |
| Triflumezopyrim | CEW | 0.000004 | 0.00004 | 1:10 | 37.5 | 0.0 | 100.0 | 37.5 | 166.7 |
| AI-2 | CEW | 0.0000004 | 0.000004 | 1:10 | 0.0 | 0.0 | 100.0 | 0.0 | * |
| AI-2 | CEW | 0.000004 | 0.00004 | 1:10 | 37.5 | 0.0 | 100.0 | 37.5 | 166.7 |

| TABLE 5 - EUSCHE | | | | | | | | |
|---|---|---|---|---|---|---|---|---|
| Name of AI | Wt% F1 | Wt% AI | Wt Ratio F1:AI | Average % Control F1 | Average % Control AI | Observed % Control of Mixture | Expected % Control | % Increase over Expected |
| Bifenthrin | 0.0045 | 0.0045 | 1:1 | 7.1 | 60.0 | 100.0 | 62.9 | 59.1 |

| TABLE 6 - NILALU | | | | | | | | |
|---|---|---|---|---|---|---|---|---|
| Name of AI | F1 Rate g/ha | AI Rate g/ha | Ratio F1:AI | Average % Control F1 | Average % Control AI | Observed % Control of Mixture | Expected % Control | % Increase over Expected |
| Abamectin | 0.78 | 0.049 | 16:1 | 20.4 | 40.7 | 87.0 | 52.8 | 64.8 |
| Afidopyropen | 0.78 | 0.049 | 16:1 | 38.6 | 11.4 | 90.9 | 45.6 | 99.3 |
| Flonicamid | 0.78 | 0.049 | 16:1 | 60.9 | 1.1 | 78.3 | 61.3 | 27.7 |
| Flonicamid | 0.78 | 0.049 | 16:1 | 89.1 | 5.4 | 100.0 | 89.7 | 11.5 |
| Flupyradifurone | 0.78 | 0.049 | 16:1 | 41.3 | 16.3 | 83.6 | 50.9 | 64.2 |
| Flupyradifurone | 0.78 | 0.049 | 16:1 | 89.1 | 7.6 | 95.7 | 90.0 | 6.3 |
| Fluxametamide | 0.78 | 0.049 | 16:1 | 15.0 | 42.3 | 83.6 | 50.9 | 64.2 |
| Indoxacarb | 0.78 | 0.049 | 16:1 | 23.8 | 1.2 | 46.4 | 24.7 | 87.8 |
| Pymetrozine | 0.78 | 0.049 | 16:1 | 36.4 | 9.1 | 97.7 | 42.1 | 131.9 |
| Pymetrozine | 0.78 | 0.049 | 16:1 | 38.6 | 27.3 | 100.0 | 55.4 | 80.6 |
| AI-1 | 0.78 | 0.049 | 16:1 | 62.5 | 0.0 | 70.0 | 62.5 | 12.0 |
| AI-1 | 0.78 | 0.049 | 16:1 | 57.5 | 0.0 | 100.0 | 57.5 | 73.9 |
| Spinetoram | 0.78 | 0.049 | 16:1 | 10.0 | 2.5 | 32.5 | 12.3 | 165.3 |
| AI-2 | 0.78 | 0.049 | 16:1 | 9.8 | 0.0 | 10.9 | 9.8 | 11.1 |
| AI-2 | 0.78 | 0.049 | 16:1 | 58.7 | 12.0 | 84.8 | 63.6 | 33.2 |
| AI-2 | 0.78 | 0.049 | 16:1 | 67.4 | 9.8 | 91.3 | 70.6 | 29.4 |

TABLE 7 - LAPHFR, LAPHEG, PSEPIN, & HELIZE

| Name of AI | Species | Wt%F1 | Wt%AI | Wt Ratio F1:AI | Average % Control F1 | Average % Control AI | Observed % Control of Mixture | Expected % Control | % Increase Over Expected |
|---|---|---|---|---|---|---|---|---|---|
| Oxathiapiprolin | CEW | 0.00004 | 0.4 | 1:10000 | 62.5 | 0.0 | 100.0 | 62.5 | 60.0 |
| Propiconazole | CEW | 0.00002 | 0.4 | 1:20000 | 0.0 | 0.0 | 25.0 | 0.0 | * |
| Propiconazole | CEW | 0.00004 | 0.4 | 1:10000 | 62.5 | 0.0 | 87.5 | 62.5 | 40.0 |
| Prothioconazole | CEW | 0.00002 | 0.4 | 1:20000 | 0.0 | 0.0 | 25.0 | 0.0 | * |
| Prothioconazole | CEW | 0.00004 | 0.4 | 1:10000 | 62.5 | 0.0 | 100.0 | 62.5 | 60.0 |
| Tebuconazole | CEW | 0.00002 | 0.4 | 1:20000 | 0.0 | 0.0 | 25.0 | 0.0 | * |
| Tebuconazole | CEW | 0.00004 | 0.4 | 1:10000 | 62.5 | 0.0 | 100.0 | 62.5 | 60.0 |
| Thiabendazole | CEW | 0.00002 | 0.4 | 1:20000 | 0.0 | 0.0 | 37.5 | 0.0 | * |
| Thiabendazole | CEW | 0.00004 | 0.4 | 1:10000 | 62.5 | 0.0 | 100.0 | 62.5 | 60.0 |
| Thiram | CEW | 0.00004 | 0.4 | 1:10000 | 62.5 | 0.0 | 75.0 | 62.5 | 20.0 |
| Trifloxystrobin | CEW | 0.00002 | 0.4 | 1:20000 | 0.0 | 0.0 | 12.5 | 0.0 | * |
| Trifloxystrobin | CEW | 0.00004 | 0.4 | 1:10000 | 62.5 | 0.0 | 100.0 | 62.5 | 60.0 |
| Titriconazole | CEW | 0.00002 | 0.4 | 1:20000 | 0.0 | 0.0 | 12.5 | 0.0 | * |
| Titriconazole | CEW | 0.00004 | 0.4 | 1:10000 | 62.5 | 0.0 | 87.5 | 62.5 | 40.0 |
| Picoxystrobin | CEW | 0.00002 | 0.04 | 1:2000 | 0.0 | 0.0 | 25.0 | 0.0 | * |
| Picoxystrobin | CEW | 0.00004 | 0.04 | 1:1000 | 62.5 | 0.0 | 75.0 | 62.5 | 20.0 |
| Pyraclostrobin | CEW | 0.00002 | 0.04 | 1:2000 | 0.0 | 0.0 | 25.0 | 0.0 | * |
| Pyraclostrobin | CEW | 0.00004 | 0.04 | 1:1000 | 62.5 | 0.0 | 87.5 | 62.5 | 40.0 |
| Azoxystrobin | BAW | 0.00001 | 0.4 | 1:40000 | 40.0 | 0.0 | 60.0 | 40.0 | 50.0 |
| Fludioxonil | BAW | 0.00001 | 0.4 | 1:40000 | 40.0 | 0.0 | 80.0 | 40.0 | 100.0 |
| Fluopyram | BAW | 0.00001 | 0.4 | 1:40000 | 40.0 | 0.0 | 80.0 | 40.0 | 100.0 |
| Fluxapyroxad | BAW | 0.00001 | 0.4 | 1:40000 | 40.0 | 0.0 | 60.0 | 40.0 | 50.0 |
| Isoflucypram | BAW | 0.00001 | 0.4 | 1:40000 | 40.0 | 0.0 | 60.0 | 40.0 | 50.0 |
| Metconazole | BAW | 0.00001 | 0.4 | 1:40000 | 40.0 | 0.0 | 60.0 | 40.0 | 50.0 |
| Thiabendazole | BAW | 0.000005 | 0.4 | 1:80000 | 0.0 | 0.0 | 20.0 | 0.0 | * |
| Trifloxystrobin | BAW | 0.000005 | 0.4 | 1:80000 | 0.0 | 20.0 | 80.0 | 20.0 | 300.0 |
| Trifloxystrobin | BAW | 0.00001 | 0.4 | 1:40000 | 40.0 | 20.0 | 100.0 | 52.0 | 92.3 |

(continued)

TABLE 7 - LAPHFR, LAPHEG, PSEPIN, & HELIZE

| Name of AI | Species | Wt%F1 | Wt%AI | Wt Ratio F1:AI | Average % Control F1 | Average % Control AI | Observed % Control of Mixture | Expected % Control | % Increase Over Expected |
|---|---|---|---|---|---|---|---|---|---|
| Titriconazole | BAW | 0.00001 | 0.4 | 1:40000 | 40.0 | 0.0 | 60.0 | 40.0 | 50.0 |
| Ethaboxam | BAW | 0.00001 | 0.4 | 1:40000 | 40.0 | 0.0 | 100.0 | 40.0 | 150.0 |
| Picoxystrobin | BAW | 0.00001 | 0.04 | 1:4000 | 40.0 | 0.0 | 80.0 | 40.0 | 100.0 |
| Copper Hydroxide | CL | 0.000005 | 0.4 | 1:80000 | 80.0 | 0.0 | 100.0 | 80.0 | 25.0 |
| Isoflucypram | CL | 0.0000025 | 0.4 | 1:160000 | 0.0 | 0.0 | 20.0 | 0.0 | * |
| Oxathiapiprolin | CL | 0.000005 | 0.4 | 1:80000 | 80.0 | 0.0 | 100.0 | 80.0 | 25.0 |
| Thiram | CL | 0.0000025 | 0.4 | 1:160000 | 0.0 | 0.0 | 20.0 | 0.0 | * |
| Thiram | CL | 0.000005 | 0.4 | 1:80000 | 80.0 | 0.0 | 100.0 | 80.0 | 25.0 |
| Picoxystrobin | CL | 0.000005 | 0.04 | 1:8000 | 80.0 | 0.0 | 100.0 | 80.0 | 25.0 |
| Pyraclostrobin | CL | 0.0000025 | 0.04 | 1:16000 | 0.0 | 0.0 | 20.0 | 0.0 | * |
| Trifloxystrobin | FAW | 0.0000025 | 0.4 | 1:160000 | 0.0 | 16.6 | 83.3 | 16.6 | 402.0 |
| Ethaboxam | CEW | 0.00002 | 0.4 | 1:20000 | 0.0 | 12.5 | 50.0 | 12.5 | 300.0 |
| Ethaboxam | CEW | 0.00004 | 0.4 | 1:10000 | 50.0 | 12.5 | 87.5 | 56.3 | 55.6 |
| Inpyrfluxam | CEW | 0.00002 | 0.4 | 1:20000 | 0.0 | 12.5 | 37.5 | 12.5 | 200.0 |
| Inpyrfluxam | CEW | 0.00004 | 0.4 | 1:10000 | 50.0 | 12.5 | 75.0 | 56.3 | 33.3 |
| Ipconazole | CEW | 0.00002 | 0.4 | 1:20000 | 0.0 | 0.0 | 50.0 | 0.0 | * |
| Ipconazole | CEW | 0.00004 | 0.4 | 1:10000 | 50.0 | 0.0 | 75.0 | 50.0 | 50.0 |
| Mefentrifluconazole | CEW | 0.00002 | 0.4 | 1:20000 | 0.0 | 0.0 | 25.0 | 0.0 | * |
| Mefentrifluconazole | CEW | 0.00004 | 0.4 | 1:10000 | 50.0 | 0.0 | 62.5 | 50.0 | 25.0 |
| Sedaxane | CEW | 0.00002 | 0.4 | 1:20000 | 0.0 | 0.0 | 37.5 | 0.0 | * |
| Fluazaindolizine | CEW | 0.00002 | 0.4 | 1:20000 | 0.0 | 0.0 | 62.5 | 0.0 | * |
| Fluazaindolizine | CEW | 0.00004 | 0.4 | 1:10000 | 50.0 | 0.0 | 75.0 | 50.0 | 50.0 |
| Oxamyl | CEW | 0.00002 | 0.4 | 1:20000 | 0.0 | 0.0 | 12.5 | 0.0 | * |
| Fluensulfone | CEW | 0.00002 | 0.4 | 1:20000 | 0.0 | 0.0 | 25.0 | 0.0 | * |
| Fluensulfone | CEW | 0.00004 | 0.4 | 1:10000 | 50.0 | 0.0 | 75.0 | 50.0 | 50.0 |

(continued)

TABLE 7 - LAPHFR, LAPHEG, PSEPIN, & HELIZE

| Name of AI | Species | Wt%F1 | Wt%AI | Wt Ratio F1:AI | Average % Control F1 | Average % Control AI | Observed % Control of Mixture | Expected % Control | % Increase Over Expected |
|---|---|---|---|---|---|---|---|---|---|
| Heat-killed Burkholderia spp. strain A396 | CEW | 0.00002 | 0.4 | 1:20000 | 0.0 | 0.0 | 50.0 | 0.0 | * |
| Heat-killed Burkholderia spp. strain A396 | CEW | 0.00004 | 0.4 | 1:10000 | 50.0 | 0.0 | 62.5 | 50.0 | 25.0 |
| Ethaboxam | BAW | 0.0000025 | 0.4 | 1:160000 | 12.5 | 12.5 | 50.0 | 23.4 | 113.3 |
| Ethaboxam | BAW | 0.000005 | 0.4 | 1:80000 | 50.0 | 12.5 | 75.0 | 56.3 | 33.3 |
| Ipconazole | BAW | 0.0000025 | 0.4 | 1:160000 | 12.5 | 0.0 | 25.0 | 12.5 | 100.0 |
| Ipconazole | BAW | 0.000005 | 0.4 | 1:80000 | 50.0 | 0.0 | 75.0 | 50.0 | 50.0 |
| Mefentrifluconazole | BAW | 0.0000025 | 0.4 | 1:160000 | 12.5 | 0.0 | 37.5 | 12.5 | 200.0 |
| Mefentrifluconazole | BAW | 0.000005 | 0.4 | 1:80000 | 50.0 | 0.0 | 87.5 | 50.0 | 75.0 |
| Pydiflumetofen | BAW | 0.0000025 | 0.4 | 1:160000 | 12.5 | 0.0 | 50.0 | 12.5 | 300.0 |
| Pydiflumetofen | BAW | 0.000005 | 0.4 | 1:80000 | 50.0 | 0.0 | 100.0 | 50.0 | 100.0 |
| Spiromesifen | BAW | 0.0000025 | 0.4 | 1:160000 | 12.5 | 12.5 | 37.5 | 23.4 | 60.0 |
| Spiromesifen | BAW | 0.000005 | 0.4 | 1:80000 | 50.0 | 12.5 | 100.0 | 56.3 | 77.8 |
| Sedaxane | BAW | 0.0000025 | 0.4 | 1:160000 | 12.5 | 0.0 | 50.0 | 12.5 | 300.0 |
| Sedaxane | BAW | 0.000005 | 0.4 | 1:80000 | 50.0 | 0.0 | 87.5 | 50.0 | 75.0 |
| Fluazaindolizine | BAW | 0.0000025 | 0.4 | 1:160000 | 12.5 | 0.0 | 25.0 | 12.5 | 100.0 |
| Fluazaindolizine | BAW | 0.000005 | 0.4 | 1:80000 | 50.0 | 0.0 | 100.0 | 50.0 | 100.0 |
| Oxamyl | BAW | 0.0000025 | 0.4 | 1:160000 | 12.5 | 0.0 | 50.0 | 12.5 | 300.0 |
| Oxamyl | BAW | 0.000005 | 0.4 | 1:80000 | 50.0 | 0.0 | 75.0 | 50.0 | 50.0 |
| Fluensulfone | BAW | 0.0000025 | 0.4 | 1:160000 | 12.5 | 0.0 | 37.5 | 12.5 | 200.0 |
| Fluensulfone | BAW | 0.000005 | 0.4 | 1:80000 | 50.0 | 0.0 | 87.5 | 50.0 | 75.0 |
| Ethaboxam | CL | 0.0000025 | 0.4 | 1:160000 | 25.0 | 0.0 | 62.5 | 25.0 | 150.0 |
| Inpyrfluxam | CL | 0.0000025 | 0.4 | 1:160000 | 25.0 | 0.0 | 87.5 | 25.0 | 250.0 |
| Pydiflumetofen | CL | 0.0000025 | 0.4 | 1:160000 | 25.0 | 0.0 | 87.5 | 25.0 | 250.0 |
| Spiromesifen | CL | 0.0000025 | 0.4 | 1:160000 | 25.0 | 12.5 | 100.0 | 34.4 | 190.9 |
| Sedaxane | CL | 0.0000025 | 0.4 | 1:160000 | 25.0 | 0.0 | 75.0 | 25.0 | 200.0 |
| Fluazaindolizine | CL | 0.0000025 | 0.4 | 1:160000 | 25.0 | 0.0 | 75.0 | 25.0 | 200.0 |

(continued)

TABLE 7 - LAPHFR, LAPHEG, PSEPIN, & HELIZE

| Name of AI | Species | Wt%F1 | Wt%AI | Wt Ratio F1:AI | Average % Control F1 | Average % Control AI | Observed % Control of Mixture | Expected % Control | % Increase Over Expected |
|---|---|---|---|---|---|---|---|---|---|
| Oxamyl | CL | 0.0000025 | 0.4 | 1:160000 | 25.0 | 0.0 | 100.0 | 25.0 | 300.0 |
| Fluensulfone | CL | 0.0000025 | 0.4 | 1:160000 | 25.0 | 12.5 | 87.5 | 34.4 | 154.5 |
| Heat-killed Burkholderia spp. strain A396 | CL | 0.0000025 | 0.4 | 1:160000 | 25.0 | 0.0 | 100.0 | 25.0 | 300.0 |
| Ethaboxam | FAW | 0.0000025 | 0.4 | 1:160000 | 0.0 | 0.0 | 37.5 | 0.0 | * |
| Ethaboxam | FAW | 0.000005 | 0.4 | 1:80000 | 62.5 | 0.0 | 100.0 | 62.5 | 60.0 |
| Inpyrfluxam | FAW | 0.0000025 | 0.4 | 1:160000 | 0.0 | 0.0 | 12.5 | 0.0 | * |
| Inpyrfluxam | FAW | 0.000005 | 0.4 | 1:80000 | 62.5 | 0.0 | 100.0 | 62.5 | 60.0 |
| Ipconazole | FAW | 0.0000025 | 0.4 | 1:160000 | 0.0 | 0.0 | 25.0 | 0.0 | * |
| Ipconazole | FAW | 0.000005 | 0.4 | 1:80000 | 62.5 | 0.0 | 75.0 | 62.5 | 20.0 |
| Pydiflumetofen | FAW | 0.0000025 | 0.4 | 1:160000 | 0.0 | 0.0 | 37.5 | 0.0 | * |
| Pydiflumetofen | FAW | 0.000005 | 0.4 | 1:80000 | 62.5 | 0.0 | 75.0 | 62.5 | 20.0 |
| Spiromesifen | FAW | 0.0000025 | 0.4 | 1:160000 | 0.0 | 12.5 | 25.0 | 12.5 | 100.0 |
| Spiromesifen | FAW | 0.000005 | 0.4 | 1:80000 | 62.5 | 12.5 | 87.5 | 67.2 | 30.2 |
| Sedaxane | FAW | 0.0000025 | 0.4 | 1:160000 | 0.0 | 0.0 | 37.5 | 0.0 | * |
| Sedaxane | FAW | 0.000005 | 0.4 | 1:80000 | 62.5 | 0.0 | 100.0 | 62.5 | 60.0 |
| Fluazaindolizine | FAW | 0.0000025 | 0.4 | 1:160000 | 0.0 | 0.0 | 12.5 | 0.0 | * |
| Fluazaindolizine | FAW | 0.000005 | 0.4 | 1:80000 | 62.5 | 0.0 | 100.0 | 62.5 | 60.0 |
| Oxamyl | FAW | 0.0000025 | 0.4 | 1:160000 | 0.0 | 0.0 | 87.5 | 0.0 | * |
| Oxamyl | FAW | 0.000005 | 0.4 | 1:80000 | 62.5 | 0.0 | 100.0 | 62.5 | 60.0 |
| Fluensulfone | FAW | 0.0000025 | 0.4 | 1:160000 | 0.0 | 0.0 | 25.0 | 0.0 | * |
| Fluensulfone | FAW | 0.000005 | 0.4 | 1:80000 | 62.5 | 0.0 | 87.5 | 62.5 | 40.0 |
| Heat-killed Burkholderia spp. strain A396 | FAW | 0.000005 | 0.4 | 1:80000 | 62.5 | 0.0 | 75.0 | 62.5 | 20.0 |
| Deltamethrin | FAW | 0.0000025 | 0.004 | 1:1600 | 0.0 | 0.0 | 25.0 | 0.0 | * |
| Deltamethrin | FAW | 0.000005 | 0.004 | 1:800 | 62.5 | 0.0 | 75.0 | 62.5 | 20.0 |
| Broflanilide | FAW | 0.0000025 | 0.004 | 1:1600 | 0.0 | 0.0 | 87.5 | 0.0 | * |
| Broflanilide | FAW | 0.000005 | 0.004 | 1:800 | 62.5 | 0.0 | 100.0 | 62.5 | 60.0 |

TABLE 8 - DIABVI

| Name of AI | Species | UgActive F1 | UgActive AI | Wt Ratio F1:AI | Average % Control F1 | Average % Control AI | Observed % Control of Mixture | Expected % Control | % Increase Over Expected |
|---|---|---|---|---|---|---|---|---|---|
| Clothianidin | CRW | 250 | 1 | 250:1 | 88.8 | 14.8 | 91.6 | 90.5 | 1.3 |
| Deltamethrin | CRW | 250 | 1 | 250:1 | 88.8 | 17.0 | 93.8 | 90.7 | 3.4 |
| Fluoxastrobin | CRW | 250 | 1 | 250:1 | 97.8 | 0.0 | 98.6 | 97.8 | 0.8 |
| Inpyrfluxam | CRW | 250 | 1 | 250:1 | 97.8 | 0.0 | 98.8 | 97.8 | 1.0 |
| Prothioconazole | CRW | 500 | 20 | 25:1 | 83.9 | 0.0 | 87.9 | 83.9 | 4.7 |
| Sedaxane | CRW | 250 | 10 | 25:1 | 97.8 | 0.0 | 100.0 | 97.8 | 2.2 |
| Thiabendazole | CRW | 500 | 50 | 10:1 | 83.9 | 16.8 | 87.4 | 86.6 | 1.0 |
| Titriconazole | CRW | 500 | 100 | 5:1 | 83.9 | 0.0 | 91.2 | 83.9 | 8.7 |

**Claims**

1. A pesticidal composition comprising:

    (A) F1;

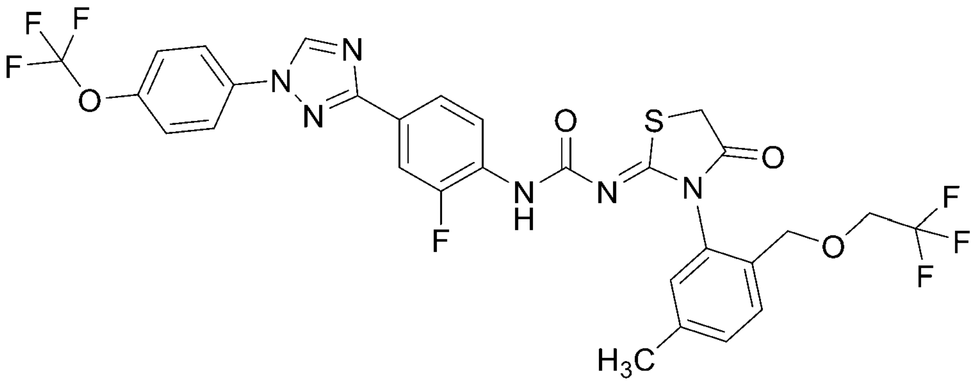

**F1**

**B)** a mixing partner which is methoxyfenozide.

2. The pesticidal composition according to claim 1, wherein the ratio of F1 to the mixing partner B) is selected from 1:160,000 to 160,000:1, 1:80,000 to 80,000:1, 1:40,000 to 40,000:1, 1:20,000 to 20,000:1, 1:10,000 to 10,000:1, 1:8000 to 8000:1, 1:5000 to 5000:1, 1:2000 to 2000:1, 1:1000 to 1000:1, 1:500 to 500:1, 1:250 to 250:1, 1:100 to 100:1; 1:50 to 50:1, 1:25 to 25:1, 1:10 to 10:1, 1:5 to 5:1, and 1:1.

3. A method of controlling pests that attack plants, plant propagation parts, plant habitats comprising step of contacting plants, plant propagation parts, plant habitats with a composition as claimed in claims 1-2.

4. A method of controlling pests that attack plants, plant propagation parts, plant habitats comprising the step of contacting the pests or their habitats, food supply, breeding grounds, their locus with a composition as claimed in claims 1-2.

5. A method of treating a seed, comprising step of contacting the seed with a composition as claimed in claims 1-2.

6. A seed treated with a composition as claimed in claims 1-2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021011722 A1
- WO 2014160031 A
- WO 2013009791 A

### Non-patent literature cited in the description


- **PIMENTAL, D.** Pest Control in World Agriculture. *Agricultural Sciences*, 2009, vol. II
- **NICOL et al.** Current Nematode Threats to World Agriculture. *Genomic and Molecular Genetics of Plant - Nematode Interactions*, 2011, 21-43
- Molluscicides. **SPEISER, B.** Encyclopedia of Pest Management. 2002, vol. 219, 506-508
- **KORB, J.** Termites. *Current Biology*, 2007, vol. 17 (23)
- The Cost of New Agrochemical Product Discovery, Development and Registration. *Phillips McDougall*, 1995, vol. 2000
- **W. S. ABBOTT**. *J. Econ. Entomol.*, 1925, vol. 18, 265-267
- **COLBY S. R.** *Weeds*, 1967, vol. 15, 20-22